(19) Europäisches Patentamt
European Patent Office
Office européen des brevets

(11) EP 4 068 756 A1

(12) **EUROPEAN PATENT APPLICATION**
published in accordance with Art. 153(4) EPC

(43) Date of publication:
**05.10.2022 Bulletin 2022/40**

(21) Application number: **20901441.4**

(22) Date of filing: **07.12.2020**

(51) International Patent Classification (IPC):
**H04N 5/232** (2006.01)    **G03B 15/00** (2021.01)
**G03B 17/18** (2021.01)    **G03B 19/07** (2021.01)
**H04N 5/225** (2006.01)

(52) Cooperative Patent Classification (CPC):
**G03B 15/00; G03B 17/18; G03B 19/07;
H04N 5/225; H04N 5/232**

(86) International application number:
**PCT/JP2020/045370**

(87) International publication number:
**WO 2021/124942 (24.06.2021 Gazette 2021/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.12.2019 JP 2019230034**

(71) Applicant: **Sony Group Corporation
Tokyo 108-0075 (JP)**

(72) Inventor: **KUSHIDA, Hidenori
Tokyo 108-0075 (JP)**

(74) Representative: **D Young & Co LLP
120 Holborn
London EC1N 2DY (GB)**

(54) **IMAGING DEVICE, INFORMATION PROCESSING METHOD, AND PROGRAM**

(57)    The present disclosure relates to an imaging device, an information processing method, and a program capable of more easily grasping parallax among a plurality of images viewed from different individual-view optical systems.

Any one of a plurality of images viewed from a plurality of individual-view optical systems having optical paths independent from one another is displayed while selectively and dynamically switching among the images. The present disclosure can be applied to, for example, an imaging device, an electronic device, an interchangeable lens or a camera system equipped with a plurality of individual-view lenses, an information processing method, a program, or the like.

*FIG. 5*

**Description**

TECHNICAL FIELD

The present disclosure relates to an imaging device, an information processing method, and a program, and more particularly, to an imaging device, an information processing method, and a program capable of more easily grasping parallax among a plurality of images viewed from different individual-view optical systems.

BACKGROUND ART

Conventionally, in an imaging device or the like that performs imaging using a plurality of individual-view optical systems having optical paths independent from one another, a method of displaying an entire region of a captured image or displaying an individual-view image viewed from an individual-view optical system has been considered (See Patent Document 1, for example).

CITATION LIST

PATENT DOCUMENT

Patent Document 1: International Patent Application Publication No. 2019/065260

SUMMARY OF THE INVENTION

PROBLEMS TO BE SOLVED BY THE INVENTION

However, in the case of the method described in Patent Document 1, it is difficult to intuitively grasp with what degree of parallax the subject is imaged.
The present disclosure has been made in view of such a situation, and an object thereof is to more easily grasp parallax among a plurality of images viewed from different individual-view optical systems.

SOLUTIONS TO PROBLEM

An imaging device according to one aspect of the present technology is an imaging device including a display control unit that causes a display unit to display any one of a plurality of images viewed from a plurality of individual-view optical systems having optical paths independent from one another while selectively and dynamically switching among the images.
An information processing method according to one aspect of the present technology is an information processing method including causing a display unit to display any one of a plurality of images viewed from a plurality of individual-view optical systems having optical paths independent from one another while selectively and dynamically switching among the images.
A program according to one aspect of the present technology is a program for causing a computer to function as a display control unit that causes a display unit to display any one of a plurality of images viewed from a plurality of individual-view optical systems having optical paths independent from one another while selectively and dynamically switching among the images.
In the imaging device, the information processing method, and the program according to one aspect of the present technology, any one of a plurality of images viewed from a plurality of individual-view optical systems having optical paths independent from one another is displayed on the display unit while selectively and dynamically switching among the images.

BRIEF DESCRIPTION OF DRAWINGS

Fig. 1 is a perspective view illustrating a configuration example of an embodiment of a camera to which the present technology is applied.
Fig. 2 is a diagram illustrating a configuration example of the embodiment of the camera to which the present technology is applied.
Fig. 3 is a block diagram illustrating an exemplary electrical configuration of the camera.

Fig. 4 is a diagram illustrating an example of a three-plate image sensor.
Fig. 5 is a diagram illustrating an example of an entire image.
Fig. 6 is a diagram illustrating an example of an individual-view image.
Fig. 7 is a diagram illustrating an example of a composite image.
Fig. 8 is a diagram for describing an example of a positional relationship between the camera and a subject.
Fig. 9 is a diagram illustrating an example of an individual-view clipped image in an entire image.
Fig. 10 is a diagram for describing an example of a display order of individual-view clipped images.
Fig. 11 is a diagram for describing an example of a displayed image.
Fig. 12 is a diagram for describing an example of shifting.
Fig. 13 is a diagram illustrating an example of individual-view clipped images in an entire image.
Fig. 14 is a diagram for describing an example of a displayed image.
Fig. 15 is a diagram for describing an example of a display order of individual-view clipped images.
Fig. 16 is a diagram for describing an example of a display order of individual-view clipped images.
Fig. 17 is a diagram for describing an example of a display order of individual-view clipped images.
Fig. 18 is a block diagram illustrating a main configuration example of a display image generation unit.
Fig. 19 is a flowchart for describing an example of a flow of imaging processing.
Fig. 20 is a flowchart for describing an example of a flow of display image display processing.
Fig. 21 is a flowchart for describing an example of a flow of display view selection processing.
Fig. 22 is a diagram for describing an example of a displayed image.
Fig. 23 is a diagram for describing an example of a displayed image.
Fig. 24 is a perspective view illustrating a configuration example of an embodiment of a camera to which the present technology is applied.
Fig. 25 is a block diagram illustrating an exemplary electrical configuration of a camera system.
Fig. 26 is a block diagram illustrating an exemplary electrical configuration of a camera.
Fig. 27 is a block diagram illustrating a main configuration example of a display image generation unit.
Fig. 28 is a flowchart for describing an example of a flow of display image display processing.
Fig. 29 is a block diagram illustrating a main configuration example of a display image generation unit.
Fig. 30 is a flowchart for describing an example of a flow of display image display processing.
Fig. 31 is a block diagram illustrating a main configuration example of a computer.

MODE FOR CARRYING OUT THE INVENTION

Hereinafter, modes for carrying out the present disclosure (hereinafter referred to as embodiments) will be described. Note that the description will be given in the following order.

1. First embodiment (camera)
2. Second embodiment (camera system)
3. Third embodiment (camera)
4. Appendix

<1. First embodiment>

<Appearance of camera>

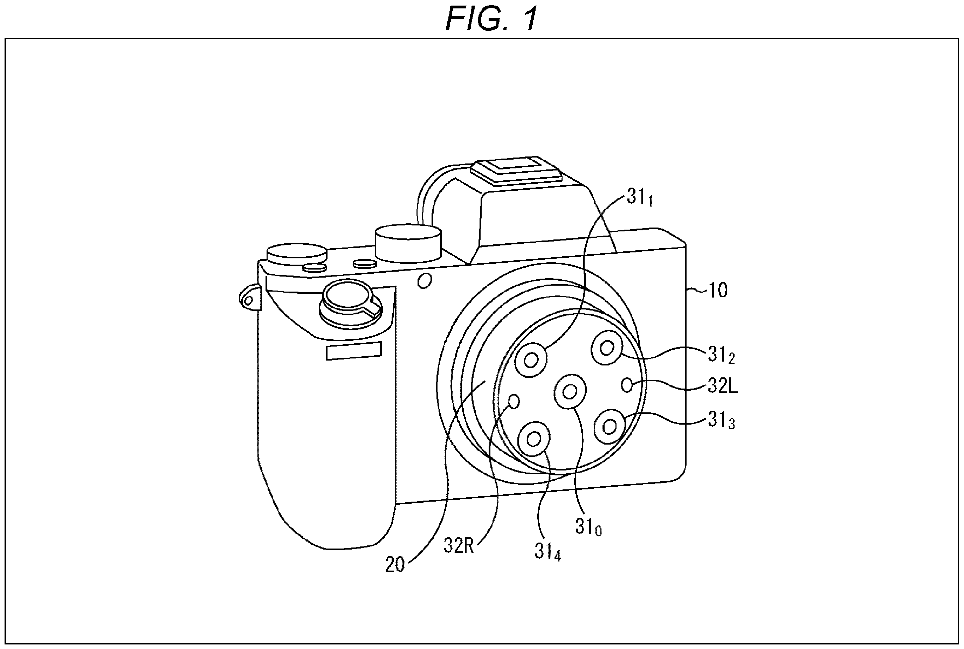

Fig. 1 is a perspective view illustrating a configuration example of an embodiment of a camera to which the present technology is applied.

A camera 10 incorporates an image sensor, receives a light beam condensed by a lens, and performs photoelectric conversion to image a subject. Hereinafter, an image obtained by such imaging is also referred to as a captured image.

The camera 10 is provided with a lens barrel 20 on the front side (side on which light is incident) of the image sensor, and the lens barrel 20 includes a plurality of, such as five, individual-view optical systems $31_0$, $31_1$, $31_2$, $31_3$, and $31_4$. Hereinafter, the individual-view optical systems $31_0$ to $31_4$ will be referred to as an individual-view optical system 31 (or individual-view optical system $31_i$) in a case where it is not necessary to distinguish among the individual-view optical systems for explanation.

The plurality of individual-view optical systems 31 is configured such that optical paths of light passing through the systems are independent from one another. That is, light having passed through the individual-view optical systems 31 of the lens barrel 20 is emitted on different positions on a light receiving surface (e.g., effective pixel region) of the image sensor without being incident on other individual-view optical systems 31. At least the optical axes of the individual-view optical systems 31 are located at different positions on the light receiving surface of the image sensor, and at least a part of the light having passed through the individual-view optical systems 31 is emitted on different positions on the light receiving surface of the image sensor.

Accordingly, in a captured image (entire image output by image sensor) generated by the image sensor, images of the subject formed through the individual-view optical systems 31 are formed at different positions. In other words, from the captured image, captured images (also referred to as viewpoint images) viewed from the individual-view optical systems 31 are obtained. That is, the camera 10 can obtain a plurality of viewpoint images by imaging the subject. The plurality of viewpoint images can be used, for example, for processing such as generation of depth information and refocusing using the depth information.

Note that while an example in which the camera 10 includes five individual-view optical systems 31 will be described in the following description, the number of the individual-view optical systems 31 is arbitrary as long as it is two or more.

The five individual-view optical systems 31 are provided such that on a two-dimensional plane orthogonal to the optical axis of the lens barrel 20 (parallel to light receiving surface (imaging surface) of image sensor), the individual-view optical system $31_0$ as the center (center of gravity) is surrounded by the other four individual-view optical systems $31_1$ to $31_4$ arranged so as to form vertices of a rectangle. It goes without saying that the arrangement illustrated in Fig. 1 is an example, and the positional relationship of the individual-view optical systems 31 is arbitrary as long as the optical paths are independent from one another.

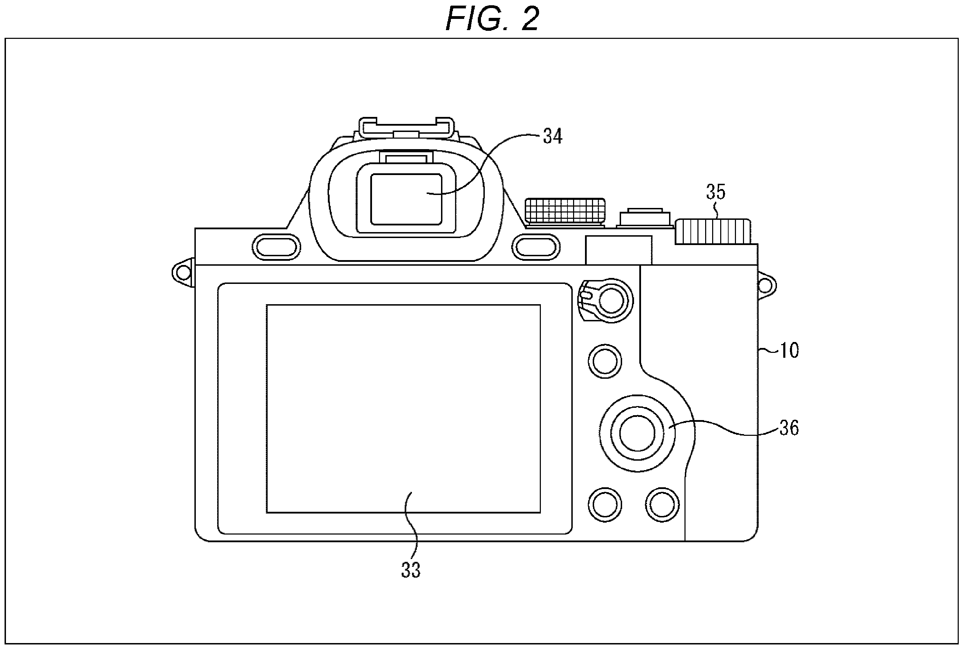

Additionally, regarding the camera 10, a surface on the side on which light from a subject is incident is defined as a front surface. Fig. 2 is a diagram of the camera 10 as viewed from the back side. As illustrated in Fig. 2, a display panel unit 33, a viewfinder unit 34, a dial 35, and a button 36 are provided on the back side of a casing of the camera 10.

The display panel unit 33 and the viewfinder unit 34 include, for example, a display device such as a liquid crystal display or an organic electro luminescence display (OELD), and can display a through-the-lens image before imaging or display a captured image for confirmation after imaging. The dial 35 and the button 36 are examples of input devices, and a user operation can be accepted when the user operates the dial 35 and the button 36.

<Exemplary electrical configuration of camera>

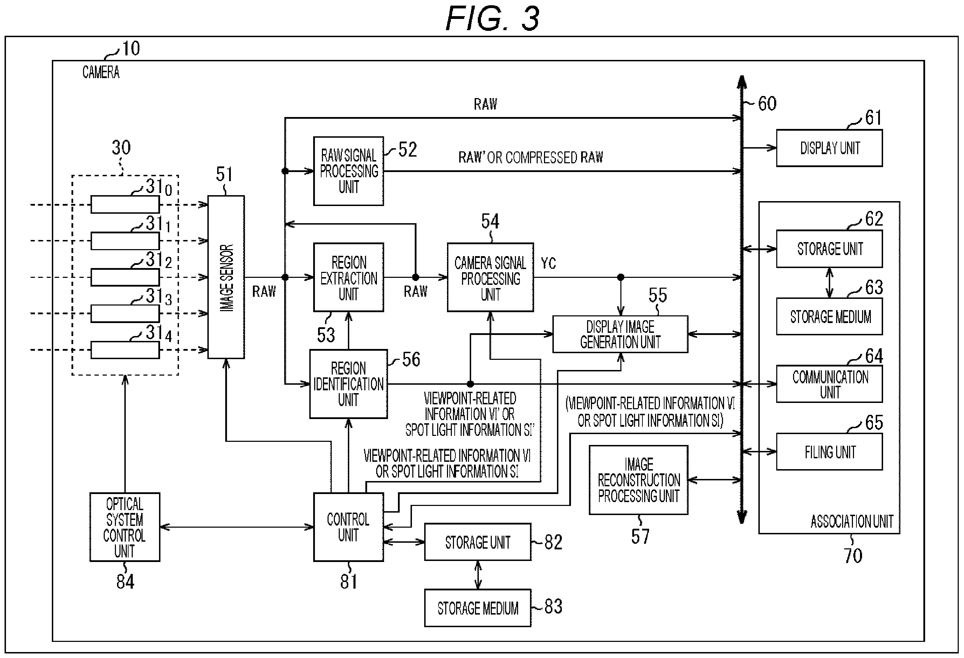

Fig. 3 is a block diagram illustrating an exemplary electrical configuration of the camera 10. The camera 10 includes a multi-view optical system 30, an image sensor 51, a RAW signal processing unit 52, a region extraction unit 53, a camera signal processing unit 54, a display image generation unit 55, a region identification unit 56, an image reconstruction processing unit 57, a bus 60, a display unit 61, a storage unit 62, a communication unit 64, a filing unit 65, a control unit 81, a storage unit 82, and an optical system control unit 84.

<Multi-view optical system>

The multi-view optical system 30 includes the above-described individual-view optical system 31 (e.g., individual-view optical systems $31_0$ to $31_4$). The individual-view optical systems 31 of the multi-view optical system 30 condense light beams from the subject on the image sensor 51 of the camera 10. Assume that specifications of the individual-view optical systems 31 are the same.

The individual-view optical system 31 includes, for example, a plurality of lenses arranged in the optical axis direction of the lens barrel optical axis, and an optical system element such as a diaphragm which is a mechanism for adjusting the amount (F value) of light incident on the image sensor 51 through the plurality of lenses by controlling the opening degree of a shielding object. Note that the individual-view optical system 31 may control the zoom range by controlling the position of the lens.

<Image sensor>

The image sensor 51 is, for example, a complementary metal oxide semiconductor (CMOS) image sensor, and images a subject to generate a captured image. The light receiving surface of the image sensor 51 is irradiated with light beams condensed by the individual-view optical systems $31_0$ to $31_4$. In a captured image, an image corresponding to a region to which irradiation light emitted to the image sensor 51 through one individual-view optical system 31 is input is also referred to as an individual-view image. That is, the image sensor 51 receives these light beams (irradiation light) and performs photoelectric conversion, thereby generating a captured image including the individual-view images viewed from the individual-view optical systems 31.

Note that the optical axes of the individual-view optical systems 31 correspond to different positions on the image sensor 51. Accordingly, in a captured image (or acquired image) generated by the image sensor 51, individual-view images are generated in at least partially different positions (there is never a case where all the individual-view images are generated in completely the same position). Additionally, an individual-view image has, in its periphery, a part that is not effective as an image. Additionally, a captured image (i.e., entire captured image generated by image sensor 51 or image obtained by deleting, from captured image, part or all of region outside all individual-view images included in captured image) including all the individual-view images is also referred to as an entire image.

Note that the image sensor 51 may be a singlecolored (so-called monochrome) image sensor, or may be a color image sensor in which color filters in a Bayer array are arranged in a pixel group, for example. That is, a captured image output by the image sensor 51 may be a monochrome image or a color image. In the following description, assume that the image sensor 51 is a color image sensor and generates and outputs a captured image in RAW format.

Note that in the present embodiment, the RAW format refers to an image in a state where the positional relationship of the arrangement of the color filter of the image sensor 51 is maintained, and may include an image obtained by performing signal processing such as image size conversion processing, noise reduction processing, defect correction processing of the image sensor 51, or compression coding on an image output from the image sensor 51. Additionally, a captured image in RAW format does not include a monochrome image.

The image sensor 51 can output a captured image (entire image) in RAW format generated by photoelectrically converting irradiation light. For example, the image sensor 51 can supply the captured image (entire image) in RAW format to at least one of the bus 60, the RAW signal processing unit 52, the region extraction unit 53, and the region identification unit 56.

For example, the image sensor 51 can supply the captured image (entire image) in RAW format to the storage unit 62 through the bus 60 and cause the storage unit 62 to store the captured image in a storage medium 63. Additionally, the image sensor 51 can supply the captured image (entire image) in RAW format to the communication unit 64 through the bus 60 and cause the communication unit 64 to transmit the captured image to the outside of the camera 10. Moreover, the image sensor 51 can supply the captured image (entire image) in RAW format to the filing unit 65 through the bus 60 and cause the filing unit 65 to file the captured image. Additionally, the image sensor 51 can supply the captured image (entire image) in RAW format to the image reconstruction processing unit 57 through the bus 60 and cause the image reconstruction processing unit 57 to perform image reconstruction processing.

Note that the image sensor 51 may be a single-plate image sensor, or may be a set of image sensors (also referred to as multi-plate image sensor) including a plurality of image sensors, such as a three-plate image sensor.

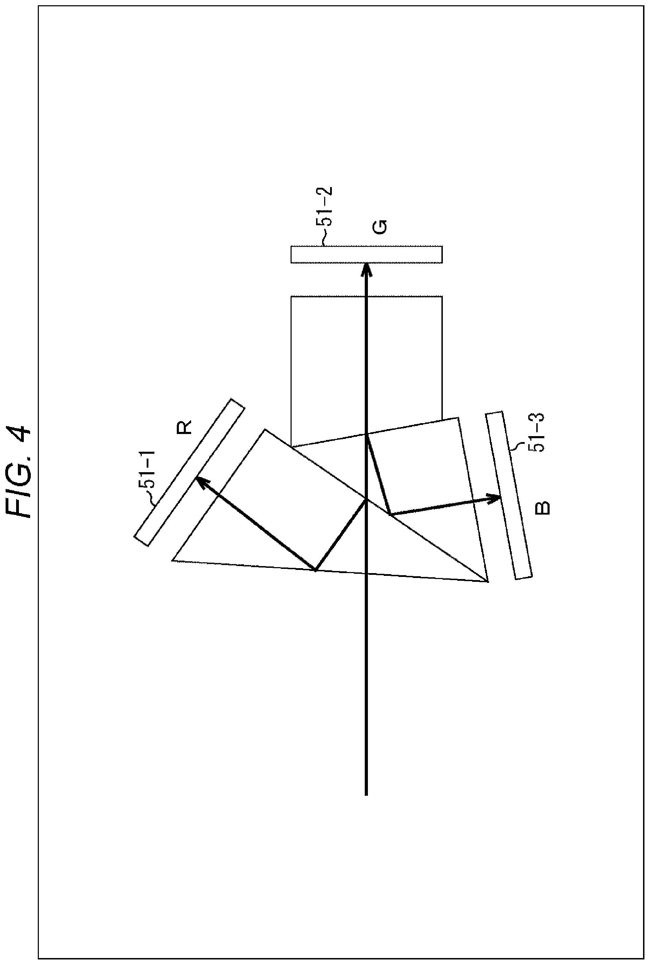

For example, as a three-plate image sensor, there is an image sensor including three image sensors (image sensor 51-1 to image sensor 51-3) for red, green, and blue (RGB) as illustrated in Fig. 4. In this case, the light beam from the subject is separated for each wavelength region using an optical system (optical path separation unit) such as a prism, and is incident on each image sensor. The image sensors 51-1 to 51-3 each photoelectrically convert the incident light. That is, the image sensors 51-1 to 51-3 photoelectrically convert light in different wavelength regions at substantially the same timing. Accordingly, in the case of the multi-plate image sensor, the image sensors obtain captured images (i.e., images having substantially the same pattern only with different wavelength ranges) captured at substantially the same time and substantially the same angle of view. Accordingly, the positions and sizes of viewpoint image regions (described later) in the captured images obtained by the image sensors are substantially the same. In this case, a combination of an R image, a G image, and a B image can be regarded as a captured image in RAW format.

Note that in the case of the multi-plate image sensor, each image sensor is not limited to that for each of RGB, and may be all monochrome, or may be all provided with a color filter such as a Bayer array. Note that in the case where all the image sensors are provided with a color filter such as a Bayer array, if all the arrays are the same and the positional relationships of the pixels are matched, for example, noise reduction can be performed, and if the positional relationships of the RGB image sensors are shifted, it is also possible to improve the image quality by using the effect of the spatial pixel offset.

Even in the case of such a multi-plate imaging device, a plurality of individual-view images and a plurality of viewpoint images are included in a captured image output from the image sensors, that is, one image sensor.

<RAW signal processing unit>

The RAW signal processing unit 52 performs processing related to signal processing on an image in RAW format. For example, the RAW signal processing unit 52 can acquire a captured image (entire image) in RAW format supplied from the image sensor 51. Additionally, the RAW signal processing unit 52 can perform predetermined signal processing on the acquired captured image. The content of the signal processing is arbitrary. For example, the signal processing may be defect correction, noise reduction, compression (coding), or the like, or other signal processing. It goes without saying that the RAW signal processing unit 52 can also perform a plurality of types of signal processing on a captured image. Note that the various types of signal processing on the RAW format image are limited to those in which the image after the signal processing is an image in a state where, as described above, the positional relationship of the arrangement of the color filter of the image sensor 51 is maintained (in the case of a multi-plate imaging device, an image in the state of the R image, the G image, and the B image).

The RAW signal processing unit 52 can supply a captured image (RAW') in RAW format subjected to signal processing or a compressed (coded) captured image (compressed RAW) to the storage unit 62 through the bus 60 and cause the storage unit 62 to store the captured image in the storage medium 63. Additionally, the RAW signal processing unit 52 can supply a captured image (RAW') in RAW format subjected to signal processing or a compressed (coded) captured image (compressed RAW) to the communication unit 64 through the bus 60 and cause the communication unit 64 to transmit the captured image. Moreover, the RAW signal processing unit 52 can supply a captured image (RAW') in RAW format subjected to signal processing or a compressed (coded) captured image (compressed RAW) to the filing unit 65 through the bus 60 and cause the filing unit 65 to file the captured image. Additionally, the RAW signal processing unit 52 can supply a captured image (RAW') in RAW format subjected to signal processing or a compressed (coded) captured image (compressed RAW) to the image reconstruction processing unit 57 through the bus 60 and cause the image reconstruction processing unit 57 to perform image reconstruction processing. Note that the RAW, RAW', and compressed RAW (all in Fig. 3) will be referred to as a RAW image in a case where it is not necessary to distinguish among the images for explanation.

<Region extraction unit>

The region extraction unit 53 performs processing related to extraction of a partial region (clipping of partial image) from a captured image in RAW format. For example, the region extraction unit 53 can acquire a captured image (entire image) in RAW format supplied from the image sensor 51. Additionally, the region extraction unit 53 can acquire information (also referred to as extraction region information) indicating a region to be extracted from a captured image supplied from the region identification unit 56. Then, the region extraction unit 53 can extract a partial region (clip a partial image) from the captured image on the basis of the extraction region information.

For example, the region extraction unit 53 can clip an image viewed from the individual-view optical system 31 from the captured image (entire image). That is, the region extraction unit 53 can clip an effective part from a region of each of individual-view images included in the captured image as an image viewed from each of the individual-view optical systems 31. The clipped image of the effective part (part of individual-view image) is also referred to as a viewpoint image. Additionally, the clipped region (region corresponding to viewpoint image) in the captured image is also referred to as a viewpoint image region. For example, the region extraction unit 53 can acquire, as extraction region information, viewpoint-related information that is supplied from the region identification unit 56 and is used to identify the viewpoint image region, and extract each viewpoint image region (clip each viewpoint image) indicated in the viewpoint-related information from the captured image. Then, the region extraction unit 53 can supply the clipped viewpoint images (RAW format) to the camera signal processing unit 54.

Additionally, for example, the region extraction unit 53 can combine the viewpoint images clipped from the captured image (entire image) to generate a composite image. A composite image is obtained by combining the viewpoint images into one piece of data or one image. For example, the region extraction unit 53 can generate one image (composite image) in which the viewpoint images are arranged in a planar manner. The region extraction unit 53 can supply the generated composite image (RAW format) to the camera signal processing unit 54.

Additionally, for example, the region extraction unit 53 can supply an entire image to the camera signal processing unit 54. For example, the region extraction unit 53 can extract a partial region including all individual-view images from an acquired captured image (i.e., clip partial image including all individual-view images), and supply the clipped partial image (i.e., image obtained by deleting part or all of region outside all individual-view images included in captured image) to the camera signal processing unit 54 as an entire image in RAW format. The location (range) of the region to be extracted in this case may be determined in advance in the region extraction unit 53, or may be designated by the viewpoint-related information supplied from the region identification unit 56.

Additionally, the region extraction unit 53 can also supply the acquired captured image (i.e., not the clipped partial image including all the individual-view images but the entire captured image) to the camera signal processing unit 54 as an entire image in RAW format.

Note that the region extraction unit 53 can supply a partial image (entire image, viewpoint image, or composite image) in RAW format clipped from the captured image as described above to the storage unit 62, the communication unit 64, the filing unit 65, the image reconstruction processing unit 57, or the like through the bus 60, similarly to the case of the image sensor 51.

Additionally, the region extraction unit 53 can supply the partial image (entire image, viewpoint image, or composite image) in RAW format to the RAW signal processing unit 52, and cause the RAW signal processing unit 52 to perform predetermined signal processing or compression (coding) on the partial image. In this case, too, the RAW signal processing unit 52 can supply a captured image (RAW'') in RAW format subjected to signal processing or a compressed (coded) captured image (compressed RAW) to the storage unit 62, the communication unit 64, the filing unit 65, the image reconstruction processing unit 57, or the like through the bus 60.

That is, at least one of the captured image (or entire image), the viewpoint image, or the composite image may be a RAW image.

<Camera signal processing unit>

The camera signal processing unit 54 performs processing related to camera signal processing on an image. For example, the camera signal processing unit 54 can acquire an image (entire image, viewpoint image, or composite image) supplied from the region extraction unit 53. Additionally, the camera signal processing unit 54 can perform camera signal processing (camera process) on the acquired image. For example, the camera signal processing unit 54 can perform, on an image to be processed, color separation processing of separating each of RGB to generate an R image, a G image, and a B image each having the same number of pixels as the image to be processed (demosaic processing when using mosaic color filter such as Bayer array), YC conversion processing of converting the color space of the image after the color separation from RGB to YC (luminance and color difference), and the like. Additionally, the camera signal processing unit 54 can perform processing such as defect correction, noise reduction, automatic white balance (AWB), or gamma correction on the image to be processed. Moreover, the camera signal processing unit 54 can also compress (code) an image to be processed. It goes without saying that the camera signal processing unit 54 can perform a plurality of types of camera signal processing on the image to be processed, and can also perform camera signal processing other than the above-described example.

Note that in the following description, assume that the camera signal processing unit 54 acquires an image in RAW format, performs color separation processing and YC conversion on the image, and outputs an image (YC) in YC format. This image may be an entire image, each viewpoint image, or a composite image. Additionally, the image (YC) in YC format may be coded or not coded. That is, data output from the camera signal processing unit 54 may be coded data or image data not coded.

That is, at least one of a captured image (or entire image), a viewpoint image, or a composite image may be the image in YC format (also referred to as YC image).

Additionally, as an image (YC) in YC format, an image output by the camera signal processing unit 54 may be subjected not to complete development processing, but to processing in which part or all of processing related to irreversible image quality adjustment (color adjustment) such as gamma correction or a color matrix is omitted. In this case, the image (YC) in YC format can be returned to the image in RAW format substantially without deterioration in the subsequent stage, reproduction, or the like.

For example, the camera signal processing unit 54 can supply the image (YC) in YC format subjected to the camera signal processing to the display unit 61 through the bus 60 and cause the display unit 61 to display the image. Additionally, the camera signal processing unit 54 can supply the image (YC) in YC format subjected to the camera signal processing to the storage unit 62 through the bus 60 and cause the storage unit 62 to store the image (YC) in the storage medium 63. Moreover, the camera signal processing unit 54 can supply the image (YC) in YC format subjected to the camera signal processing to the communication unit 64 through the bus 60 and cause the communication unit 64 to transmit the image to the outside. Additionally, the camera signal processing unit 54 can supply the image (YC) in YC format subjected to the camera signal processing to the filing unit 65 through the bus 60 and cause the filing unit 65 to file the image. Moreover, the camera signal processing unit 54 can supply the image (YC) in YC format subjected to the camera signal processing to the image reconstruction processing unit 57 through the bus 60 and cause the image reconstruction processing unit 57 to perform image reconstruction processing.

Additionally, for example, the camera signal processing unit 54 can also supply the image (YC) in YC format to the display image generation unit 55.

Note that in a case where an image (entire image, viewpoint image, or partial image) in RAW format is stored in the storage medium 63, the camera signal processing unit 54 may be able to read the image in RAW format from the storage medium 63 and perform signal processing. In this case, too, the camera signal processing unit 54 can supply the image (YC) in YC format subjected to the camera signal processing to the display unit 61, the storage unit 62, the communication unit 64, the filing unit 65, the image reconstruction processing unit 57, or the like through the bus 60.

Additionally, the camera signal processing unit 54 may perform camera signal processing on a captured image (entire image) in RAW format output from the image sensor 51, and the region extraction unit 53 may extract a partial region from the captured image (entire image) after the camera signal processing.

<Display image generation unit>

The display image generation unit 55 performs processing related to generation of a display image to be displayed on the display unit 61. For example, the display image generation unit 55 can generate a through-the-lens image. A through-the-lens image is an image displayed for the user to confirm an image that is being captured at the time of imaging or at the time of imaging preparation (at the time of non-recording). That is, a through-the-lens image is generated using a display image (also referred to as acquired image) generated by the image sensor 51. Note that a through-the-lens image is also referred to as a live view image or an electronic to electronic (EE) image. Note that while an image before capturing is displayed at the time of still image capturing, at the time of moving image capturing, a through-the-lens image corresponding to an image being captured (recorded) is displayed as well as an image during preparation of capturing.

An acquired image is an image other than the captured image generated by the image sensor 51. That is, an acquired image can be generated at a timing other than the timing at which the captured image is generated. Additionally, similarly to the captured image, an acquired image is an image generated by photoelectrically converting light received by the image sensor 51. Note, however, that the use of an acquired image is different from the use of a captured image. While a captured image is an image for recording (storage), an acquired image is an image to be displayed as a through-the-lens image or the like by the display unit 61 (display panel unit 33 or viewfinder unit 34). Moreover, a captured image is a still image (or moving image), whereas an acquired image (through-the-lens image) is basically displayed as a moving image (image including a plurality of frames). Note that the specification (e.g., resolution, aspect ratio, color, and the like) of an acquired image is arbitrary, and may be the same as or different from the captured image. For example, an acquired image may have a lower resolution than a captured image.

As in the case of a captured image, a part of the acquired image can be extracted by the region extraction unit 53, or the acquired image can be subjected to camera signal processing by the camera signal processing unit 54. That is, as in the case of a captured image, the captured image can be supplied to the display image generation unit 55 as, for example, an image (entire image, viewpoint image, or composite image) in YC format.

In this case, the display image generation unit 55 can acquire the acquired image (e.g., entire image, viewpoint image, or composite image) supplied from the camera signal processing unit 54. Additionally, the display image generation unit 55 can generate a display image by performing image size (resolution) conversion of converting into an image size according to the resolution of the display unit 61, for example, using the obtained acquired image. Moreover, the display image generation unit 55 can supply the generated display image to the display unit 61 through the bus 60 and cause the display unit 61 to display the display image as a through-the-lens image. Note that the specification of the display image is arbitrary, and may be the same as or different from the captured image.

Additionally, for example, the display image generation unit 55 can also generate a confirmation image of the captured image. For example, when the user instructs imaging by pressing a shutter button or the like, the camera 10 images a subject using the image sensor 51 or the like and generates a captured image for recording (storage). At that time, in order to cause the user to confirm the generated captured image (i.e., imaging result), the camera 10 generates a confirmation image (i.e., display image) using the captured image and causes the display unit 61 (display panel unit 33 or viewfinder unit 34) to display the confirmation image. The display image generation unit 55 can generate the confirmation image.

That is, in this case, the display image generation unit 55 can acquire the captured image (e.g., entire image, viewpoint image, or composite image) supplied from the camera signal processing unit 54, for example. Additionally, the display image generation unit 55 can generate a display image using the acquired captured image. Moreover, the display image generation unit 55 can supply the generated display image to the display unit 61 through the bus 60 and cause the display unit 61 to display the display image as a confirmation image. Note that the specification of the confirmation image is arbitrary as in the case of the display image described above.

Moreover, for example, the display image generation unit 55 can also generate a display image of a recorded (stored) captured image. For example, the camera 10 can cause the display unit 61 to display a captured image read from the storage medium 63 or acquired from another device through the communication unit 64. The display image generation unit 55 can generate a display image of the captured image.

That is, in this case, the display image generation unit 55 can acquire a captured image read from the storage medium 63 by the storage unit 62 or a captured image (e.g., entire image, viewpoint image, or composite image) acquired from another device through the communication unit 64. Additionally, the display image generation unit 55 can generate a display image using the acquired captured image. Moreover, the display image generation unit 55 can supply the generated display image to the display unit 61 through the bus 60 and cause the display unit 61 to display the display image. Note that the specification of the display image is arbitrary.

Note that the display image generation unit 55 can acquire viewpoint-related information (VI or VI') supplied from the region identification unit 56, and use the acquired viewpoint-related information to generate these display images. Additionally, the display image generation unit 55 can acquire control information supplied from the control unit 81 and use the control information to generate these display images.

<Region identification unit>

The region identification unit 56 performs processing related to identification (setting) of a region extracted from a captured image by the region extraction unit 53. For example, the region identification unit 56 identifies the viewpoint-related information (VI) and supplies the viewpoint image region to the region extraction unit 53.

Viewpoint-related information (VI) includes, for example, viewpoint region information indicating a viewpoint image region in the captured image. Viewpoint region information may represent the viewpoint image region in any manner. For example, a viewpoint image region may be represented by coordinates (also referred to as center coordinates of viewpoint image region) indicating a position corresponding to the optical axis of the individual-view optical system 31 in a captured image and the resolution (number of pixels) of a viewpoint image (viewpoint image region). That is, viewpoint region information may include the center coordinates of a viewpoint image region in a captured image and the resolution of a viewpoint image region. In this case, the location of the viewpoint image region in the entire image can be identified from the center coordinates of the viewpoint image region and the resolution (number of pixels) of the viewpoint image region.

Note that viewpoint region information is set for each viewpoint image region. That is, in a case where a captured image includes a plurality of viewpoint images, viewpoint-related information (VI) may include, for each viewpoint image (each viewpoint image region), viewpoint identification information (e.g., identification number) for identifying the viewpoint image (region) and viewpoint region information.

Additionally, viewpoint-related information (VI) may include other arbitrary information. For example, the viewpoint-related information (VI) may include viewpoint time information indicating the time when the captured image from which the viewpoint image is extracted is captured. Additionally, viewpoint-related information (VI) may include viewpoint image including region information indicating a viewpoint image including region that is a region clipped from an individual-view image and includes a viewpoint image region. Moreover, viewpoint-related information (VI) may include spot light information (SI) that is information regarding an image of spot light formed in a region that is neither a viewpoint image region nor a region of an individual-view image of a captured image.

The region identification unit 56 supplies such viewpoint-related information (VI) to the region extraction unit 53 as information indicating an identified viewpoint image region, whereby the region extraction unit 53 can extract the viewpoint image region identified by the region identification unit 56 (clip viewpoint image) on the basis of the viewpoint-related information (VI).

Additionally, the region identification unit 56 can supply viewpoint-related information (VI) to the bus 60. For example, the region identification unit 56 can supply viewpoint-related information (VI) to the storage unit 62 through the bus 60 and cause the storage medium 63 to store the viewpoint-related information (VI). Additionally, the region identification unit 56 can supply viewpoint-related information (VI) to the communication unit 64 through the bus 60 and cause the communication unit 64 to transmit the viewpoint-related information (VI). Moreover, the region identification unit 56 can supply viewpoint-related information (VI) to the filing unit 65 through the bus 60 and cause the filing unit 65 to file the viewpoint-related information (VI). Additionally, the region identification unit 56 can supply viewpoint-related information (VI) to the image reconstruction processing unit 57 through the bus 60 and cause the image reconstruction processing unit 57 to use the viewpoint-related information (VI) in image reconstruction processing.

For example, the region identification unit 56 may acquire such viewpoint-related information (VI) from the control unit 81 and supply the acquired viewpoint-related information (VI) to the region extraction unit 53 and the bus 60. In this case, the control unit 81 reads the viewpoint-related information (VI) stored in a storage medium 83 through the storage unit 82, and supplies the viewpoint-related information (VI) to the region identification unit 56. The region identification unit 56 supplies the viewpoint-related information (VI) to the region extraction unit 53 and the bus 60. Note that the viewpoint-related information (VI) may include spot light information (SI).

The viewpoint-related information (VI) supplied to the storage unit 62, the communication unit 64, or the filing unit 65 through the bus 60 in this manner is associated with an image (entire image, viewpoint image, or composite image). For example, the storage unit 62 can associate the supplied viewpoint-related information (VI) with an image (entire image, viewpoint image, or composite image) and store the associated image in the storage medium 63. Additionally, the communication unit 64 can associate the supplied viewpoint-related information (VI) with an image (entire image, viewpoint image, or composite image) and transmit the associated image to the outside. Moreover, the filing unit 65 can associate the supplied viewpoint-related information (VI) with an image (entire image, viewpoint image, or composite image) and generate one file including the image and the viewpoint-related information (VI).

Additionally, the region identification unit 56 may acquire a captured image in RAW format supplied from the image sensor 51, generate viewpoint-related information (VI') on the basis of the captured image, and supply the generated viewpoint-related information (VI') to the region extraction unit 53 and the bus 60. In this case, the region identification unit 56 identifies each viewpoint image region from the captured image, and generates viewpoint-related information (VI') indicating the viewpoint image region (e.g., viewpoint image region is indicated by center coordinates of viewpoint image region in captured image, resolution of viewpoint image region, and the like). Then, the region identification unit 56 supplies the generated viewpoint-related information (VI') to the region extraction unit 53 and the bus 60. Note that the viewpoint-related information (VI') may include spot light information (SI') generated by the region identification unit 56 on the basis of the captured image.

Moreover, the region identification unit 56 may acquire viewpoint-related information (VI) from the control unit 81, acquire a captured image in RAW format supplied from the image sensor 51, generate spot light information (SI') on the basis of the captured image, add the spot light information (SI') to the viewpoint-related information (VI), and supply the viewpoint-related information (VI) to the region extraction unit 53 and the bus 60. In this case, the control unit 81 reads the viewpoint-related information (VI) stored in a storage medium 83 through the storage unit 82, and supplies the viewpoint-related information (VI) to the region identification unit 56. The region identification unit 56 generates viewpoint-related information (VI') by adding the spot light information (SI') to the viewpoint-related information (VI). The region identification unit 56 supplies the viewpoint-related information (VI') to the region extraction unit 53 and the bus 60.

Additionally, the region identification unit 56 may acquire viewpoint-related information (VI) from the control unit 81, acquire a captured image in RAW format supplied from the image sensor 51, generate spot light information (SI') on the basis of the captured image, correct the viewpoint-related information (VI) using the spot light information (SI'), and supply the corrected viewpoint-related information (VI') to the region extraction unit 53 and the bus 60. In this case, the control unit 81 reads the viewpoint-related information (VI) stored in a storage medium 83 through the storage unit 82, and supplies the viewpoint-related information (VI) to the region identification unit 56. The region identification unit 56 corrects the viewpoint-related information (VI) using the spot light information (SI') to generate viewpoint-related information (VI'). The region identification unit 56 supplies the viewpoint-related information (VI') to the region extraction unit 53 and the bus 60.

Note that the region identification unit 56 can also supply the viewpoint-related information (VI or VI') to the display image generation unit 55.

<Image reconstruction processing unit>

The image reconstruction processing unit 57 performs processing related to image reconstruction. For example, the image reconstruction processing unit 57 can acquire an image (entire image, viewpoint image, or composite image) in YC format from the camera signal processing unit 54 or the storage unit 62 through the bus 60. Additionally, the image reconstruction processing unit 57 can acquire viewpoint-related information from the region identification unit 56 or the storage unit 62 through the bus 60.

Moreover, using the acquired image and the viewpoint-related information associated with the acquired image, the image reconstruction processing unit 57 can perform image processing such as generation of depth information and refocusing for generating (reconstructing) an image focused on an arbitrary subject, for example. For example, in a case where a viewpoint image is to be processed, the image reconstruction processing unit 57 uses each viewpoint image to perform processing such as generation of depth information and refocusing. Additionally, in a case where a captured image or a composite image is to be processed, the image reconstruction processing unit 57 extracts each viewpoint image from the captured image or the composite image, and performs processing such as generation of depth information and refocusing by using the extracted viewpoint image.

The image reconstruction processing unit 57 can supply the generated depth information and the refocused image as a processing result to the storage unit 62 through the bus 60 and cause the storage unit 62 to store the processing result in the storage medium 63 outside. Additionally, the image reconstruction processing unit 57 can supply the generated depth information and the refocused image as a processing result to the communication unit 64 through the bus 60 and cause the communication unit 64 to transmit the processing result. Moreover, the image reconstruction processing unit 57 can supply the generated depth information and the refocused image as a processing result to the filing unit 65 through the bus 60 and cause the filing unit 65 to file the processing result.

<Bus>

The image sensor 51, the RAW signal processing unit 52, the region extraction unit 53, the camera signal processing unit 54, the display image generation unit 55, the region identification unit 56, the image reconstruction processing unit 57, the display unit 61, the storage unit 62, the communication unit 64, and the filing unit 65 are connected to the bus 60. The bus 60 functions as a transmission medium (transmission path) of various types of data exchanged among these blocks. Note that the bus 60 may be implemented by wired or wireless communication.

<Display unit>

The display unit 61 includes, for example, a display panel unit 33 and a viewfinder unit 34. The display unit 61 performs processing related to image display. For example, the display unit 61 can acquire a display image of an acquired image in YC format supplied from the display image generation unit 55, convert the display image into RGB format, and display the display image as a through-the-lens image on the display panel unit 33 and the viewfinder unit 34. In addition, the display unit 61 can also display information such as a menu and settings of the camera 10, for example.

Additionally, the display unit 61 can acquire a confirmation image of the captured image supplied from the display image generation unit 55 and display the confirmation image on the display panel unit 33 and the viewfinder unit 34. Moreover, the display unit 61 can acquire a display image of a recorded (stored) captured image supplied from the display image generation unit 55 and display the display image on the display panel unit 33 and the viewfinder unit 34. Note that the display unit 61 may be able to display thumbnail images of captured images.

<Storage unit>

The storage unit 62 controls storage of the storage medium 63 including, for example, a semiconductor memory or the like. The storage medium 63 may be a removable storage medium or a storage medium built in the camera 10.
The storage unit 62 can store an image (captured image, viewpoint image, or composite image) supplied through the bus 60 in the storage medium 63 according to an operation of the control unit 81, a user operation, or the like.
For example, the storage unit 62 can acquire an image (entire image, viewpoint image, or composite image) in RAW format supplied from the image sensor 51 or the region extraction unit 53 and store the image in the storage medium 63. Additionally, the storage unit 62 can acquire an image (entire image, viewpoint image, or composite image) in RAW format subjected to signal processing supplied from the RAW signal processing unit 52 and store the image in the storage medium 63. Moreover, the storage unit 62 can acquire a compressed (coded) image (entire image, viewpoint image, or composite image) in RAW format supplied from the RAW signal processing unit 52 and store the image in the storage medium 63. Additionally, the storage unit 62 can acquire an image (entire image, viewpoint image, or composite image) in YC format supplied from the camera signal processing unit 54 and store the image in the storage medium 63.
At that time, the image (entire image, viewpoint image, or composite image) and viewpoint-related information can be stored in the storage medium 63 in association with each other. For example, the storage unit 62 can acquire viewpoint-related information supplied from the region identification unit 56 and store the viewpoint-related information in the storage medium 63 in association with the above-described image (entire image, viewpoint image, or composite image). That is, the storage unit 62, that is, the storage unit 62 functions as an association unit that associates at least one of the entire image, the viewpoint image, or the composite image with viewpoint-related information.
In addition, the storage unit 62 can acquire depth information and a refocused image supplied from the image reconstruction processing unit 57 and store the acquired information and image in the storage medium 63. Additionally, the storage unit 62 can acquire a file supplied from the filing unit 65 and store the file in the storage medium 63. This file includes an image (entire image, viewpoint image, or composite image) and viewpoint-related information. That is, in this file, the image (entire image, viewpoint image, or composite image) and the viewpoint-related information are associated with each other.
Additionally, the storage unit 62 can read data, files, and the like stored in the storage medium 63 according to an operation of the control unit 81, a user operation, or the like.
For example, the storage unit 62 can read a captured image (entire image, viewpoint image, or composite image) in YC format from the storage medium 63, supply the captured image to the display image generation unit 55, and cause the display image generation unit 55 to generate a display image thereof. Additionally, the storage unit 62 can read an image (entire image, viewpoint image, or composite image) in RAW format from the storage medium 63, supply the image to the camera signal processing unit 54, and cause the camera signal processing unit 54 to perform camera signal processing.
Moreover, the storage unit 62 can also read viewpoint-related information associated with an image (entire image, viewpoint image, or composite image) together with the image. For example, the storage unit 62 can read an image (entire image, viewpoint image, or composite image) and data of viewpoint-related information associated with each other from the storage medium 63, supply them to the image reconstruction processing unit 57, and cause the image reconstruction processing unit 57 to perform processing such as generation of depth information and refocusing. Additionally, the storage unit 62 can read a file including an image (entire image, viewpoint image, or composite image) and viewpoint-related information associated with each other from the storage medium 63, supply the file to the image reconstruction processing unit 57, and cause the image reconstruction processing unit 57 to perform processing such as generation of depth information and refocusing.
Moreover, the storage unit 62 can read an image (entire image, viewpoint image, or composite image) and data and files of viewpoint-related information associated with each other from the storage medium 63, supply the image and the data and files to the communication unit 64, and cause the communication unit 64 to transmit the image and the data and files. Additionally, the storage unit 62 can read an image (entire image, viewpoint image, or composite image) and data of viewpoint-related information associated with each other from the storage medium 63, supply the image and the data to the filing unit 65, and cause the filing unit 65 to file the image and the data.
Note that the storage medium 63 may be a read only memory (ROM) or a rewritable memory such as a random access memory (RAM) or a flash memory. In the case of a rewritable memory, the storage medium 63 can store arbitrary information.

<Communication unit>

The communication unit 64 communicates with a server on the Internet, a PC on a wired or wireless LAN, other external devices, or the like by an arbitrary communication method. The communication unit 64 can transmit an image (captured image, viewpoint image, or composite image) and data and files of viewpoint-related information and the like to a communication partner (external device) by a streaming method, an upload method, or the like through the communication according to control of the control unit 81, a user operation, or the like.

For example, the communication unit 64 can acquire and transmit an image (captured image, viewpoint image, or composite image) in RAW format supplied from the image sensor 51 or the region extraction unit 53. Additionally, the communication unit 64 can acquire and transmit an image (captured image, viewpoint image, or composite image) in RAW format subjected to signal processing or a compressed (coded) image (captured image, viewpoint image, or composite image) supplied from the RAW signal processing unit 52. Moreover, the communication unit 64 can acquire and transmit an image (captured image, viewpoint image, or composite image) in YC format supplied from the camera signal processing unit 54.

At that time, the communication unit 64 can acquire viewpoint-related information supplied from the region identification unit 56 and associate the viewpoint-related information with the above-described image (entire image, viewpoint image, or composite image). That is, the communication unit 64 can transmit the image (entire image, viewpoint image, or composite image) and the viewpoint-related information in association with each other. For example, in a case where an image is transmitted by a streaming method, the communication unit 64 repeats processing of acquiring an image to be transmitted (entire image, viewpoint image, or composite image) from a processing unit that supplies the image, associating viewpoint-related information supplied from the region identification unit 56 with the image, and transmitting the image. That is, the communication unit 64 functions as an association unit that associates at least one of the entire image, the viewpoint image, or the composite image with viewpoint-related information.

Additionally, for example, the communication unit 64 can acquire and transmit depth information and a refocused image supplied from the image reconstruction processing unit 57. Moreover, the communication unit 64 can acquire and transmit a file supplied from the filing unit 65. This file includes, for example, an image (entire image, viewpoint image, or composite image) and viewpoint-related information. That is, in this file, the image (entire image, viewpoint image, or composite image) and the viewpoint-related information are associated with each other.

Note that the communication unit 64 can also acquire an image (entire image, viewpoint image, or composite image) and data and files of viewpoint-related information from a device (communication partner) outside the camera 10.

<Filing unit>

The filing unit 65 performs processing related to file generation. For example, the filing unit 65 can acquire an image (entire image, viewpoint image, or composite image) in RAW format supplied from the image sensor 51 or the region extraction unit 53. Additionally, the filing unit 65 can acquire the image (entire image, viewpoint image, or composite image) in RAW format subjected to signal processing or the compressed (coded) image (entire image, viewpoint image, or composite image) in RAW format supplied from the RAW signal processing unit 52. Moreover, the filing unit 65 can acquire an image (entire image, viewpoint image, or composite image) in YC format supplied from the camera signal processing unit 54. Additionally, for example, the filing unit 65 can acquire viewpoint-related information supplied from the region identification unit 56.

The filing unit 65 can file a plurality of pieces of acquired data and generate one file including the plurality of pieces of data, thereby associating the plurality of pieces of acquired data with each other. For example, the filing unit 65 can generate one file from the image (entire image, viewpoint image, or composite image) and the viewpoint-related information described above to associate the image and the viewpoint-related information with each other. That is, the filing unit 65 functions as an association unit that associates at least one of the entire image, the viewpoint image, or the composite image with viewpoint-related information.

Additionally, for example, the filing unit 65 can acquire and file depth information and a refocused image supplied from the image reconstruction processing unit 57. Moreover, the filing unit 65 can generate one file from an image (entire image, viewpoint image, or composite image) and viewpoint-related information associated with each other supplied from the storage unit 62.

Note that the filing unit 65 can generate thumbnail images of images (e.g., viewpoint images) to be filed and include the thumbnail images in the generated file. That is, by filing the thumbnail image, the filing unit 65 can associate the thumbnail image with an image (entire image, viewpoint image, or composite image) or viewpoint-related information.

The filing unit 65 can supply the generated file (image and viewpoint-related information associated with each other) to the storage unit 62 through the bus 60, for example, and cause the storage unit 62 to store the file in the storage medium 63. Additionally, the filing unit 65 can supply the generated file (image and viewpoint-related information associated with each other) to the communication unit 64 through the bus 60, for example, and cause the communication unit 64 to transmit the file.

<Association unit>

The storage unit 62, the communication unit 64, and the filing unit 65 are also referred to as an association unit 70. The association unit 70 associates an image (entire image, viewpoint image, or composite image) with viewpoint-related information. For example, the storage unit 62 can store at least one of an entire image, a viewpoint image, or a composite image in association with viewpoint-related information in the storage medium 63. Additionally, the communication unit 64 can transmit at least one of an entire image, a viewpoint image, and a composite image in association with viewpoint-related information. Moreover, the filing unit 65 can generate one file from at least one of an entire image, a viewpoint image, or a composite image and viewpoint-related information to associate the image and the viewpoint-related information with each other.

<Control unit>

The control unit 81 performs control processing related to the camera 10. That is, the control unit 81 can cause each unit of the camera 10 to execute processing. For example, the control unit 81 can cause the multi-view optical system 30 (individual-view optical systems 31) through the optical system control unit 84 to perform setting of the optical system related to imaging such as a diaphragm and a focus position. Additionally, the control unit 81 can cause the image sensor 51 to perform imaging (photoelectric conversion) and generate a captured image.
Moreover, the control unit 81 can supply viewpoint-related information (VI) to the region identification unit 56 and cause the region identification unit 56 to identify a region to be extracted from a captured image. Note that the viewpoint-related information (VI) may include spot light information (SI). Additionally, the control unit 81 may read viewpoint-related information (VI) stored in the storage medium 83 through the storage unit 82 and supply the viewpoint-related information (VI) to the region identification unit 56.
Additionally, the control unit 81 may supply control information regarding generation of a display image to the display image generation unit 55. For example, the control unit 81 may accept a user operation through an input device such as the dial 35 or the button 36, generate control information according to the accepted operation, and supply the control information to the display image generation unit 55. Additionally, the control unit 81 may acquire control information read by the storage unit 82 from the storage medium 83 and supply the control information to the display image generation unit 55. Moreover, the control unit 81 may acquire control information read by the storage unit 82 from the storage medium 83, accept a user operation through an input device such as the dial 35 or the button 36, update the control information according to the accepted operation, and supply the control information to the display image generation unit 55.
Additionally, the control unit 81 can acquire an image through the bus 60 and control the diaphragm through the optical system control unit 84 on the basis of the brightness of the image. Moreover, the control unit 81 can control the focus through the optical system control unit 84 on the basis of the sharpness of the image. Additionally, the control unit 81 can control the camera signal processing unit 54 on the basis of the RGB ratio of the image to control the white balance gain.

<Storage unit>

The storage unit 82 controls storage of the storage medium 83 including, for example, a semiconductor memory or the like. The storage medium 83 may be a removable storage medium or a built-in memory. The storage medium 83 stores, for example, viewpoint-related information (VI). The viewpoint-related information (VI) is information corresponding to (each of individual-view optical systems 31 of) the multi-view optical system 30 and the image sensor 51. That is, viewpoint-related information (VI) is information regarding a viewpoint image viewed from each of the individual-view optical systems 31 of the multi-view optical system 30, and is information used to identify the viewpoint image region. For example, the viewpoint-related information (VI) may include spot light information (SI).
For example, the storage unit 82 can read viewpoint-related information (VI) stored in the storage medium 83 in response to a request from the control unit 81, a user operation, or the like, and supply the viewpoint-related information (VI) to the control unit 81.
Note that the storage medium 83 may be a ROM or a rewritable memory such as a RAM or a flash memory. In the case of a rewritable memory, the storage medium 83 can store arbitrary information.
Additionally, the storage medium 83 may store control information regarding generation of a display image, and the storage unit 82 may read the control information in response to a request from the control unit 81, a user operation, or the like, and supply the control information to the control unit 81.
Additionally, the storage unit 82 and the storage medium 83 may be substituted by the storage unit 62 and the storage medium 63. That is, information (viewpoint-related information (VI) or the like) to be stored in the storage medium 83 described above may be stored in the storage medium 63. In that case, the storage unit 82 and the storage medium 83 may be omitted.

<Optical system control unit>

The optical system control unit 84 controls the multi-view optical system 30 (individual-view optical systems 31 thereof) according to the control of the control unit 81. For example, the optical system control unit 84 can control the lens group and the diaphragm of each of the individual-view optical systems 31 to control the focal length and/or the F value of each of the individual-view optical systems 31. Note that in a case where the camera 10 has an electric focus adjustment function, the optical system control unit 84 can control the focus (focal length) (of each individual-view optical system 31) of the multi-view optical system 30. Additionally, the optical system control unit 84 may be able to control the aperture (F value) of each of the individual-view optical systems 31.

Note that the camera 10 may include a mechanism (physical configuration) that adjusts the focal length by manually operating a focus ring provided in the lens barrel instead of including such an electric focus adjustment function. In that case, the optical system control unit 84 can be omitted.

<Association of viewpoint-related information>

The camera 10 can extract a viewpoint image viewed from each of the individual-view optical systems 31 from a captured image. Since a plurality of viewpoint images extracted from one captured image is images of different viewpoints, it is possible to perform processing such as depth estimation by multi-view matching and correction for curbing an attachment error of a multi-view lens, for example, using these viewpoint images. Note, however, that in order to perform these processing, information such as relative positions among the viewpoint images is necessary.

Hence, the camera 10 associates viewpoint-related information, which is information used to identify regions of a plurality of viewpoint images in a captured image, with an entire image, a viewpoint image, or a composite image to be output.

Here, the term "associate" means, for example, that one data can be used (linked) when the other data is processed. That is, the form of a captured image and viewpoint-related information as data (file) is arbitrary. For example, a captured image and viewpoint-related information may be combined into one piece of data (file), or may be individual pieces of data (files). For example, viewpoint-related information associated with a captured image may be transmitted on a transmission path different from that of the captured image. Additionally, for example, viewpoint-related information associated with a captured image may be recorded in a recording medium (or different recording area of the same recording medium) different from that of the captured image. It goes without saying that a captured image and viewpoint-related information may be combined into one stream data or one file.

Note that the image with which viewpoint-related information is associated may be a still image or a moving image. In the case of a moving image, region extraction, association of viewpoint-related information, and the like can be performed in each frame image similarly to the case of a still image.

Additionally, this "association" may be performed for a part of the data (file) instead of for the entire data. For example, in a case where a captured image is a moving image including a plurality of frames, viewpoint-related information may be associated with an arbitrary unit such as a plurality of frames, one frame, or a part in a frame of the captured image.

Note that in a case where a captured image and viewpoint-related information are individual pieces of data (files), the captured image and the viewpoint-related information can be associated with each other by assigning the same identification number to both the captured image and the viewpoint-related information. Additionally, in a case where a captured image and viewpoint-related information are combined into one file, for example, the viewpoint-related information may be added to a header or the like of the captured image. Note that the object associated with viewpoint-related information may be a captured image (entire image), a viewpoint image, or a composite image of viewpoint images.

<Output of entire image>

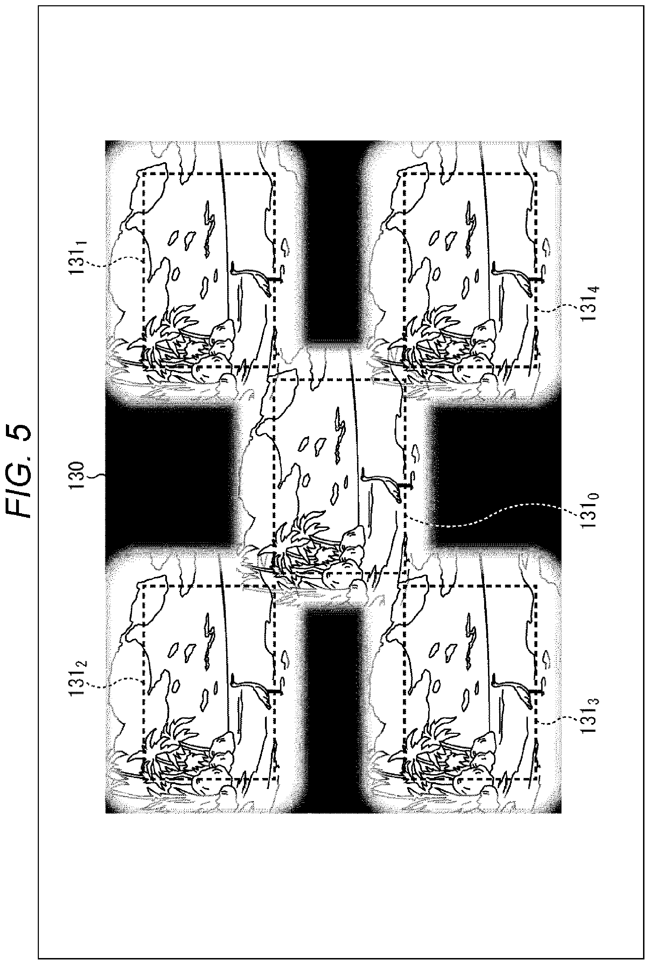

A case of outputting an entire image will be described. An example of the entire image is illustrated in Fig. 5. As illustrated in Fig. 5, an entire image 130 includes an individual-view image corresponding to each individual-view optical system 31 (image obtained by photoelectrically converting light from subject incident through each individual-view optical system 31). For example, a central image of the entire image 130 is an individual-view image corresponding to the individual-view optical system $31_0$. Additionally, an upper right image of the entire image 130 is an individual-view image corresponding to the individual-view optical system $31_1$. Moreover, an upper left image of the entire image 130 is an individual-view image corresponding to the individual-view optical system $31_2$. Additionally, a lower left image of the entire image 130 is an individual-view image corresponding to the individual-view optical system $31_3$. Moreover, a

lower right image of the entire image 130 is an individual-view image corresponding to the individual-view optical system $31_4$.

Note that the entire image 130 may be the entire captured image generated by the image sensor 51 or a partial image (note, however, that all individual-view images are included) clipped from the captured image. Additionally, the entire image 130 may be an image in RAW format or an image in YC format.

Viewpoint region information designates a part (effective part) of each of the individual-view images as a viewpoint image region with respect to the entire image 130. For example, in the case of Fig. 5, regions of the entire image 130 surrounded by dotted frames is the viewpoint image region. That is, a part (effective part) of the individual-view image corresponding to the individual-view optical system $31_0$ is designated as a viewpoint image region $131_0$. Similarly, a part (effective part) of the individual-view image corresponding to the individual-view optical system $31_1$ is designated as a viewpoint image region $131_1$. Additionally, a part (effective part) of the individual-view image corresponding to the individual-view optical system $31_2$ is designated as a viewpoint image region $131_2$. Moreover, a part (effective part) of the individual-view image corresponding to the individual-view optical system $31_3$ is designated as a viewpoint image region $131_3$. Additionally, a part (effective part) of the individual-view image corresponding to the individual-view optical system $31_4$ is designated as a viewpoint image region $131_4$. Note that in the following description, the viewpoint image regions $131_0$ to $131_4$ will be referred to as a viewpoint image region 131 in a case where it is not necessary to distinguish among the viewpoint image regions for explanation.

In a case of outputting such an entire image 130, the association unit 70 acquires the entire image 130 from the image sensor 51, the RAW signal processing unit 52, or the camera signal processing unit 54, and associates viewpoint-related information corresponding to the multi-view optical system 30 supplied from the region identification unit 56 with the entire image 130. Then, the association unit 70 outputs the entire image and the viewpoint-related information associated with each other. As an example of the output, for example, the storage unit 62 may store the entire image and the viewpoint-related information associated with each other in the storage medium 63. Additionally, the communication unit 64 may transmit the entire image and the viewpoint-related information associated with each other. Moreover, the filing unit 65 may file the entire image and the viewpoint-related information associated with each other.

Note that the region extraction unit 53 may associate the entire image with the viewpoint-related information. That is, the region extraction unit 53 may associate viewpoint-related information supplied from the region identification unit 56 with an entire image to be output, and supply the entire image and the viewpoint-related information associated with each other to the bus 60, the RAW signal processing unit 52, or the camera signal processing unit 54.

The viewpoint-related information in this case includes viewpoint region information indicating a plurality of viewpoint image regions in the captured image. Viewpoint region information may represent the viewpoint image region in any manner. For example, a viewpoint image region may be represented by coordinates (center coordinates of viewpoint image region) indicating a position corresponding to the optical axis of the individual-view optical system 31 in a captured image and the resolution (number of pixels) of a viewpoint image (viewpoint image region). That is, viewpoint region information may include the center coordinates of a viewpoint image region in a captured image and the resolution of a viewpoint image region. In this case, the location of the viewpoint image region in the entire image 130 can be identified from the center coordinates of the viewpoint image region and the resolution (number of pixels) of the viewpoint image region.

By associating such viewpoint-related information with the captured image, the viewpoint-related information can be used in extraction of a viewpoint image as pre-processing for post-stage processing such as depth estimation by multi-view matching or processing for curbing an error that occurs when the multi-view optical system 30 is attached (installed). For example, after extracting each viewpoint image on the basis of viewpoint region information included in the viewpoint-related information, the image reconstruction processing unit 57 can perform post-stage processing such as depth estimation by multi-view matching, refocusing processing, and processing for curbing an error that occurs when the multi-view optical system 30 is attached (installed).

Note that even if viewpoint-related information is not associated with the entire image 130, for example, the image reconstruction processing unit 57 may be able to identify a viewpoint image region included in the entire image 130 by image processing. However, it may be difficult to accurately identify the viewpoint image region in the captured image depending on imaging conditions or the like. Hence, by associating viewpoint-related information with the entire image 130 as described above, the image reconstruction processing unit 57 can more easily and more accurately extract a viewpoint image region from the entire image 130 on the basis of the viewpoint-related information.

<Output of viewpoint image>

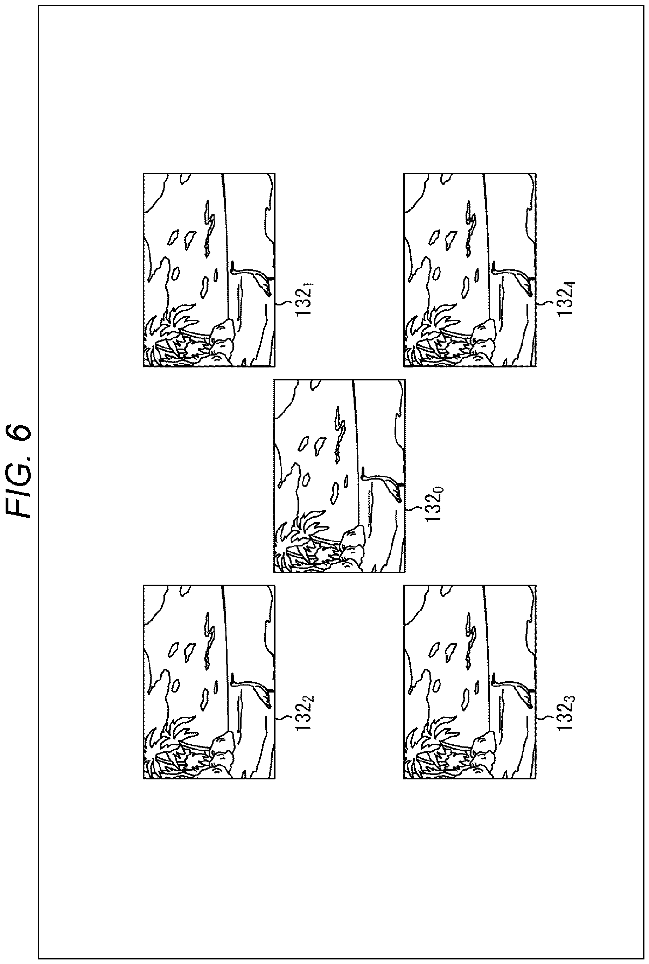

Next, a case of outputting a viewpoint image will be described. Fig. 6 is a diagram illustrating examples of a clipped viewpoint image. In Fig. 6, a viewpoint image $132_0$ is an image obtained by extracting the viewpoint image region $131_0$ from the entire image 130 (Fig. 5). A viewpoint image $132_1$ is an image obtained by extracting the viewpoint image

region $131_1$ from the entire image 130. A viewpoint image $132_2$ is an image obtained by extracting the viewpoint image region $131_2$ from the entire image 130. A viewpoint image $132_3$ is an image obtained by extracting the viewpoint image region $131_3$ from the entire image 130. A viewpoint image $132_4$ is an image obtained by extracting the viewpoint image region $131_4$ from the entire image 130. Hereinafter, the viewpoint images $132_0$ to $132_4$ will be referred to as a viewpoint image 132 in a case where it is not necessary to distinguish among the viewpoint images for explanation.

In a case of outputting such a viewpoint image, the region extraction unit 53 outputs each viewpoint image 132 clipped as in the example of Fig. 6 as an independent piece of data (or file).

For example, the region extraction unit 53 clips a viewpoint image from a captured image (entire image) in accordance with viewpoint-related information supplied from the region identification unit 56. The region extraction unit 53 assigns viewpoint identification information (e.g., identification number) for identifying each viewpoint to each clipped viewpoint image. The region extraction unit 53 supplies each viewpoint image to which the viewpoint identification information is assigned to the camera signal processing unit 54. The camera signal processing unit 54 performs camera signal processing on each viewpoint image in RAW format to generate each viewpoint image in YC format. The camera signal processing unit 54 supplies each viewpoint image in YC format to the association unit 70. Additionally, the region identification unit 56 supplies the viewpoint-related information supplied to the region extraction unit 53 to the association unit 70.

The association unit 70 associates each viewpoint image with the viewpoint-related information corresponding to the viewpoint image. Viewpoint-related information may include viewpoint identification information (e.g., viewpoint identification number) for identifying each viewpoint. The association unit 70 associates the viewpoint-related information corresponding to the viewpoint image with each viewpoint image on the basis of the viewpoint identification information. By referring to the viewpoint identification information, the association unit 70 can easily grasp which viewpoint-related information corresponds to which viewpoint image. That is, the association unit 70 can correctly associate each viewpoint image and viewpoint-related information more easily by using the viewpoint identification information.

Then, the association unit 70 outputs each viewpoint image and the viewpoint-related information associated with each other. For example, the storage unit 62 may store each viewpoint image and the viewpoint-related information associated with each other in the storage medium 63. Additionally, the communication unit 64 may transmit each viewpoint image and the viewpoint-related information associated with each other. Moreover, the filing unit 65 may file each viewpoint image and the viewpoint-related information associated with each other.

Note that the region extraction unit 53 may associate each viewpoint image with the viewpoint-related information. That is, the region extraction unit 53 may associate the viewpoint-related information supplied from the region identification unit 56 with each viewpoint image to be output, and supply each viewpoint image and the viewpoint-related information associated with each other to the bus 60, the RAW signal processing unit 52, or the camera signal processing unit 54.

Additionally, viewpoint-related information may include viewpoint time information indicating the time and order at which the captured image from which the viewpoint image is extracted is captured. In a case where viewpoint images extracted from a plurality of captured images are mixed, or in a case where the viewpoint images are moving images or continuous images, it may be difficult to identify which viewpoint image is extracted from which captured image. By associating viewpoint time information indicating the generation time and order of the captured images with the viewpoint images, it is possible to more easily identify the captured image corresponding to each viewpoint image (captured image from which each viewpoint image is extracted). In other words, it is possible to more easily identify a plurality of viewpoint images extracted from the same captured image. In addition, even when recorded files are not collectively managed, it is possible to identify viewpoint images of the same time.

Note that as in the case of a viewpoint image, an individual-view image may be clipped from a captured image, processed, and recorded.

<Output of composite image>

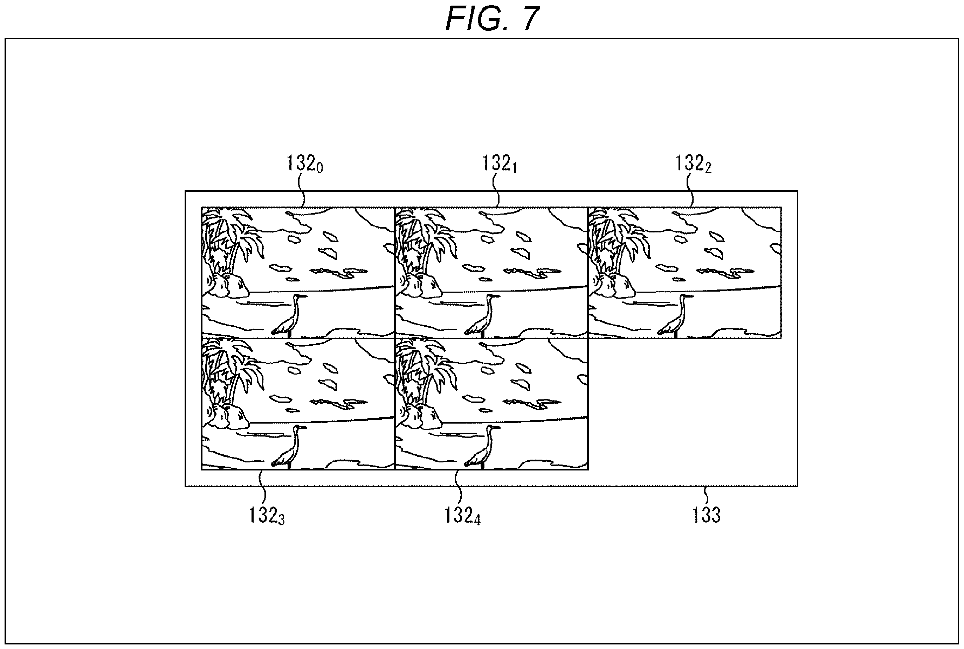

Next, a case of outputting a composite image will be described. Fig. 7 is a diagram illustrating an example of a composite image obtained by combining viewpoint images. In the case of the example of Fig. 7, one composite image 133 is generated by combining the viewpoint images $132_0$ to $132_4$ extracted in the example of Fig. 6 so as to be displayed side by side in one image. That is, the composite image 133 is obtained by combining the viewpoint images 132 into one piece of data (one frame) or one file.

Note that while a margin region is shown around the viewpoint images $132_0$ to $132_4$ of the composite image 133 in Fig. 7, the composite image 133 may or may not have this margin region. Additionally, the shape of the composite image 133 only needs to be rectangular, and the arrangement method (arrangement) of the viewpoint images 132 is arbitrary. As in the example of Fig. 7, a blank region (region corresponding to sixth viewpoint image 132) generated when the five viewpoint images 132 are arranged in 2 rows and 3 columns may be represented by null data or a fixed value.

For example, the region extraction unit 53 clips a viewpoint image from a captured image (entire image) in accordance with viewpoint-related information supplied from the region identification unit 56. The region extraction unit 53 combines the clipped viewpoint images so as to be displayed side by side in one image to generate a composite image. At that time, by determining the arrangement order (position) of the viewpoint images in advance, it is possible to easily grasp the viewpoint of each of viewpoint image included in the composite image.

Additionally, viewpoint identification information (e.g., identification number) may be assigned to each viewpoint image before combining. In this case, too, it is possible to easily grasp the viewpoint of each viewpoint image included in the composite image. In the following description, assume that the arrangement order of the viewpoint images in the composite image is determined in advance.

The region extraction unit 53 supplies a composite image to which viewpoint identification information is assigned to the camera signal processing unit 54. The camera signal processing unit 54 performs camera signal processing on the composite image in RAW format to generate a composite image in YC format. The camera signal processing unit 54 supplies the composite image in YC format to the association unit 70. Additionally, the region identification unit 56 supplies the viewpoint-related information supplied to the region extraction unit 53 to the association unit 70.

The association unit 70 associates viewpoint-related information with the composite image. The viewpoint of each viewpoint image included in the composite image is apparent from the position of the viewpoint image in the composite image. That is, it is possible to easily grasp which viewpoint region information of the viewpoint-related information each viewpoint image corresponds to.

Then, the association unit 70 outputs the composite image and the viewpoint-related information associated with each other. For example, the storage unit 62 may store the composite image and the viewpoint-related information associated with each other in the storage medium 63. Additionally, the communication unit 64 may transmit the composite image and the viewpoint-related information associated with each other. Moreover, the filing unit 65 may file the image and the viewpoint-related information associated with each other.

Note that the region extraction unit 53 may associate the composite image with the viewpoint-related information. That is, the region extraction unit 53 may associate viewpoint-related information supplied from the region identification unit 56 with a composite image to be output, and supply the composite image and the viewpoint-related information associated with each other to the bus 60, the RAW signal processing unit 52, or the camera signal processing unit 54.

<Imaging of subject>

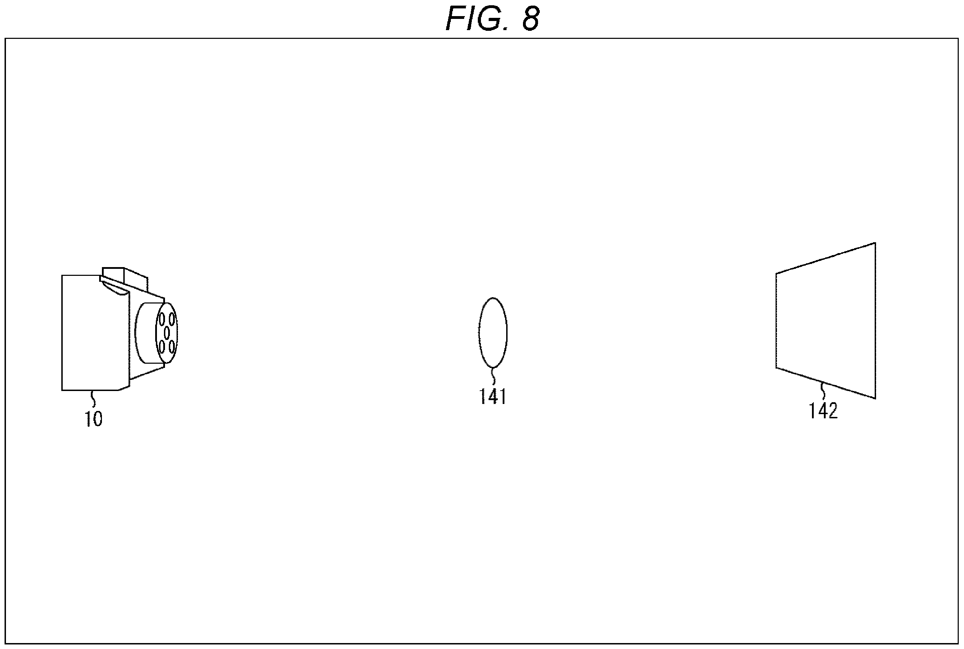

For example, as in an example of Fig. 8, assume that a subject 141 and a subject 142 are imaged using the camera 10. As illustrated in Fig. 8, assume that the subject 141 is located closer (on the near side) than the subject 142 as viewed from the camera 10.

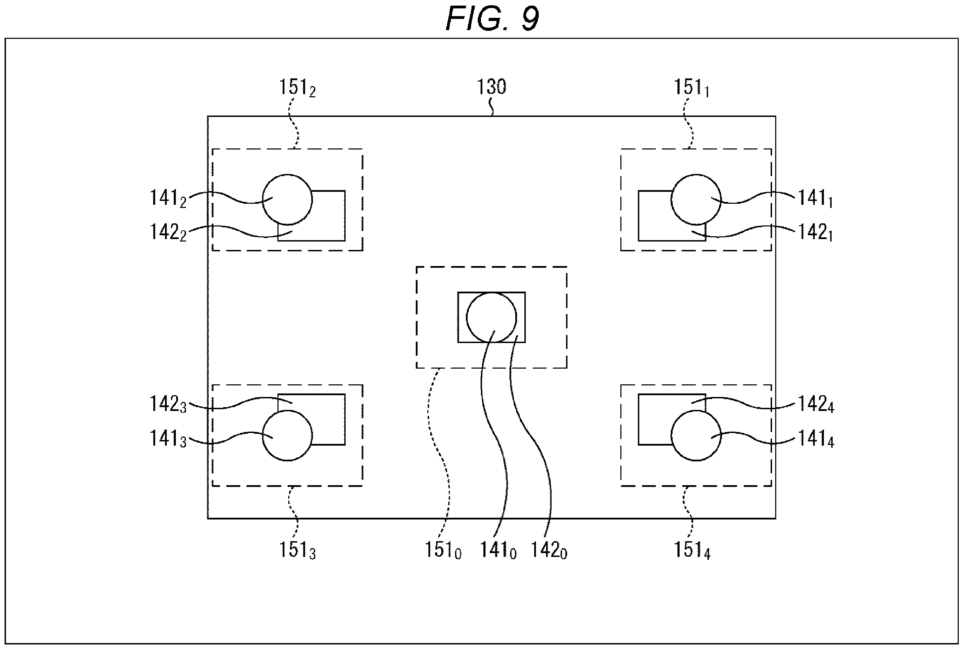

The entire image 130 illustrated in Fig. 9 is an example of the entire image obtained as an acquired image or a captured image in the camera 10 in that case. Similarly to the case of the example of Fig. 5, the entire image 130 includes individual-view images corresponding to the individual-view optical systems 31 (i.e., viewed from individual-view optical systems 31).

For example, a subject $141o$ and a subject $142_0$ in the entire image 130 are images of the subject 141 and the subject 142 generated by photoelectrically converting light received by the image sensor 51 through the individual-view optical system $31_0$. That is, the subject $141_0$ and the subject $142_0$ are images of the subject 141 and the subject 142 viewed from the individual-view optical system $31_0$ (corresponding to individual-view optical system $31_0$). Additionally, a subject $141_1$ and a subject $142_1$ of the entire image 130 are images of the subject 141 and the subject 142 generated by photoelectrically converting light received by the image sensor 51 through the individual-view optical system $31_1$. That is, the subject $141_1$ and the subject $142_1$ are images of the subject 141 and the subject 142 viewed from the individual-view optical system $31_1$ (corresponding to the individual-view optical system $31_1$).

Similarly, a subject $141_2$ and a subject $142_2$ of the entire image 130 are images of the subject 141 and the subject 142 generated by photoelectrically converting light received by the image sensor 51 through the individual-view optical system $31_2$. That is, the subject $141_2$ and the subject $142_2$ are images of the subject 141 and the subject 142 viewed from the individual-view optical system $31_2$ (corresponding to the individual-view optical system $31_2$). Additionally, a subject $141_3$ and a subject $142_3$ of the entire image 130 are images of the subject 141 and the subject 142 generated by photoelectrically converting light received by the image sensor 51 through the individual-view optical system $31_3$. That is, the subject $141_3$ and the subject $142_3$ are images of the subject 141 and the subject 142 viewed from the individual-view optical system $31_3$ (corresponding to the individual-view optical system $31_3$). Moreover, a subject $141_4$ and a subject $142_4$ of the entire image 130 are images of the subject 141 and the subject 142 generated by photoelectrically converting light received by the image sensor 51 through the individual-view optical system $31_4$. That is, the subject $141_4$ and the subject $142_4$ are images of the subject 141 and the subject 142 viewed from the individual-view optical system $31_4$ (corresponding to the individual-view optical system $31_4$) .

<Image display>

The camera 10 can display an image on, for example, the display panel unit 33 and the viewfinder unit 34. For example, the camera 10 can generate a display image from an acquired image and display the display image as a through-the-lens image so that the user can confirm the composition or the like before imaging the subject by pressing a shutter button or the like. The camera 10 performs such display for each frame of an acquired image acquired by the image sensor 51. The user can more easily perform imaging according to the user's intention by performing framing (adjustment of angle of view) or the like while confirming the image (also referred to as display image) displayed in this manner.

Additionally, for example, the camera 10 can generate a display image from the captured image and display the display image as a confirmation image so that the user can confirm the imaging result (i.e., captured image) immediately after imaging the subject by pressing a shutter button or the like. Moreover, for example, the camera 10 can generate a display image from an image stored in the storage medium 83 or the like and display the display image so that the user can confirm a captured image captured and stored in the past.

In general, in a case where imaging is performed using a single-view optical system, the whole image formed on the image sensor 51 is displayed as a through-the-lens image. However, in the case of the entire image 130 (Fig. 9) captured using the plurality of individual-view optical systems 31, since the entire image 130 includes the individual-view images viewed from the individual-view optical systems 31, when the entire image 130 is displayed on the display unit 61 (display panel unit 33, viewfinder unit 34, or the like) as a through-the-lens image or the like, each individual-view image becomes very small as compared with the case of imaging using a single-view optical system, and it may be difficult for the user to visually recognize the subject in the displayed image. For this reason, for example, it may be difficult for the user to adjust (frame) the angle of view (composition) on the basis of the displayed image.

The same applies to a case where a confirmation image of a captured image or a display image of a stored image is displayed, and in the entire image 130, it may be difficult for the user to visually recognize the subject in the displayed image.

Hence, a method of clipping and displaying one individual-view image has been considered. For example, in the case of Fig. 9, a region including the subject $141_0$ and the subject $142_0$ is clipped, and an image of the region is displayed on the display unit 61 (display panel unit 33, viewfinder unit 34, or the like) as a through-the-lens image or the like. As a result, the subject can be displayed large on the display unit 61, and the user can more easily visually recognize the subject.

However, in the case of this method, since only one individual-view image is displayed, it is difficult for the user to confirm how much parallax the individual-view images have on the basis of the displayed image.

<Rotational display of a plurality of individual-view images>

Hence, the individual-view image to be displayed is dynamically switched. For example, in the case of the entire image 130 in Fig. 9, an individual-view clipped image $151_0$, an individual-view clipped image $151_1$, an individual-view clipped image $151_2$, an individual-view clipped image $151_3$, and an individual-view clipped image $151_4$ are clipped.

The individual-view clipped image $151_0$ is a part or all of the individual-view image corresponding to the individual-view optical system $31_0$, and includes the subject $141_0$ and the subject $142_0$. The individual-view clipped image $151_1$ is a part or all of the individual-view image corresponding to the individual-view optical system $31_1$, and includes the subject $141_1$ and the subject $142_1$. The individual-view clipped image $151_2$ is a part or all of the individual-view image corresponding to the individual-view optical system $31_2$, and includes the subject $141_2$ and the subject $142_2$. The individual-view clipped image $151_3$ is a part or all of the individual-view image corresponding to the individual-view optical system $31_3$, and includes the subject $141_3$ and the subject $142_3$. The individual-view clipped image $151_4$ is a part or all of the individual-view image corresponding to the individual-view optical system $31_4$, and includes the subject $141_4$ and the subject $142_4$.

Hereinafter, the individual-view clipped images $151_4$ to $151_4$ will be referred to as an individual-view clipped image 151 in a case where it is not necessary to distinguish among the individual-view clipped images for explanation. Additionally, the region of the individual-view clipped image 151 in the image before clipping (e.g., entire image 130) is also referred to as an individual-view clipping region.

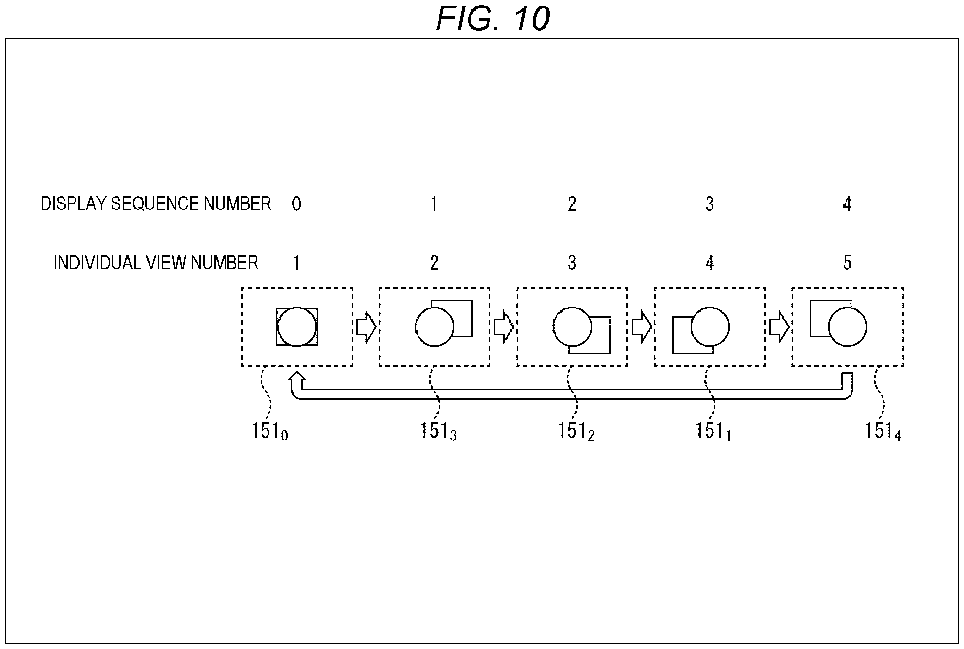

Then, a part or all of such individual-view clipped images 151 are dynamically switched and displayed in a predetermined order. For example, as illustrated in Fig. 10, the individual-view clipped images 151 are repeatedly displayed in the order of the individual-view clipped image $151_0$, the individual-view clipped image $151_3$, the individual-view clipped image $151_2$, the individual-view clipped image $151_1$, and the individual-view clipped image $151_4$.

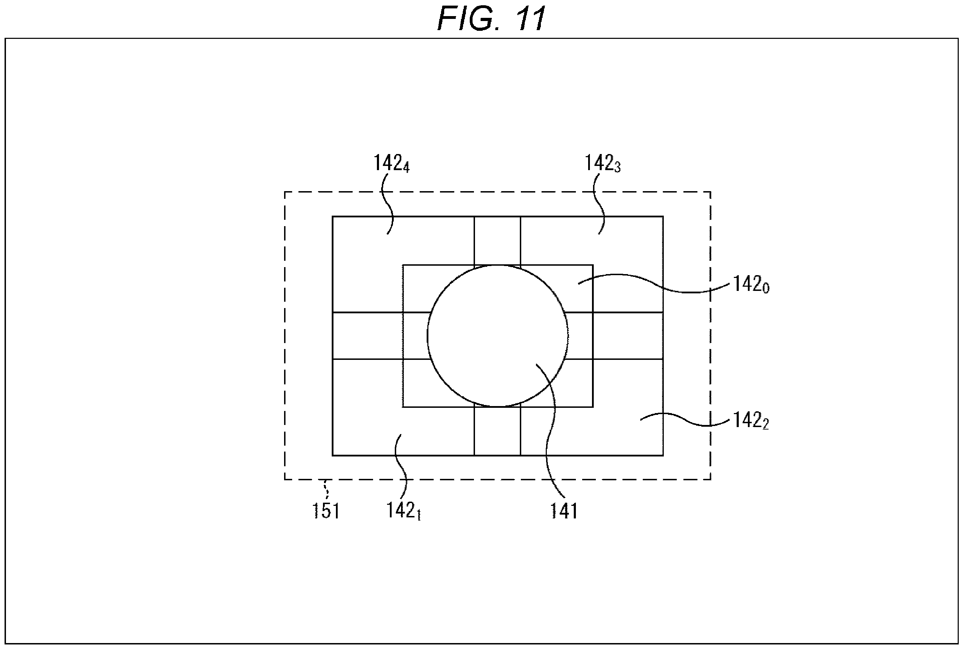

Since the viewpoint positions of the individual-view clipped images 151 are different, parallax occurs among the images. Accordingly, as illustrated in Fig. 11, when the individual-view clipped images $151_0$ to $151_4$ are superimposed at the same position, the positions of the subjects $142_0$ to $142_4$ are shifted from one another. That is, when the individual-view clipped images 151 are displayed consecutively, the user sees the subject 142 in a blurred manner as illustrated in Fig. 11. The user can intuitively grasp with what degree of parallax the subject is imaged by the amount of the blur.

Additionally, in this case, it is possible to display each of the individual-view clipped images 151 larger than the case of displaying the entire image 130, and thus, it is possible to curb reduction in visibility. Accordingly, adjustment (framing) of the angle of view (composition) and the like can be more easily performed on the basis of the displayed image. That is, it is possible to achieve easiness of visual recognition of the subject and easiness of framing, and to achieve easiness of grasping the parallax among images of the individual views.

As described above, any one of a plurality of images viewed from the plurality of individual-view optical systems having optical paths independent from one another is displayed on the display unit while selectively and dynamically switching among the images.

For example, an information processing device includes a display control unit that causes a display unit to display any one of a plurality of images viewed from a plurality of individual-view optical systems having optical paths independent from one another while selectively and dynamically switching among the images.

Additionally, for example, a program causes a computer to function as a display control unit that causes a display unit to display any one of a plurality of images viewed from a plurality of individual-view optical systems having optical paths independent from one another while selectively and dynamically switching among the images.

As a result, it is possible to more easily grasp parallax among a plurality of images viewed from different individual-view optical systems.

For example, as in the example of Fig. 10, some or all of the plurality of images may be selected and displayed one by one in a predetermined order.

For example, in a case where a through-the-lens image is displayed, the camera 10 (display image generation unit 55) extracts and displays the individual-view clipped images 151 one by one from frames of an acquired image that is a moving image.

Additionally, when a captured image is a still image, in a case where a confirmation image of the captured image is displayed, the camera 10 (display image generation unit 55) extracts a plurality of individual-view clipped images 151 from the captured image which is a still image, and sequentially displays the extracted images. The same applies to a case where a stored captured image is displayed. Note that in a case where a captured image is a moving image, similarly to the case of a through-the-lens image, the camera 10 (display image generation unit 55) extracts and displays the individual-view clipped images 151 one by one from the frames.

<Individual-view clipping region>

Next, an individual-view clipping region clipped as described above will be described. In the entire image 130, a part or an entire region of each of the individual-view images is set as an individual-view clipping region. That is, the number and approximate positions of individual-view clipping regions set in the entire image 130 are similar to those of individual-view images.

The size of an individual-view clipping region is arbitrary within a range not exceeding the individual-view image. For example, the size of an individual-view clipping region may be the same as that of the viewpoint image region. Additionally, while the size of an individual-view clipping region may be variable (e.g., may be set by user), the description will be made here assuming that the size is fixed. Moreover, from the viewpoint of visibility of the display image, it is desirable that the sizes of individual-view clipping regions are the same.

The shape of an individual-view clipping region is arbitrary. Here, the description will be made on the assumption that the shape is a rectangle. Additionally, from the viewpoint of visibility of the display image it is desirable that the shapes of the individual-view clipping regions are the same.

<Shifting of individual-view clipping region>

Incidentally, in the case of the example of Fig. 9, the positions of the subjects 141 are the same (positioned at the center) in the individual-view clipped images 151. Accordingly, when these individual-view clipped images 151 are displayed consecutively, the subject 141 does not blur as shown in the example of Fig. 10. That is, by making the positions of a desired subject in the individual-view clipped images 151 the same, the subject can be displayed without blurring.

As described above, the individual-view images have parallax, and the position of a subject in each individual-view image is shifted in the direction of the parallax. That is, by shifting the position of each of the individual-view clipping regions in the individual-view image in the direction of the parallax and making the positions of the desired subject in the individual-view clipped images 151 the same, the subject can be displayed without blurring.

The direction of the shift (parallax direction) depends on the arrangement pattern of the individual-view clipped image 151 (or individual-view image), that is, the layout (number, position, and the like) of the individual-view optical system 31 in the multi-view optical system 30.

Here, the parallax of individual-view images will be described. In general, between individual-view images, a subject closer to the camera 10 has a larger parallax, and a subject farther from the camera 10 has a smaller parallax. For example, in the case of Fig. 9, the positional deviation of the subject 141 is larger than the positional deviation of the subject 142 in the individual-view images.

Accordingly, the blur amount of a subject closer to the camera 10 can be reduced as the shift amount of the individual-view clipping region is increased, and the blur amount of a subject farther from the camera 10 can be reduced as the shift amount of the individual-view clipping region is decreased. That is, the shift amount of the individual-view clipping region depends on the distance between the subject whose blur amount is to be reduced (typically, displayed so as not to blur) and the camera 10.

The shift amount may be controlled by a user, an application, or the like. As described above, since the shift amount is determined by the distance from the camera 10 to the subject whose blur amount is to be reduced on the display screen, when the user or an application designates the shift amount, the blur amount of a subject at the distance corresponding to the shift amount from the camera 10 can be reduced.

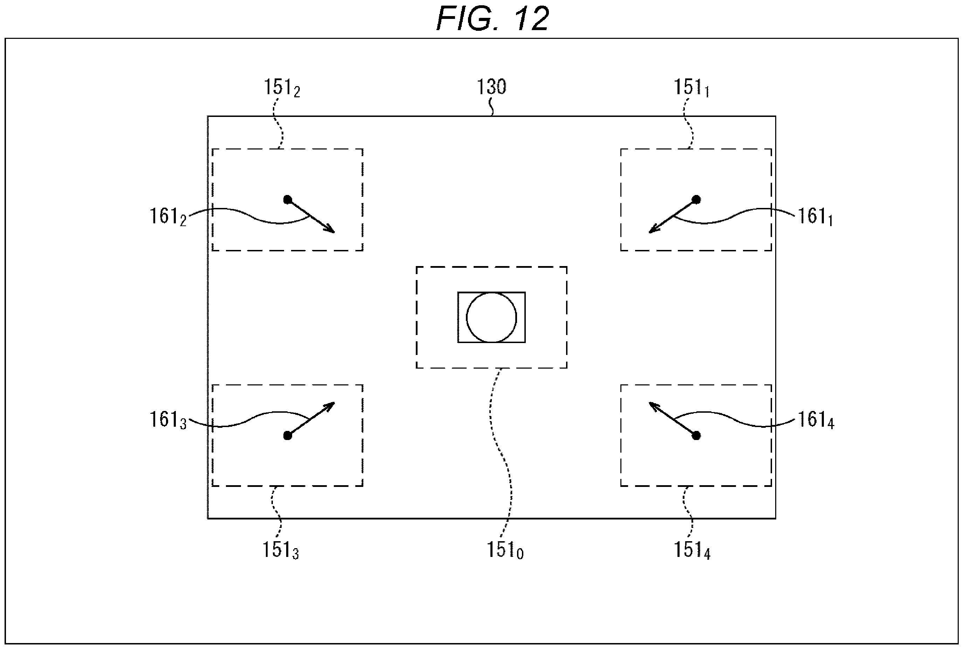

For example, as illustrated in Fig. 12, this shift amount may be designated as vector information (direction and magnitude). In the case of the example of Fig. 12, the direction and magnitude of the shift of the region of the individual-view clipped image $151_1$ are designated by a shift amount $161_1$ that is vector information. Similarly, the direction and magnitude of the shift of the region of the individual-view clipped image $151_2$ are designated by a shift amount $161_2$, the direction and magnitude of the shift of the region of the individual-view clipped image $151_3$ are designated by a shift amount $161_3$, and the direction and magnitude of the shift of the region of the individual-view clipped image $151_4$ are designated by a shift amount $161_4$. Hereinafter, the shift amounts $161_1$ to $161_4$ will be referred to as a shift amount 161 in a case where it is not necessary to distinguish among the shift amounts for explanation. Note that the region of the individual-view clipped image $151_0$ is positioned at the center of the entire image 130 and serves as a reference, and therefore is not shifted (is fixed).

For example, the user or an application sets the shift amount 161 corresponding to the distance between the desired subject and the camera 10. For example, when the user or an application designates a distance, the shift amount 161 corresponding to the designated distance may be set. In accordance with this setting, the individual-view clipping region is shifted, and the blur amount of the desired subject in the display image is curbed (typically, it is possible to prevent blurring). That is, the camera 10 can reduce the blur amount of the subject at an arbitrary distance from the camera 10 in the display image.

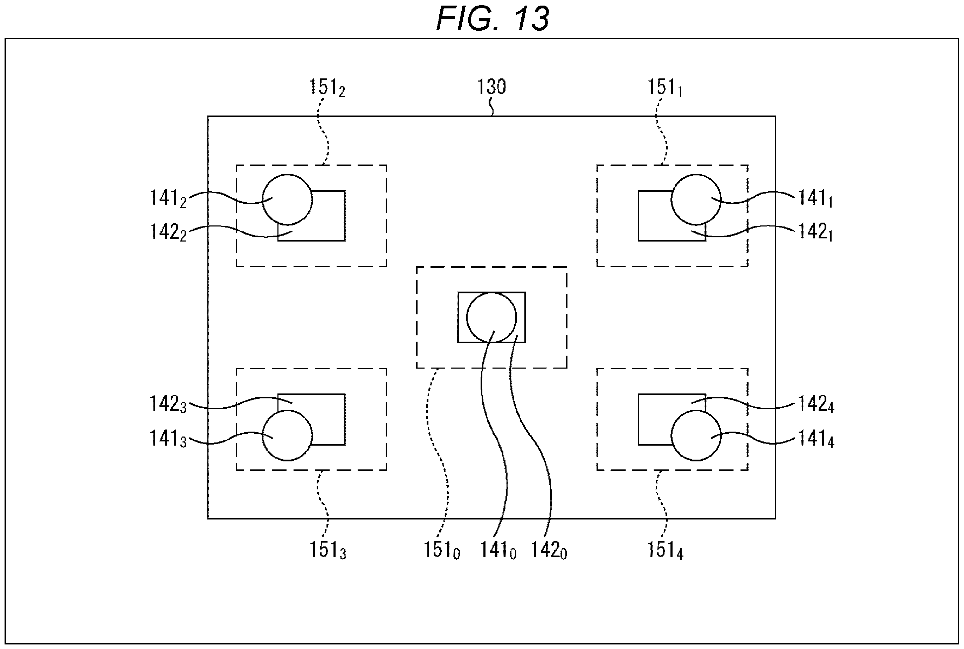

Fig. 13 illustrates an example of a case where individual-view clipping regions are shifted so as to reduce the blur amount of the subject 142. In the case of the example of Fig. 13, the position of the subject $142_0$ in the individual-view clipped image $151_0$, the position of the subject $142_1$ in the individual-view clipped image $151_1$, the position of the subject $142_2$ in the individual-view clipped image $151_2$, the position of the subject $142_3$ in the individual-view clipped image $151_3$, and the position of the subject $142_4$ in the individual-view clipped image $151_4$ are the same. That is, the positions of the subject 142 in the individual-view clipped images 151 are the same.

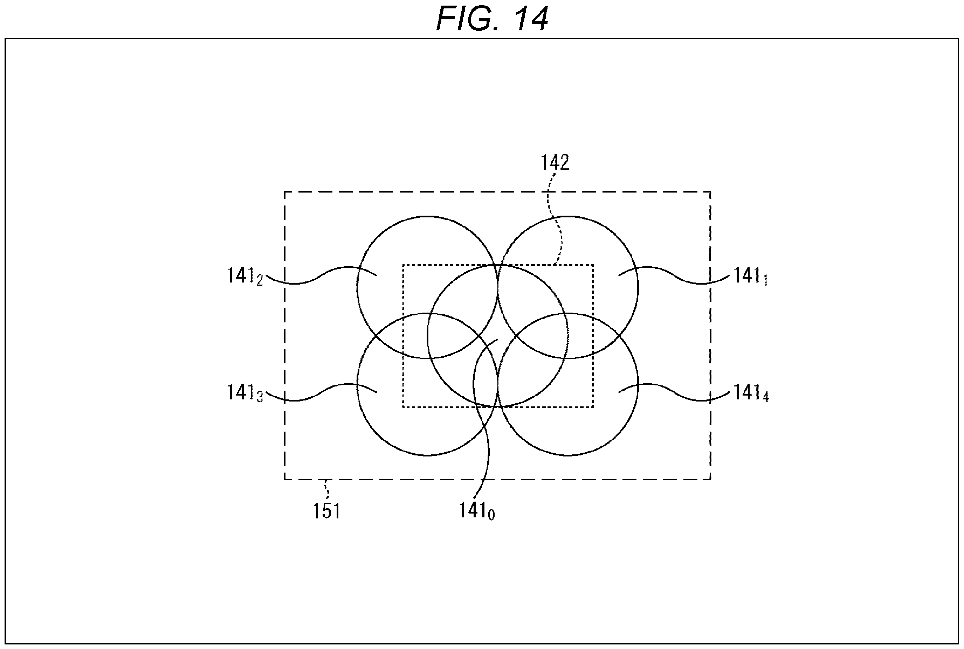

Accordingly, when these individual-view clipped images 151 are sequentially displayed, the display image is as illustrated in Fig. 14. That is, as illustrated in Fig. 14, the camera 10 can display the individual-view clipped image 151 so that the user can see the subject 142 without blurring and the subject 141 in a blurred manner.

Note that a method of measuring the distance between the camera 10 and the subject is arbitrary. For example, the user may visually measure and designate the distance between the camera 10 and the subject, or a distance measuring sensor or the like may be used to measure the distance between the camera 10 and the subject.

Note that the shift amount may be fixed. For example, the shift amount may be fixed to a value or the like corresponding to the recommended imaging distance according to the optical characteristics of the individual-view optical system 31 (lens). In that case, the person capturing the image can perform imaging at a distance matching the recommended imaging distance by adjusting the distance between the camera 10 and the subject so as to reduce the parallax (i.e., movement of subject in display image) of the subject. That is, the user can easily measure the distance to the subject using this display function.

<Switching cycle>

Note that in the case of dynamically switching the individual-view clipped image 151 to be displayed as described above, the individual-view clipped image 151 to be displayed may be switched at a predetermined cycle.

The switching cycle is arbitrary. For example, the cycle may be each frame (single frame) or a plurality of frames.

Additionally, the user (person capturing the image) may be able to select the switching cycle. For example, the switching cycle may be set by the user operating an input device such as the dial 35 or the button 36 of the camera 10. For example, the control unit 81 may accept designation of the switching cycle thus input by the user, and supply control information indicating the switching cycle to the display image generation unit 55.

<Display order of individual-view clipped images>

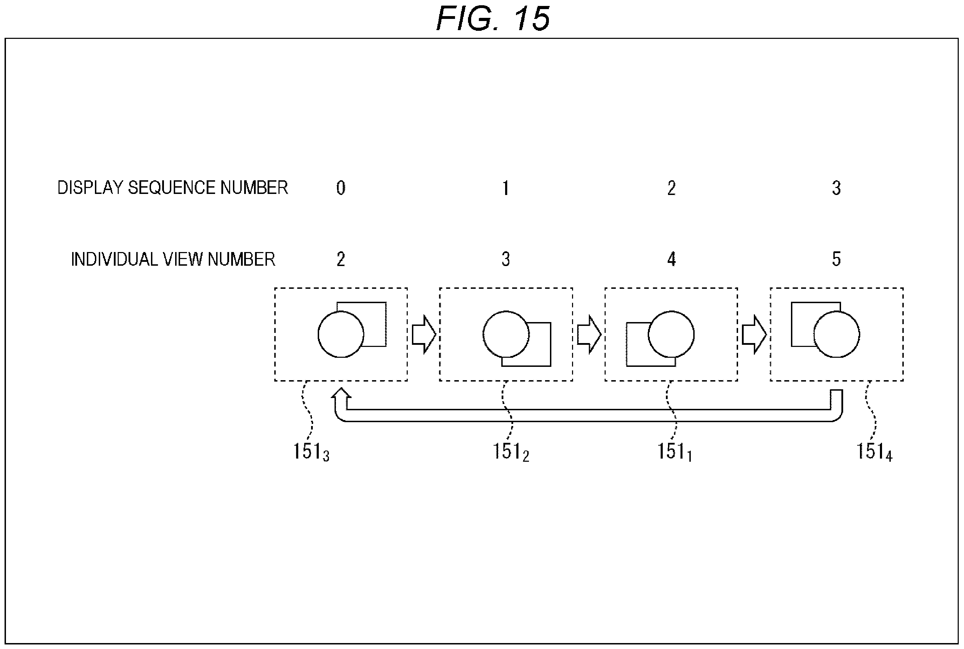

Note that while Fig. 10 illustrates an example of the selection order (display order) of the individual-view clipped images 151 in a case where such individual-view clipped images 151 are dynamically switched and displayed, the selection order is arbitrary and is not limited to the example of Fig. 10. As in the example of Fig. 10, the camera 10 may sequentially display all the individual-view clipped images 151, or as in the example of Fig. 15, the camera 10 may display some of the individual-view clipped images 151 in a predetermined order.

In the case of the example of Fig. 15, the display image generation unit 55 does not extract or display the individual-view clipped image $151_0$. The display image generation unit 55 extracts the individual-view clipped images 151 from the acquired image (or captured image) in the order of the individual-view clipped image $151_3$, the individual-view clipped image $151_2$, the individual-view clipped image $151_1$, and the individual-view clipped image $151_4$, and displays the extracted images on the display unit 61.

That is, in this case, among the plurality of individual-view clipped images 151, the display image generation unit 55 extracts (some or all of) the individual-view clipped images 151 positioned in the outer peripheral part in the relative positional relationship among the images one by one in a predetermined order, and displays the extracted images on the display unit 61.

As a result, in the display image displayed by the display unit 61, the subject 142 appears to move so as to draw a quadrangle. Accordingly, when the user follows the movement of the subject 142, the moving direction of the line-of-sight of the user is limited to the vertical direction and the horizontal direction, and the direction is also limited. That is, the movement of the line-of-sight of the user is simplified to a movement drawing a quadrangle. For this reason, the user can more easily follow the movement of the subject 142 than in a case where the position of the subject 142 changes randomly. That is, the appearance of the subject 142 becomes smoother.

Additionally, in the case of the example of Fig. 15, since the individual-view clipped images 151 in the outer peripheral part are displayed, the entire range in which the position of the subject 142 that appears blurred changes can be represented by this display. For example, when only the individual-view clipped image $151_0$ and the individual-view clipped image $151_3$ are displayed, only a part of the range in which the position of the subject 142 changes can be expressed. For example, the position of the subject 142 in the individual-view clipped image $151_1$ cannot be expressed. For this reason, it may be difficult to grasp the actual amount of the parallax. On the other hand, by performing display as in the example of Fig. 15, the user can more accurately grasp the magnitude of the parallax.

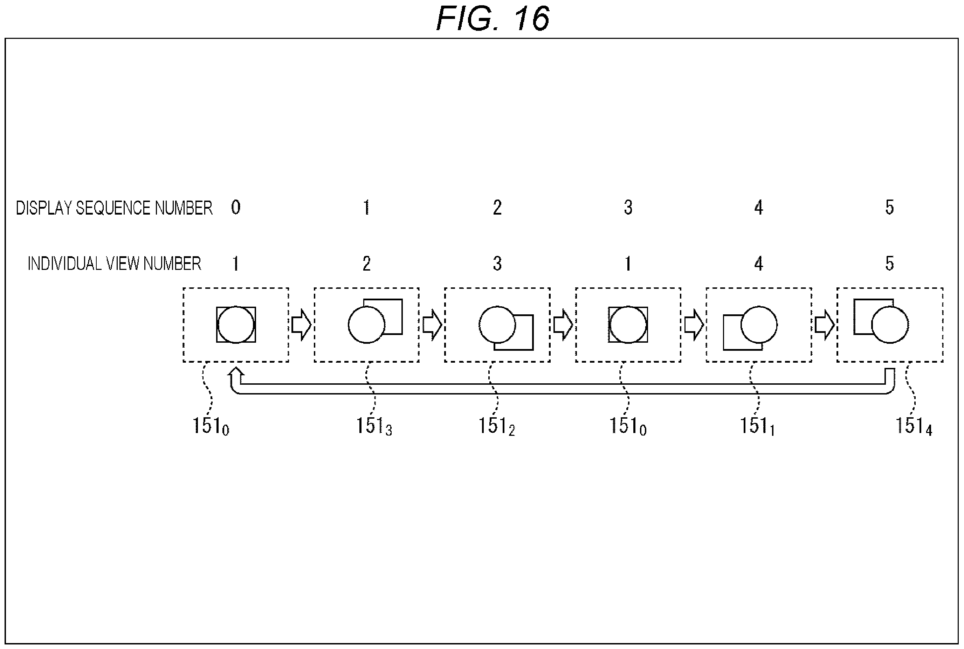

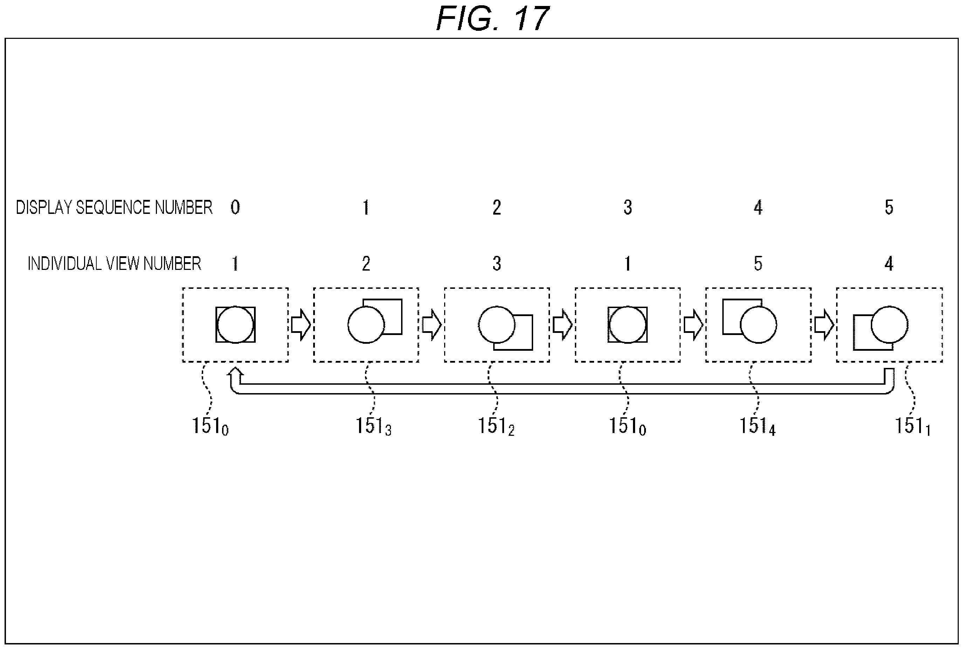

Additionally, one individual-view clipped image 151 may be displayed a plurality of times during one cycle of display of the individual-view clipped images 151 as illustrated in Figs. 10 and 15. For example, the individual-view clipped images 151 may be extracted and displayed in orders illustrated in Figs. 16 and 17. In the examples of Figs. 16 and 17, the individual-view clipped image $151_0$ is displayed twice during one cycle of display of the individual-view clipped images 151.

Additionally, some or all of the plurality of individual-view clipped images 151 may be selected and displayed one by one in a certain order, so that the scanning trajectory is line-symmetric in the relative positional relationship among (viewpoints of) the plurality of individual-view clipped images 151. For example, as illustrated in Fig. 16, the display image generation unit 55 may extract, from the acquired image (or captured image), the individual-view clipped image $151_0$, the individual-view clipped image $151_3$, the individual-view clipped image $151_2$, the individual-view clipped image $151_0$, the individual-view clipped image $151_1$, and the individual-view clipped image $151_4$ in this order, and cause the display unit 61 to display the extracted individual-view clipped images 151.

As a result, the movement of the subject 142 appears line-symmetric in the horizontal direction and the vertical direction in the display image. Accordingly, when the user follows the movement of the subject 142, the movement of the line-of-sight of the user is also line-symmetric, and the continuity of viewpoint movement is improved. For this reason, the user can more easily follow the movement of the subject 142 than in a case where the position of the subject 142 changes randomly. That is, the appearance of the subject 142 becomes smoother.

Additionally, some or all of the plurality of individual-view clipped images 151 may be selected and displayed one by one in a certain order, so that the scanning trajectory is rotationally symmetric in the relative positional relationship among (viewpoints of) the plurality of individual-view clipped images 151. For example, as illustrated in Fig. 17, the display image generation unit 55 may extract, from the acquired image (or captured image), the individual-view clipped image $151_0$, the individual-view clipped image $151_3$, the individual-view clipped image $151_2$, the individual-view clipped image $151_0$, the individual-view clipped image $151_4$, and the individual-view clipped image $151_1$ in this order, and cause the display unit 61 to display the extracted individual-view clipped images 151.

As a result, the movement of the subject 142 appears rotationally symmetric (in this case, point symmetric) in the display image. Accordingly, when the user follows the movement of the subject 142, the movement of the line-of-sight of the user is also rotationally symmetric (point symmetric), and the continuity of viewpoint movement is improved. For this reason, the user can more easily follow the movement of the subject 142 than in a case where the position of the subject 142 changes randomly. That is, the appearance of the subject 142 becomes smoother.

Note that in the case of the examples of Figs. 16 and 17, since all the individual-view clipped images 151 are displayed, the user can notice, for example, an abnormality (e.g., dust attached to lens) of any one of the individual-view optical systems 31.

Additionally, the selection order (display order) of the individual-view clipped images 151 may be different from the above-described example. For example, the start position of one cycle (first individual-view clipped image 151) may be different from the above-described example. That is, in each of the examples of Figs. 10 and 15 to 17, one cycle may be started from a display sequence number other than "0".

Additionally, the pattern of the selection order (display order) of each example described above may be rotated. For example, the display image generation unit 55 may rotate the pattern of the example of Fig. 10 to extract, from the acquired image (or captured image), the individual-view clipped image $151_0$, the individual-view clipped image $151_1$, the individual-view clipped image $151_4$, the individual-view clipped image $151_3$, and the individual-view clipped image $151_2$ in this order, and cause the display unit 61 to display the extracted individual-view clipped images 151. Additionally, for example, the display image generation unit 55 may rotate the pattern of the example of Fig. 16 to extract, from the acquired image (or captured image), the individual-view clipped image $151_0$, the individual-view clipped image $151_2$, the individual-view clipped image $151_1$, the individual-view clipped image $151_0$, the individual-view clipped image $151_4$, and the individual-view clipped image $151_3$ in this order, and cause the display unit 61 to display the extracted individual-view clipped images 151. In this case, too, the movement of the subject 142 appears line-symmetric in the horizontal direction and the vertical direction in the display image. Moreover, for example, the display image generation unit 55 may rotate the pattern of the example of Fig. 17 to extract, from the acquired image (or captured image), the individual-view clipped image $151_0$, the individual-view clipped image $151_2$, the individual-view clipped image $151_1$, the individual-view clipped image $151_0$, the individual-view clipped image $151_3$, and the individual-view clipped image $151_4$ in this order, and cause the display unit 61 to display the extracted individual-view clipped images 151. In this case, the movement of the subject 142 appears rotationally symmetric (point symmetric) in the display image.

Moreover, the pattern of the selection order (display order) of each example described above may be flipped vertically. For example, the display image generation unit 55 may vertically flip the pattern of the example of Fig. 10 to extract, from the acquired image (or captured image), the individual-view clipped image $151_0$, the individual-view clipped image $151_2$, the individual-view clipped image $151_3$, the individual-view clipped image $151_4$, and the individual-view clipped image $151_1$ in this order, and cause the display unit 61 to display the extracted individual-view clipped images 151. Additionally, for example, the display image generation unit 55 may vertically flip the pattern of the example of Fig. 15 to extract, from the acquired image (or captured image), the individual-view clipped image $151_2$, the individual-view clipped image $151_3$, the individual-view clipped image $151_4$, and the individual-view clipped image $151_1$ in this order, and cause the display unit 61 to display the extracted individual-view clipped images 151. Moreover, for example, the display image generation unit 55 may vertically flip the pattern of the example of Fig. 16 to extract, from the acquired image (or the captured image), the individual-view clipped image $151_0$, the individual-view clipped image $151_2$, the individual-view clipped image $151_3$, the individual-view clipped image $151_0$, the individual-view clipped image $151_4$, and the individual-view clipped image $151_1$ in this order, and cause the display unit 61 to display the extracted individual-view clipped images 151. Additionally, for example, the display image generation unit 55 may vertically flip the pattern of the example of Fig. 17 to extract, from the acquired image (or captured image), the individual-view clipped image $151_0$, the individual-view clipped image $151_2$, the individual-view clipped image $151_3$, the individual-view clipped image $151_0$, the individual-view clipped image $151_1$, and the individual-view clipped image $151_4$ in this order, and cause the display unit 61 to display the extracted individual-view clipped images 151.

Additionally, the pattern of the selection order (display order) of each example described above may be flipped horizontally. For example, the display image generation unit 55 may horizontally flip the pattern of the example of Fig. 10 to extract, from the acquired image (or captured image), the individual-view clipped image $151_0$, the individual-view clipped image $151_4$, the individual-view clipped image $151_1$, the individual-view clipped image $151_2$, and the individual-view clipped image $151_3$ in this order, and cause the display unit 61 to display the extracted individual-view clipped images 151. Additionally, for example, the display image generation unit 55 may horizontally flip the pattern of the example of Fig. 15 to extract, from the acquired image (or captured image), the individual-view clipped image $151_4$, the individual-view clipped image $151_1$, the individual-view clipped image $151_2$, and the individual-view clipped image $151_3$ in this order, and cause the display unit 61 to display the extracted individual-view clipped images 151. Moreover, for example, the display image generation unit 55 may laterally flip the pattern of the example of Fig. 16 to extract, from the acquired image (or captured image), the individual-view clipped image $151_0$, the individual-view clipped image $151_4$, the individual-view clipped image $151_1$, the individual-view clipped image $151_0$, the individual-view clipped image $151_2$, and the individual-view clipped image $151_3$ in this order, and cause the display unit 61 to display the extracted individual-view clipped images 151. Additionally, for example, the display image generation unit 55 may laterally flip the pattern of the example of Fig. 17 to extract, from the acquired image (or captured image), the individual-view clipped image $151_0$, the individual-view clipped image $151_4$, the individual-view clipped image $151_1$, the individual-view clipped image $151_0$, the individual-view clipped image $151_3$, and the individual-view clipped image $151_2$ in this order, and cause the display unit 61 to display the extracted individual-view clipped images 151.

It goes without saying that the flipping direction is arbitrary, and may be a direction other than the above-described vertical direction and horizontal direction (i.e., oblique direction).

Moreover, the selection (display) may be performed in the reverse order of the selection order (display order) of each example described above. For example, the display image generation unit 55 may reverse the order of the pattern of the example of Fig. 10 to extract, from the acquired image (or captured image), the individual-view clipped image $151_4$, the individual-view clipped image $151_1$, the individual-view clipped image $151_2$, the individual-view clipped image $151_3$, and the individual-view clipped image $151_0$ in this order, and cause the display unit 61 to display the extracted individual-view clipped images 151. Additionally, for example, the display image generation unit 55 may reverse the order of the pattern of the example of Fig. 15 to extract, from the acquired image (or captured image), the individual-view clipped image $151_4$, the individual-view clipped image $151_1$, the individual-view clipped image $151_2$, and the individual-view clipped image $151_3$ in this order, and cause the display unit 61 to display the extracted individual-view clipped images 151. Moreover, for example, the display image generation unit 55 may reverse the order of the pattern of the example of Fig. 16 to extract, from the acquired image (or captured image), the individual-view clipped image $151_4$, the individual-view clipped image $151_1$, the individual-view clipped image $151_0$, the individual-view clipped image $151_2$, the individual-view clipped image $151_3$, and the individual-view clipped image $151_0$ in this order, and cause the display unit 61 to display the extracted individual-view clipped images 151. Additionally, for example, the display image generation unit 55 may reverse the order of the pattern of the example of Fig. 17 to extract, from the acquired image (or captured image), the individual-view clipped image $151_1$, the individual-view clipped image $151_4$, the individual-view clipped image $151_0$, the individual-view clipped image $151_2$, the individual-view clipped image $151_3$, and the individual-view clipped image $151_0$ in this order, and cause the display unit 61 to display the extracted individual-view clipped images 151.

Additionally, methods such as rotation or reversal of a pattern and reversal of an order as described above may be appropriately combined.

Note that the user or the application may be allowed to designate the selection order (display order) of the above-described individual-view clipped images 151. For example, the user may operate the dial 35 or the button 36 to designate the selection order (display order) of the individual-view clipped images 151. Additionally, for example, an application may designate the selection order (display order) of the individual-view clipped images 151 according to an operation mode or the like of the camera 10. For example, a plurality of candidates for the selection order (display order) of the individual-view clipped images 151 may be prepared in advance, and the user or an application may designate the order to be applied from among the candidates. Additionally, the user or an application may set one cycle in an arbitrary order.


<Display image generation unit>

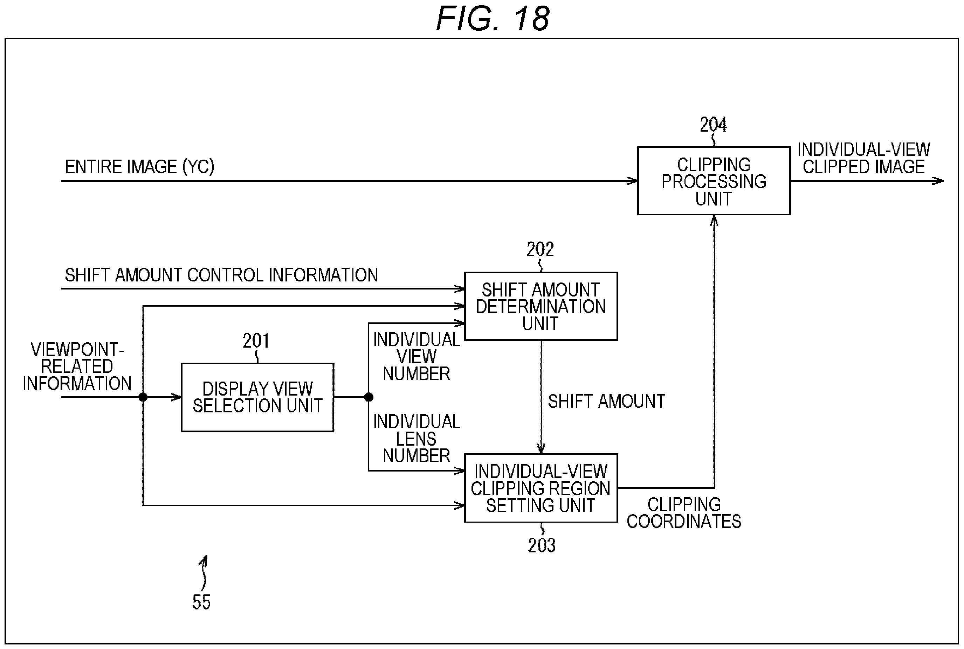

Fig. 18 is a block diagram illustrating a main configuration example of the display image generation unit 55 (Fig. 3). As illustrated in Fig. 18, the display image generation unit 55 includes a display view selection unit 201, a shift amount determination unit 202, an individual-view clipping region setting unit 203, and a clipping processing unit 204.

The display view selection unit 201 performs processing related to selection of an individual-view image. That is, the display view selection unit 201 performs processing related to selection of the individual-view optical system 31. That is, the display view selection unit 201 performs processing related to viewpoint selection.

For example, the display view selection unit 201 can acquire viewpoint-related information (VI or VI') supplied from the region identification unit 56. The viewpoint-related information includes information indicating a region (coordinates) of each individual-view image and identification information of each individual-view image. The identification information may be any information, and may be, for example, an identification number (also referred to as individual view number) for identifying an individual-view image. In the following description, assume that the individual view number is included in viewpoint-related information as the identification information.

On the basis of the viewpoint-related information, the display view selection unit 201 can grasp the number of individual-view images included in an entire image, and the region and the individual view number of each individual-view image. Accordingly, on the basis of the viewpoint-related information, the display view selection unit 201 can select the individual-view image from which the individual-view clipped image 151 to be displayed as the display image is extracted. That is, the display view selection unit 201 can select the individual-view optical system 31 from which the display image is obtained on the basis of the viewpoint-related information. That is, the display view selection unit 201 can select the viewpoint of the display image on the basis of the viewpoint-related information.

For example, the display view selection unit 201 selects the individual-view images (, individual-view optical system 31, or viewpoint) in a predetermined order or in an order designated by the user or an application on the basis of the viewpoint-related information. For example, the display view selection unit 201 may acquire, from the control unit 81, control information indicating designation by the user, an application, or the like, and may select the individual-view image on the basis of the control information. For example, the display view selection unit 201 may acquire control information regarding a switching pattern (selection order), a switching cycle, and the like of the individual-view images from the control unit 81, and select the individual-view image on the basis of the control information.

The display view selection unit 201 supplies the individual view number indicating the selected individual-view image to the shift amount determination unit 202 and the individual-view clipping region setting unit 203.

That is, the display view selection unit 201 causes the display unit to display any one of a plurality of individual-view clipped images viewed from a plurality of individual-view optical systems having optical paths independent from one another while selectively and dynamically switching among the images. That is, the display view selection unit 201 performs display control of the display image.

The shift amount determination unit 202 performs processing related to determination of the shift amount (direction and magnitude) of the individual-view clipping region. For example, the shift amount determination unit 202 can acquire the individual view number supplied from the display view selection unit 201. The individual view number is identification information for designating an individual-view image to be displayed (i.e., individual-view image from which individual-view clipped image 151 is extracted). Additionally, the shift amount determination unit 202 can acquire the viewpoint-related information (VI or VI') supplied from the region identification unit 56. The viewpoint-related information includes information indicating a region (coordinates) of each individual-view image and an individual view number of each individual-view image.

Moreover, the shift amount determination unit 202 can acquire shift amount control information supplied from the control unit 81. The shift amount control information includes information used for determining the shift amount. For example, information indicating a distance (distance between camera 10 and subject) designated by a user, an application, or the like may be included. Additionally, for example, information regarding an operation mode designated by a user, an application, or the like, such as whether the shift amount is variable or fixed, may be included. For example, when accepting designation regarding the shift amount from the user or an application, the control unit 81 generates shift amount control information including the information and supplies the shift amount control information to the shift amount determination unit 202.

The shift amount determination unit 202 grasps the arrangement of the individual-view images on the basis of the supplied viewpoint-related information, and grasps which of the individual-view images has been selected on the basis of the supplied individual view number. As a result, the shift amount determination unit 202 can determine the shift direction of the individual-view clipping region. Additionally, the shift amount determination unit 202 can determine the magnitude of the shift of the individual-view clipping region on the basis of the shift amount control information. For example, the shift amount determination unit 202 can set the magnitude of the shift amount to a magnitude according to the distance designated in the shift amount control information.

As described above, the shift amount determination unit 202 can determine the direction and magnitude of the shift of the individual-view clipping region and generate the shift amount (vector information). The shift amount determination unit 202 can supply the shift amount to the individual-view clipping region setting unit 203.

That is, the shift amount determination unit 202 can control the shift amount (direction and magnitude) of the position of the individual-view clipping region.

The individual-view clipping region setting unit 203 performs processing related to setting of the individual-view clipping region. For example, the individual-view clipping region setting unit 203 can acquire the viewpoint-related information (VI or VI') supplied from the region identification unit 56. The viewpoint-related information includes information indicating a region (coordinates) of each individual-view image and an individual view number of each individual-view image.

Additionally, the individual-view clipping region setting unit 203 can acquire the individual view number supplied from the display view selection unit 201. The individual view number is identification information for designating an individual-view image to be displayed (i.e., individual-view image from which individual-view clipped image 151 is extracted).

Moreover, the individual-view clipping region setting unit 203 can acquire the shift amount (vector information) supplied from the shift amount determination unit 202. This shift amount is information indicating the direction and magnitude of the shift of the individual-view clipping region.

On the basis of the viewpoint-related information, the individual-view clipping region setting unit 203 can identify a region (e.g., center coordinates and range (resolution) of region) of the individual-view image corresponding to the supplied individual view number. Then, the individual-view clipping region setting unit 203 can set an initial value of an image clipping region (e.g., center coordinates and range (resolution) of region) corresponding to the individual-view image. Moreover, the individual-view clipping region setting unit 203 can shift the image clipping region on the basis of the shift amount and update the position of the image clipping region.

The individual-view clipping region setting unit 203 can supply clipping coordinates, which are coordinate information indicating the image clipping region set in this manner, to the clipping processing unit 204.

The clipping processing unit 204 performs processing related to extraction of an individual-view clipped image. For example, the clipping processing unit 204 can acquire an entire image of an acquired image supplied from the camera signal processing unit 54. Additionally, the clipping processing unit 204 can acquire the clipping coordinates supplied from the individual-view clipping region setting unit 203.

The clipping processing unit 204 can extract a region designated by the clipping coordinates from the obtained acquired image (entire image). The clipping processing unit 204 can supply the extracted individual-view clipped image to the display unit 61 as a display image (through-the-lens image).

That is, the clipping processing unit 204 clips an individual-view clipped image from an individual-view image viewed from the same individual-view optical system as the individual-view image selected by the display view selection unit 201.

Note that the clipping processing unit 204 can also extract an individual-view clipped image from a viewpoint image or a composite image. In that case, the clipping processing unit 204 acquires the viewpoint image or the composite image.

Additionally, the display image generation unit 55 can also generate a confirmation image of a captured image or a display image of a stored captured image. In that case, the clipping processing unit 204 can acquire the captured image from the camera signal processing unit 54 or the storage unit 62, and extract an individual-view clipped image from the captured image. The captured image may include an entire image, a viewpoint image, and a composite image generated from the captured image.

With the above configuration, the display image generation unit 55 can dynamically switch the individual-view image to be displayed. As a result, the user can more easily grasp parallax among a plurality of images viewed from different individual-view optical systems by confirming the display image.

Note that the clipping processing unit 204 may clip an individual-view clipping region of an image in RAW format to generate an individual-view clipped image in RAW format. In that case, it is sufficient that color separation processing or YC conversion is performed on the individual-view clipped image in RAW format to generate an individual-view clipped image in YC format, and the individual-view clipped image in YC format is supplied to the display unit 61. For example, the individual-view clipped image in RAW format clipped by the clipping processing unit 204 may be returned to the camera signal processing unit 54 to perform color separation processing or YC conversion.

<Flow of imaging processing>

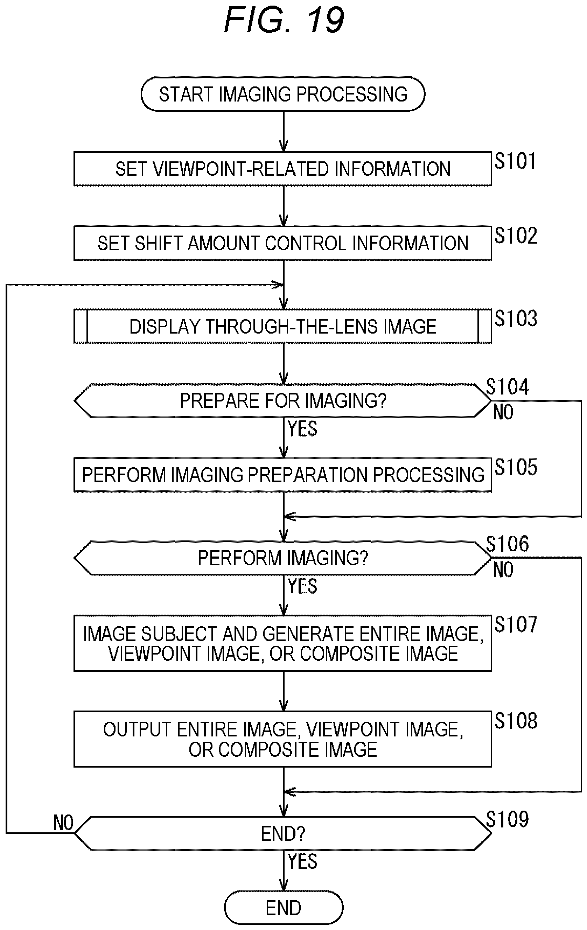

Next, a flow of processing related to image display by such a camera 10 will be described. Note that display of a through-the-lens image will be described below as an example. For example, when the power of the camera 10 is turned on by the user or the like, or the operation mode of the camera 10 is switched to an imaging mode for performing imaging, imaging processing is started. Fig. 19 is a flowchart for describing an example of a flow of the imaging processing.

When the imaging processing is started, in step S101, the display view selection unit 201, the shift amount determination unit 202, and the individual-view clipping region setting unit 203 of the display image generation unit 55 acquire and set the viewpoint-related information supplied from the region identification unit 56.

In step S102, the shift amount determination unit 202 acquires and sets the shift amount control information supplied from the control unit 81.

In step S103, the display image generation unit 55 and the display unit 61 execute through-the-lens image display processing to generate and display a through-the-lens image. Details of the through-the-lens image display processing will be described later.

In step S104, the control unit 81 determines whether or not to prepare for imaging. For example, when control related to imaging, such as control of a focus, a diaphragm, and an imaging mode, is performed by a user, an application, or the like, the control unit 81 determines to perform preparation processing for imaging (also referred to as imaging preparation processing) according to the control. In that case, the processing proceeds to step S105.

In step S105, the control unit 81 appropriately controls each processing unit such as the optical system control unit 84 to perform imaging preparation processing. The imaging preparation processing may be any processing as long as the processing relates to imaging. For example, at least one of adjustment of a focus or a diaphragm, setting of an imaging mode, setting of a flash or the like, setting of image quality, and the like may be included, or processing other than these may be included.

When the processing of step S105 ends, the processing proceeds to step S106. Additionally, if it is determined not to perform the imaging preparation processing in step S104, the processing proceeds to step S106.

In step S106, the control unit 81 determines whether or not to perform imaging. For example, in a case where it is determined that imaging is to be performed by the user pressing a shutter button or the like, the processing proceeds to step S107.

In step S107, the image sensor 51, the region extraction unit 53, the camera signal processing unit 54, and the like image a subject to generate a captured image, and generate an entire image, a viewpoint image, or a composite image from the captured image.

In step S108, the storage unit 62 and the communication unit 64 output the entire image, the viewpoint image, or the composite image generated in step S107. For example, the storage unit 62 stores the image (entire image, viewpoint image, or composite image) in the storage medium 63. Additionally, the communication unit 64 supplies the image (entire image, viewpoint image, or composite image) to a device outside the camera 10. Note that this image may be output after being filed by the filing unit 65.

When the processing of step S108 ends, the processing proceeds to step S109. Alternatively, if it is determined not to perform imaging in step S106, the processing proceeds to step S109.

In step S109, the control unit 81 determines whether or not to end the imaging processing. If it is determined not to end the imaging processing, the processing returns to step S103, and the processing of step S103 and subsequent steps is repeated.

That is, the processing of steps S103 to S109 is executed for each frame. Then, if it is determined to end the imaging processing in step S109, the imaging processing is ended.

<Flow of through-the-lens image display processing>

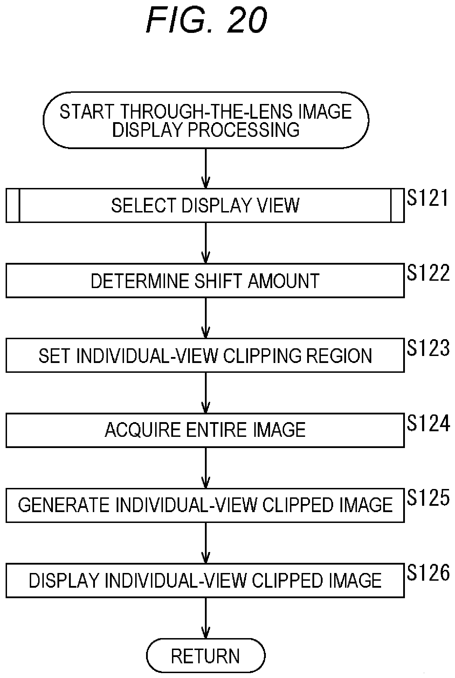

Next, an example of a flow of a through-the-lens image display processing executed in step S103 of Fig. 19 will be described with reference to a flowchart of Fig. 20. Note that here, a case of extracting an individual-view clipped image from an entire image of an acquired image will be described.

When the through-the-lens image display processing is started, the display view selection unit 201 executes display view selection processing in step S121, and selects an individual-view image to be displayed on the basis of viewpoint-related information and the like.

In step S122, the shift amount determination unit 202 determines a shift amount (direction and magnitude) of an individual-view clipping region to be extracted from the individual-view image selected in step S121 on the basis of the viewpoint-related information, shift amount control information, and the like.

In step S123, on the basis of the viewpoint-related information, the shift amount set in step S122, and the like, the individual-view clipping region setting unit 203 sets an individual-view clipping region (clipping coordinates) to be extracted from the individual-view image selected in step S121.

In step S124, the clipping processing unit 204 acquires an entire image of an acquired image generated by the region extraction unit 53.

In step S125, the clipping processing unit 204 clips the individual-view clipping region set in step S123 from the entire image acquired in step S124, and generates an individual-view clipped image.

In step S126, the display unit 61 displays the individual-view clipped image extracted as described above as a through-the-lens image.

When the processing of step S126 ends, the through-the-lens image display processing ends, and the processing returns to Fig. 19.

<Flow of display view selection processing>

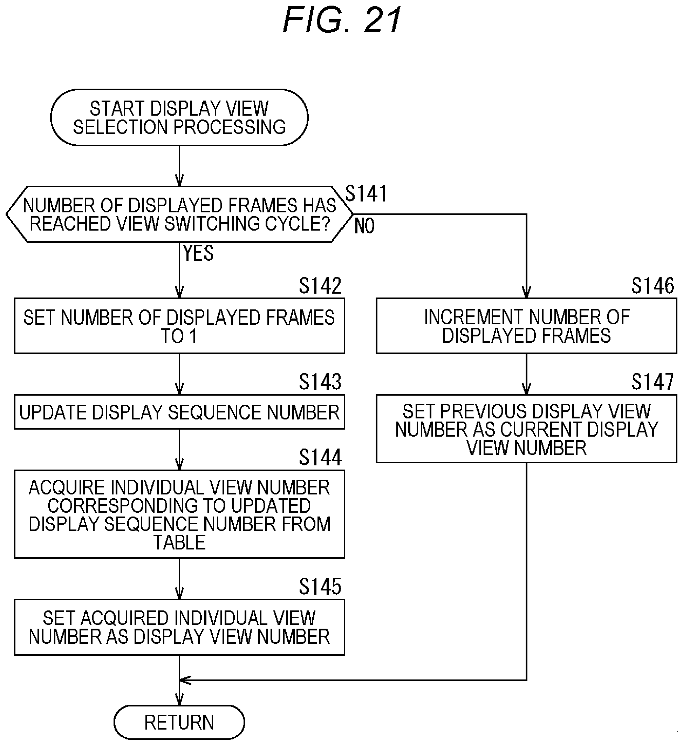

Next, an example of a flow of the display view selection processing executed in step S121 of Fig. 20 will be described with reference to a flowchart of Fig. 21.

When the display view selection processing is started, in step S141, the display view selection unit 201 determines whether or not the number of displayed frames has reached a view switching cycle. Here, the number of displayed frames is a variable indicating how many frames of the same individual-view clipped image have been displayed. Additionally, a view switching cycle is a setting value that designates how many number of frames of the same individual-view clipped image are to be displayed. The view switching cycle may be a predetermined fixed value or may be set by a user, an application, or the like.

When it is determined that the number of displayed frames has reached the view switching cycle, that is, when it is determined that the timing (frame) to switch the individual-view clipped image to be displayed has come, the processing proceeds to step S142.

In step S142, the display view selection unit 201 sets the number of displayed frames (variable) to an initial value (e.g., "1"). Note that this initial value is arbitrary, and may be other than "1", such as "0".

In step S143, the display view selection unit 201 updates the display sequence number. The display sequence number is a number (variable) indicating the display order in a switching pattern of the individual-view clipped image, and is updated as in the following Formula (1).

$$\text{Display sequence number} = (\text{display sequence number} + 1) \bmod \text{number of display sequences}$$

$$\ldots (1)$$

Here, the number of display sequences is the number of individual-view clipped images included in one cycle of a switching pattern of the individual-view clipped image. The display sequence number is a number indicating the order of the current processing target in the sequence of one cycle.

For example, in the case of Fig. 10, one cycle of the switching pattern of the individual-view clipped images 151 includes five individual-view clipped images 151. Accordingly, the number of display sequences in this case is "5", and the display sequence number is one of "0" to "4" (i.e., one of the five values). In the case of the example of Fig. 15, one cycle of the switching pattern of the individual-view clipped images 151 includes four individual-view clipped images 151. Accordingly, the number of display sequences in this case is "4", and the display sequence number is one of "0" to "3" (i.e., one of the four values). In the examples of Figs. 16 and 17, one cycle of the switching pattern of the individual-view clipped images 151 includes six individual-view clipped images 151. Accordingly, the number of display sequences in this case is "6", and the display sequence number is one of "0" to "5" (i.e., one of the six values).

In Formula (1), the function mod indicates a remainder of the division. That is, by the processing in step S143, the value of the number of display sequences is incremented by 1, and when the number of display sequences is reached, the value is returned to "0". That is, for example, in the case of Fig. 10, the display sequence number repeats values of "0" to "4" such as "0" → "1" → "2" → "3" → "4" → "0" → and so on.

In step S144, the display view selection unit 201 acquires the individual view number corresponding to the display sequence number updated by the processing in step S143 from table information. The display view selection unit 201 includes table information indicating one cycle of the switching pattern of the individual-view clipped image. Table information is information indicating which individual-view image (individual-view clipped image) is displayed in which order, and indicates a correspondence between each display sequence number and the individual view number. The display view selection unit 201 identifies the individual view number corresponding to the updated display sequence number on the basis of the table information.

Note that in a case where the switching pattern of the individual-view clipped image is variable, that is, in a case where the pattern to be applied can be set by the user, an application, or the like, the display view selection unit 201 may identify the individual view number on the basis of the table information corresponding to the applied pattern. For example, the display view selection unit 201 may have a plurality of types of table information as candidates in advance, and select table information corresponding to an instruction (designation of pattern by user, application, or the like) from the control unit 81 from among the candidates.

Additionally, on the basis of the information from the control unit 81, the display view selection unit 201 may generate table information corresponding to the applied pattern. For example, the display view selection unit 201 may generate table information on the basis of a reference such as a view having the largest coordinate in the vertical direction, a view having the largest coordinate in the horizontal direction, a view having the smallest coordinate in the vertical direction, or a view having the smallest coordinate in the horizontal direction.

In step S145, the display view selection unit 201 sets the individual view number as a display view number. A display view number is an individual view number indicating an individual-view image to be displayed. That is, the display view selection unit 201 supplies the display view number to the shift amount determination unit 202 and the individual-view clipping region setting unit 203.

When the processing of step S145 ends, the display view selection processing ends, and the processing returns to Fig. 20.

Additionally, if it is determined in step S141 that the number of displayed frames has not reached the view switching cycle, that is, if it is determined that it is not the timing (frame) to switch the individual-view clipped image to be displayed, the processing proceeds to step S146.

In step S146, the display view selection unit 201 increments the number of displayed frames (variable) by "+ 1" without switching (without updating) the individual-view clipped image.

In step S147, the display view selection unit 201 sets the previous (previous frame) display view number as the current display view number. That is, the display view number is not updated. As a result, the display view selection unit 201 supplies the same display view number as that of the previous frame to the shift amount determination unit 202 and the individual-view clipping region setting unit 203.

When the processing of step S147 ends, the display view selection processing ends, and the processing returns to Fig. 20.

By executing each processing as described above, the display image generation unit 55 can dynamically switch the individual-view image to be displayed. As a result, the user can more easily grasp parallax among a plurality of images viewed from different individual-view optical systems by confirming the display image.

Note that in a case where a confirmation image of a captured image or a stored captured image is displayed, processing similar to the above-described through-the-lens image display processing may be performed on the captured image.

<Number of individual views>

Note that as long as there is a plurality of individual-view optical systems 31 (individual views) included in the multi-view optical system 30, the number is not limited to the above-described five views (five individual-view optical systems 31). The number of views may be an odd number or an even number. Additionally, the arrangement pattern (relative positional relationship) of the individual-view optical systems 31 is also arbitrary.

<Seven views>

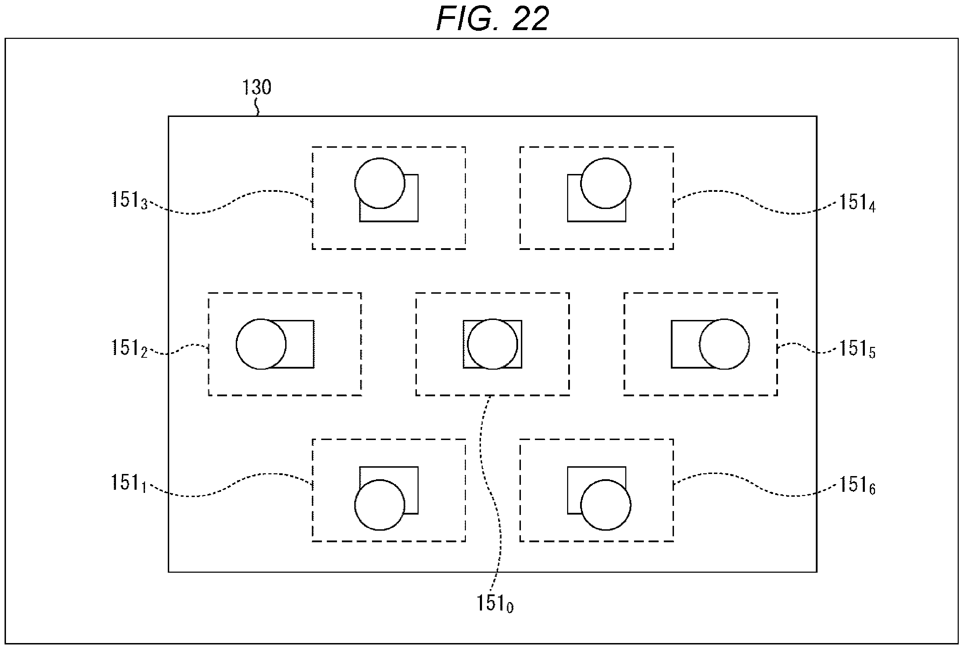

For example, seven individual views (seven individual-view optical systems 31) may be provided. Fig. 22 illustrates an example of an entire image of an acquired image (or captured image) generated by a camera 10 in that case.

As illustrated in Fig. 22, an entire image 130 in this case includes seven subjects 141 and seven subjects 142. That is, the entire image 130 includes seven individual-view images. That is, in the case of this entire image 130, seven types of individual-view clipped images 151 can be extracted, such as individual-view clipped images $151_0$ to $151_6$ illustrated in Fig. 22.

In this case, too, the switching pattern of the individual-view clipped image is arbitrary as in the case of five views. For example, a switching pattern may be used in which every individual-view optical system 31 is selected once. For example, a pattern of switching in the order of the individual-view clipped image $151_0 \rightarrow$ the individual-view clipped image $151_1 \rightarrow$ the individual-view clipped image $151_2 \rightarrow$ the individual-view clipped image $151_3 \rightarrow$ the individual-view clipped image $151_4 \rightarrow$ the individual-view clipped image $151_5 \rightarrow$ the individual-view clipped image $151_6$ ($\rightarrow$ the individual-view clipped image $151_0$) may be set as one cycle.

Alternatively, for example, a switching pattern may be used in which (some or all of) the individual-view clipped images 151 positioned in the outer peripheral part in the relative positional relationship among the individual-view clipped images 151 are selected. For example, a pattern of switching in the order of the individual-view clipped image $151_1 \rightarrow$ the individual-view clipped image $151_2 \rightarrow$ the individual-view clipped image $151_3 \rightarrow$ the individual-view clipped image $151_4 \rightarrow$ the individual-view clipped image $151_5 \rightarrow$ the individual-view clipped image $151_6$ ($\rightarrow$ the individual-view clipped image $151_1$) may be set as one cycle.

Moreover, for example, a switching pattern may be used in which some or all of these individual-view clipped images 151 are selected one by one in a certain order, so that the scanning trajectory is line-symmetric with respect to an arbitrary direction in the relative positional relationship among the individual-view clipped images 151. For example, the scanning trajectory may be line-symmetric in the vertical direction, line-symmetric in the horizontal direction, or line-symmetric in the oblique direction. For example, a pattern of switching in the order of the individual-view clipped image $151_0 \rightarrow$ the individual-view clipped image $151_1 \rightarrow$ the individual-view clipped image $151_2 \rightarrow$ the individual-view clipped image $151_3 \rightarrow$ the individual-view clipped image $151_0 \rightarrow$ the individual-view clipped image $151_4 \rightarrow$ the individual-view clipped image $151_5 \rightarrow$ the individual-view clipped image $151_6 \rightarrow$ ($\rightarrow$ the individual-view clipped image $151_0$) may be set as one cycle.

Alternatively, for example, a switching pattern may be used in which some or all of these individual-view clipped images 151 are selected one by one in a certain order, so that the scanning trajectory is rotationally symmetric (e.g., point symmetric) in the relative positional relationship among the individual-view clipped images 151. For example, a pattern of switching in the order of the individual-view clipped image $151_0 \rightarrow$ the individual-view clipped image $151_1 \rightarrow$ the individual-view clipped image $151_2 \rightarrow$ the individual-view clipped image $151_3 \rightarrow$ the individual-view clipped image $151_0 \rightarrow$ the individual-view clipped image $151_6 \rightarrow$ the individual-view clipped image $151_5 \rightarrow$ the individual-view clipped image $151_4 \rightarrow$ ($\rightarrow$ the individual-view clipped image $151_0$) may be set as one cycle. Additionally, for example, a pattern of switching in the order of the individual-view clipped image $151_0 \rightarrow$ the individual-view clipped image $151_1 \rightarrow$ the individual-view clipped image $151_2 \rightarrow$ the individual-view clipped image $151_0 \rightarrow$ the individual-view clipped image $151_3 \rightarrow$ the individual-view clipped image $151_4 \rightarrow$ the individual-view clipped image $151_0 \rightarrow$ the individual-view clipped image $151_5 \rightarrow$ the individual-view clipped image $151_6$ ($\rightarrow$ the individual-view clipped image $151_0$) may be set as one cycle.

Moreover, for example, a switching pattern may have a minimum configuration in which some or all of these individual-view clipped images 151 are selected so that the maximum parallax in the vertical direction and the maximum parallax in the horizontal direction can be grasped. For example, a pattern of switching in the order of the individual-view clipped image $151_1 \rightarrow$ the individual-view clipped image $151_2 \rightarrow$ the individual-view clipped image $151_4 \rightarrow$ the individual-view clipped image $151_5$ ($\rightarrow$ the individual-view clipped image $151_1$) may be set as one cycle. That is, among the plurality of individual-view clipped images, a plurality of images in which the parallax between the individual-view clipped images is larger than the parallax between the other images may be selected and the selected plurality of images may be selected and displayed one by one.

As in the case of five views, the pattern of the selection order (display order) of each example described above may be rotated. Additionally, the pattern of the selection order (display order) of each example described above may be flipped in an arbitrary direction (vertical direction, horizontal direction, or oblique direction). Moreover, the selection (display) may be performed in the reverse order of the selection order (display order) of each example described above. Additionally, methods such as rotation or reversal of a pattern and reversal of an order as described above may be appropriately combined. Then, the pattern of each example described above may be designated by the user or an application.

<Nine views>

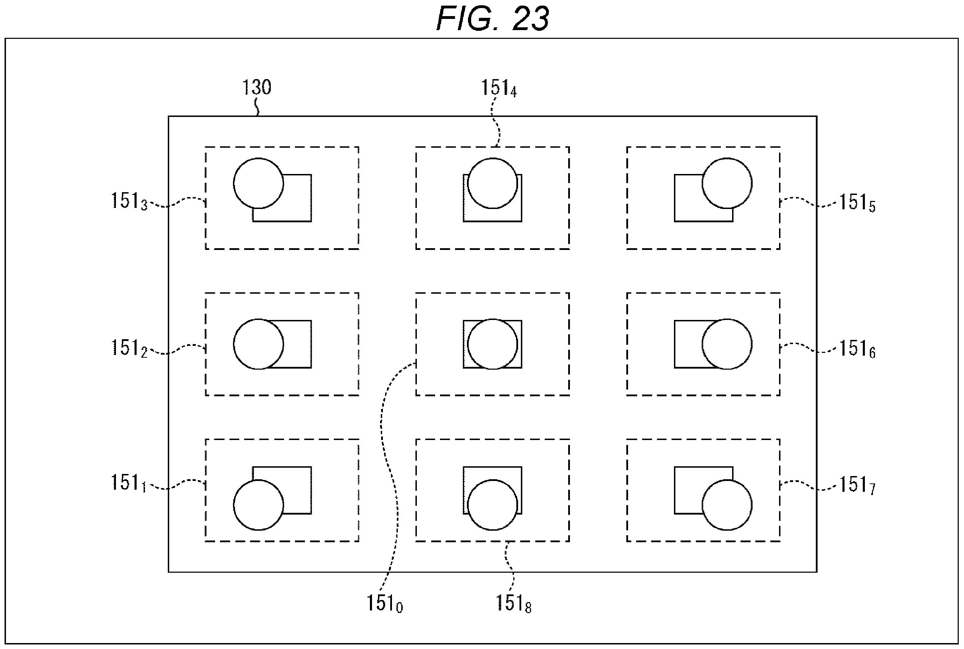

For example, nine individual views (nine individual-view optical systems 31) may be provided. Fig. 23 illustrates an example of an entire image of an acquired image (or captured image) generated by a camera 10 in that case.

As illustrated in Fig. 23, an entire image 130 in this case includes nine subjects 141 and nine subjects 142. That is, the entire image 130 includes nine individual-view images. That is, in the case of this entire image 130, nine types of individual-view clipped images 151 can be extracted, such as individual-view clipped images $151_0$ to $151_5$ illustrated in Fig. 23.

In this case, too, the switching pattern of the individual-view clipped image is arbitrary as in the case of five views. For example, a switching pattern may be used in which every individual-view optical system 31 is selected once. For example, a pattern of switching in the order of the individual-view clipped image $151_0 \rightarrow$ the individual-view clipped image $151_1 \rightarrow$ the individual-view clipped image $151_2 \rightarrow$ the individual-view clipped image $151_3 \rightarrow$ the individual-view clipped image $151_4 \rightarrow$ the individual-view clipped image $151_5 \rightarrow$ the individual-view clipped image $151_6 \rightarrow$ the individual-view clipped image $151_7 \rightarrow$ the individual-view clipped image $151_5$ ($\rightarrow$ the individual-view clipped image $151_0$) may be set as one cycle.

Alternatively, for example, a switching pattern may be used in which (some or all of) the individual-view clipped images 151 positioned in the outer peripheral part in the relative positional relationship among the individual-view clipped images 151 are selected. For example, a pattern of switching in the order of the individual-view clipped image $151_1 \rightarrow$ the individual-view clipped image $151_2 \rightarrow$ the individual-view clipped image $151_3 \rightarrow$ the individual-view clipped image $151_4 \rightarrow$ the individual-view clipped image $151_5 \rightarrow$ the individual-view clipped image $151_6 \rightarrow$ the individual-view clipped image $151_7 \rightarrow$ the individual-view clipped image $151_5$ ($\rightarrow$ the individual-view clipped image $151_1$) may be set as one cycle.

Moreover, for example, a switching pattern may be used in which some or all of these individual-view clipped images 151 are selected one by one in a certain order, so that the scanning trajectory is line-symmetric with respect to an arbitrary direction in the relative positional relationship among the individual-view clipped images 151. For example, the scanning trajectory may be line-symmetric in the vertical direction, line-symmetric in the horizontal direction, or line-symmetric in the oblique direction. For example, a pattern of switching in the order of the individual-view clipped image $151_0 \rightarrow$ the individual-view clipped image $151_5 \rightarrow$ the individual-view clipped image $151_1 \rightarrow$ the individual-view clipped image $151_2 \rightarrow$ the individual-view clipped image $151_3 \rightarrow$ the individual-view clipped image $151_4 \rightarrow$ the individual-view clipped image $151_0 \rightarrow$ the individual-view clipped image $151_4 \rightarrow$ the individual-view clipped image $151_5 \rightarrow$ the individual-view clipped image $151_6 \rightarrow$ the individual-view clipped image $151_7 \rightarrow$ the individual-view clipped image $151_8$ ($\rightarrow$ the individual-view clipped image $151_0$) may be set as one cycle.

Alternatively, for example, a switching pattern may be used in which some or all of these individual-view clipped images 151 are selected one by one in a certain order, so that the scanning trajectory is rotationally symmetric (e.g., point symmetric) in the relative positional relationship among the individual-view clipped images 151. For example, a pattern of switching in the order of the individual-view clipped image $151_0 \rightarrow$ the individual-view clipped image $151_5 \rightarrow$ the individual-view clipped image $151_1 \rightarrow$ the individual-view clipped image $151_2 \rightarrow$ the individual-view clipped image $151_3 \rightarrow$ the individual-view clipped image $151_4 \rightarrow$ the individual-view clipped image $151_0 \rightarrow$ the individual-view clipped image $151_8 \rightarrow$ the individual-view clipped image $151_7 \rightarrow$ the individual-view clipped image $151_6 \rightarrow$ the individual-view clipped image $151_5 \rightarrow$ the individual-view clipped image $151_4$ ($\rightarrow$ the individual-view clipped image $151_0$) may be set as one cycle. Additionally, for example, a pattern of switching in the order of the individual-view clipped image $151_0 \rightarrow$ the individual-view clipped image $151_1 \rightarrow$ the individual-view clipped image $151_2 \rightarrow$ the individual-view clipped image $151_0 \rightarrow$ the individual-view clipped image $151_3 \rightarrow$ the individual-view clipped image $151_4 \rightarrow$ the individual-view clipped image $151_0 \rightarrow$ the individual-view clipped image $151_5 \rightarrow$ the individual-view clipped image $151_6 \rightarrow$ the individual-view clipped image $151_0 \rightarrow$ the individual-view clipped image $151_7 \rightarrow$ the individual-view clipped image $151_5$ ($\rightarrow$ the individual-view clipped image $151_0$) may be set as one cycle.

Moreover, for example, a switching pattern may be used in which some or all of these individual-view clipped images 151 are selected so that the maximum parallax in the vertical direction and the maximum parallax in the horizontal direction can be grasped. For example, a pattern of switching in the order of the individual-view clipped image $151_1 \rightarrow$

the individual-view clipped image $151_3 \rightarrow$ the individual-view clipped image $151_5 \rightarrow$ the individual-view clipped image $151_7$ ($\rightarrow$ the individual-view clipped image $151_1$) may be set as one cycle.

Moreover, for example, a switching pattern may have a figure-8-shape in which some or all of these individual-view clipped images 151 are selected so that the maximum parallax in the vertical direction and the maximum parallax in the horizontal direction can be grasped. For example, a pattern of switching in the order of the individual-view clipped image $151_1 \rightarrow$ the individual-view clipped image $151_3 \rightarrow$ the individual-view clipped image $151_7 \rightarrow$ the individual-view clipped image $151_5$ ($\rightarrow$ the individual-view clipped image $151_1$) may be set as one cycle.

Moreover, for example, a switching pattern may have a minimum configuration in which some or all of these individual-view clipped images 151 are selected so that the maximum parallax in the vertical direction and the maximum parallax in the horizontal direction can be grasped. For example, a pattern of switching in the order of the individual-view clipped image $151_1 \rightarrow$ the individual-view clipped image $151_5$ ($\rightarrow$ the individual-view clipped image $151_1$) may be set as one cycle.

As in the case of five views, the pattern of the selection order (display order) of each example described above may be rotated. Additionally, the pattern of the selection order (display order) of each example described above may be flipped in an arbitrary direction (vertical direction, horizontal direction, or oblique direction). Moreover, the selection (display) may be performed in the reverse order of the selection order (display order) of each example described above. Additionally, methods such as rotation or reversal of a pattern and reversal of an order as described above may be appropriately combined. Then, the pattern of each example described above may be designated by the user or an application.

<2. Second embodiment>

<Camera system>

In the first embodiment, the present technology has been described by taking the camera 10 including the multi-view optical system 30 as an example, but the present technology can also be applied to other configurations. For example, an optical system including the multi-view optical system 30 may be replaceable. That is, the multi-view optical system 30 may be configured to be detachable from the camera 10.

<Appearance of camera system>

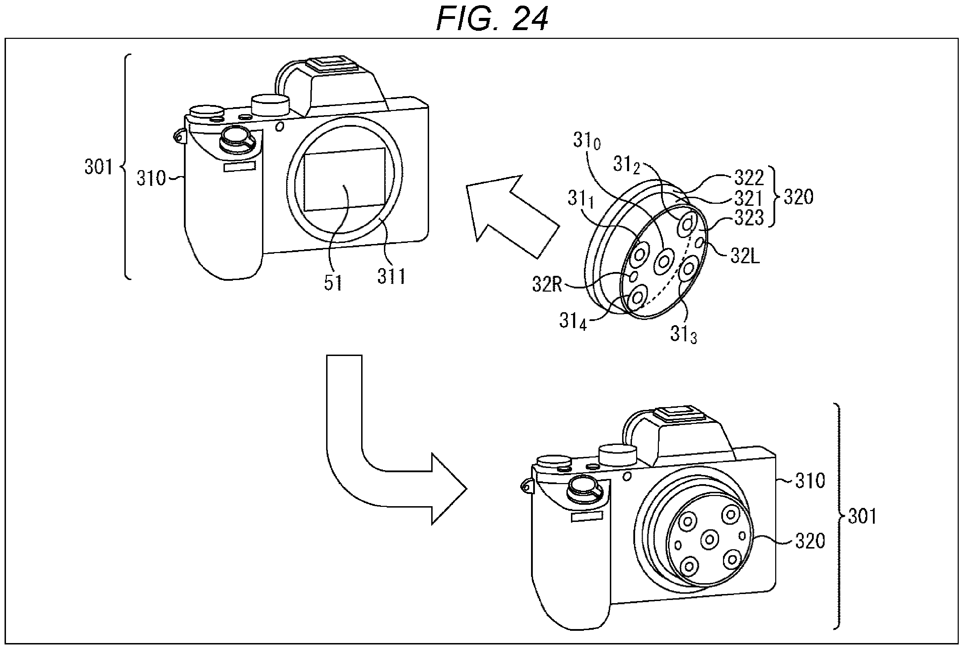

Fig. 24 is a perspective view illustrating a configuration example of an embodiment of a camera system to which the present technology is applied. A camera system 301 illustrated in Fig. 24 includes a camera body 310 and a multi-view interchangeable lens 320 (lens unit). In a state where the multi-view interchangeable lens 320 is attached to the camera body 310, the camera system 301 has a configuration similar to that of the camera 10, and basically performs similar processing. That is, the camera system 301 functions as an imaging device that images a subject and generates image data of a captured image, similar to the camera 10.

The multi-view interchangeable lens 320 is detachable from the camera body 310. That is, the camera body 310 includes a camera mount 311, and (a lens mount 322 of) the multi-view interchangeable lens 320 is attached to the camera mount 311, whereby the multi-view interchangeable lens 320 is attached to the camera body 310. Note that a general interchangeable lens other than the multi-view interchangeable lens 320 may be detachably attached to the camera body 310.

The camera body 310 incorporates an image sensor 51. The image sensor 51 receives light beams condensed by the multi-view interchangeable lens 320 and other interchangeable lenses mounted on (the camera mount 311 of) the camera body 310 and performs photoelectric conversion to image a subject.

The multi-view interchangeable lens 320 includes a lens barrel 321 and the lens mount 322. Additionally, the multi-view interchangeable lens 320 includes a plurality of, such as five, individual-view optical systems $31_0$, $31_1$, $31_2$, $31_3$, and $31_4$.

As in the case of the camera 10, the plurality of individual-view optical systems 31 in this case is configured such that optical paths of light passing through the systems are independent from one another. That is, light having passed through the individual-view optical systems 31 is emitted on different positions on a light receiving surface (e.g., effective pixel region) of the image sensor 51 without being incident on other individual-view optical systems 31. At least the optical axes of the individual-view optical systems 31 are located at different positions on the light receiving surface of the image sensor 51, and at least a part of the light having passed through the individual-view optical systems 31 is emitted on different positions on the light receiving surface of the image sensor 51.

Accordingly, similarly to the case of the camera 10, in a captured image (entire image output by image sensor 51) generated by the image sensor 51, images of the subject formed through the individual-view optical systems 31 are formed at different positions. In other words, from the captured image, captured images (also referred to as viewpoint images) viewed from the individual-view optical systems 31 are obtained. That is, a plurality of viewpoint images can be obtained by mounting the multi-view interchangeable lens 320 on the camera body 310 and imaging the subject.

The lens barrel 321 has a substantially cylindrical shape, and the lens mount 322 is formed on one bottom surface side of the cylindrical shape. The lens mount 322 is attached to the camera mount 311 of the camera body 310 when the multi-view interchangeable lens 320 is attached to the camera body 310.

The five individual-view optical systems 31 are provided in the multi-view interchangeable lens 320 such that on a two-dimensional plane orthogonal to the optical axis of the lens barrel (parallel to light receiving surface (imaging surface) of image sensor 51), the individual-view optical system $31_0$ as the center (center of gravity) is surrounded by the other four individual-view optical systems $31_1$ to $31_4$ arranged so as to form vertices of a rectangle. It goes without saying that the arrangement illustrated in Fig. 24 is an example, and the positional relationship of the individual-view optical systems 31 is arbitrary as long as the optical paths are independent from one another.

<Exemplary electrical configuration of camera system>

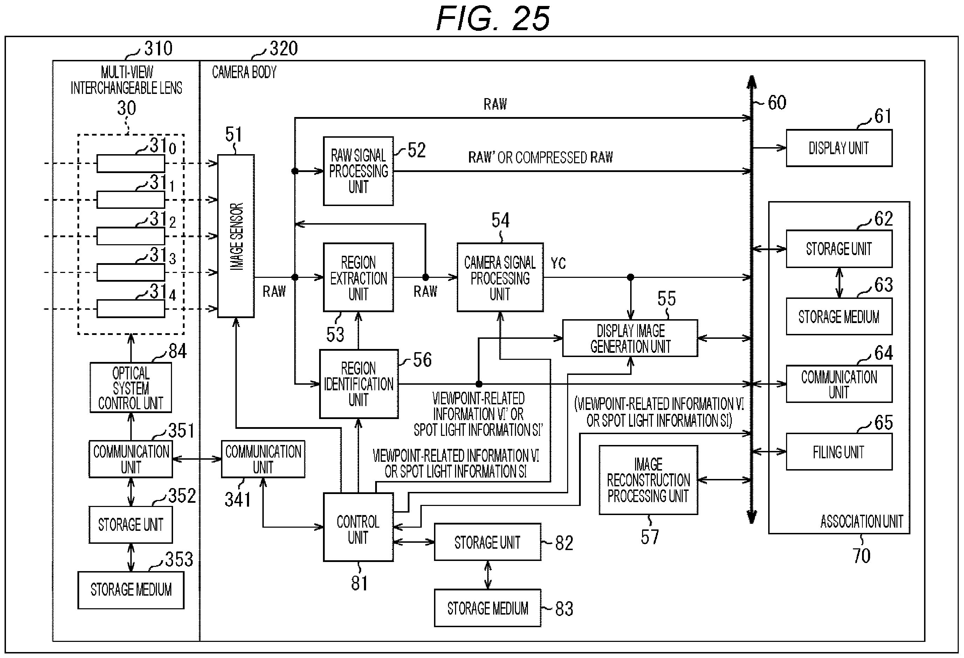

Fig. 25 is a block diagram illustrating an exemplary electrical configuration of the camera system 301 in Fig. 24.

<Camera body>

In the camera system 301, the camera body 310 includes the image sensor 51, a RAW signal processing unit 52, a region extraction unit 53, a camera signal processing unit 54, a display image generation unit 55, a region identification unit 56, an image reconstruction processing unit 57, a bus 60, a display unit 61, a storage unit 62, a communication unit 64, a filing unit 65, a control unit 81, and a storage unit 82. That is, the camera body 310 has the configuration of the camera 10 other than a multi-view optical system 30 and an optical system control unit 84 provided in the part of the lens barrel 20.

Note that the camera body 310 includes a communication unit 341 in addition to the above-described configuration. The communication unit 341 is a processing unit that communicates with (a communication unit 351 of) the multi-view interchangeable lens 320 correctly attached to the camera body 310 and exchanges information, for example. The communication unit 341 can communicate with the multi-view interchangeable lens 320 by an arbitrary communication method. The communication may be wired communication or wireless communication.

For example, the communication unit 341 performs communication under the control of the control unit 81, and acquires information supplied from the multi-view interchangeable lens 320. Additionally, for example, the communication unit 341 performs communication under the control of the control unit 81 to supply information supplied from the control unit 81 to the multi-view interchangeable lens 320. The information to be exchanged with the multi-view interchangeable lens 320 is arbitrary. For example, the information may be data or control information such as a command or a control parameter.

<Multi-view interchangeable lens>

In the camera system 301, the multi-view interchangeable lens 320 includes the communication unit 351 and a storage unit 352 in addition to the multi-view optical system 30 and the optical system control unit 84. The communication unit 351 communicates with the communication unit 341 in the multi-view interchangeable lens 320 correctly attached to the camera body 310. This communication enables exchange of information between the camera body 310 and the multi-view interchangeable lens 320. The communication method of the communication unit 351 is arbitrary, and may be wired communication or wireless communication. Additionally, the information exchanged through this communication may be data or control information such as a command or a control parameter.

For example, the communication unit 351 acquires control information transmitted from the camera body 310 through the communication unit 341. The communication unit 351 supplies the information acquired in this manner to the optical system control unit 84 as necessary, and can use the information for control of the multi-view optical system 30.

Additionally, the communication unit 351 can supply the acquired information to the storage unit 352 and cause the storage unit 352 to store the information in a storage medium 353. Additionally, the communication unit 351 can read information stored in the storage medium 353 through the storage unit 352 and transmit the read information to the camera body 310 (communication unit 341).

Note that the storage medium 353 may be a ROM or a rewritable memory such as a RAM or a flash memory. In the case of a rewritable memory, the storage medium 353 can store arbitrary information.

<Storage of viewpoint-related information 1>

In the camera system 301 having such a configuration, the storage location of viewpoint-related information corresponding to the multi-view interchangeable lens 320 (i.e., multi-view optical system 30) is arbitrary. For example, the viewpoint-related information may be stored in the storage medium 353 of the multi-view interchangeable lens 320. Then, for example, the control unit 81 of the camera body 310 may access the storage unit 352 through the communication unit 351 and the communication unit 341 to read the viewpoint-related information from the storage medium 353. Then, the viewpoint-related information may be set in the region identification unit 56 through the control unit 81, and further set in the display image generation unit 55.

For example, such processing may be performed at any timing or with any trigger before imaging, such as when the multi-view interchangeable lens 320 is correctly attached to the camera body 310, when the camera system 301 is powered on, or when a drive mode of the camera system 301 transitions to an imaging mode in which imaging of a subject can be performed.

In this way, the camera body 310 can perform image processing using a viewpoint image by using the viewpoint-related information corresponding to the multi-view interchangeable lens 320 (i.e., multi-view optical system 30). That is, the display image generation unit 55 can correctly select an individual-view image and appropriately set the shift amount of an individual-view clipping region according to the multi-view interchangeable lens 320 mounted on the camera body 310. That is, in the case of the camera system 301, too, similarly to the case of the camera 10, the display image generation unit 55 can dynamically switch the individual-view image to be displayed. As a result, the camera 500 can perform display similar to the case of the camera 10. Accordingly, the user can more easily grasp parallax among a plurality of images viewed from different individual-view optical systems by confirming the display image.

<Storage of viewpoint-related information 2>

Alternatively, the control unit 81 may supply viewpoint-related information of the multi-view interchangeable lens 320 acquired from the multi-view interchangeable lens 320 to the storage unit 82 together with identification information (hereinafter referred to as ID) of the multi-view interchangeable lens 320 to store. In that case, the storage unit 82 stores the supplied identification information and viewpoint-related information in the storage medium 83 in association with each other. That is, the viewpoint-related information and the ID of the multi-view interchangeable lens 320 can be managed in the camera body 310. Accordingly, the camera body 310 can manage viewpoint-related information of a plurality of multi-view interchangeable lenses 320.

As a result, from the next time, by acquiring the ID of the multi-view interchangeable lens 320, the control unit 81 can read viewpoint-related information corresponding to the ID from the storage unit 82 (storage medium 83). That is, the control unit 81 can easily acquire the viewpoint-related information corresponding to the multi-view interchangeable lens 320.

<Storage of viewpoint-related information 3>

Additionally, the storage medium 83 may store viewpoint-related information of a plurality of multi-view interchangeable lenses 320 in association with the ID of the multi-view interchangeable lenses 320 in advance. That is, in this case, the camera body 310 manages the viewpoint-related information of the plurality of multi-view interchangeable lenses 320 in advance.

As a result, by using the ID of the multi-view interchangeable lens 320 correctly attached to the camera body 310, the control unit 81 can easily read the viewpoint-related information corresponding to the ID from the storage unit 82 (storage medium 83).

<3. Third embodiment>

<Plurality of image sensors>

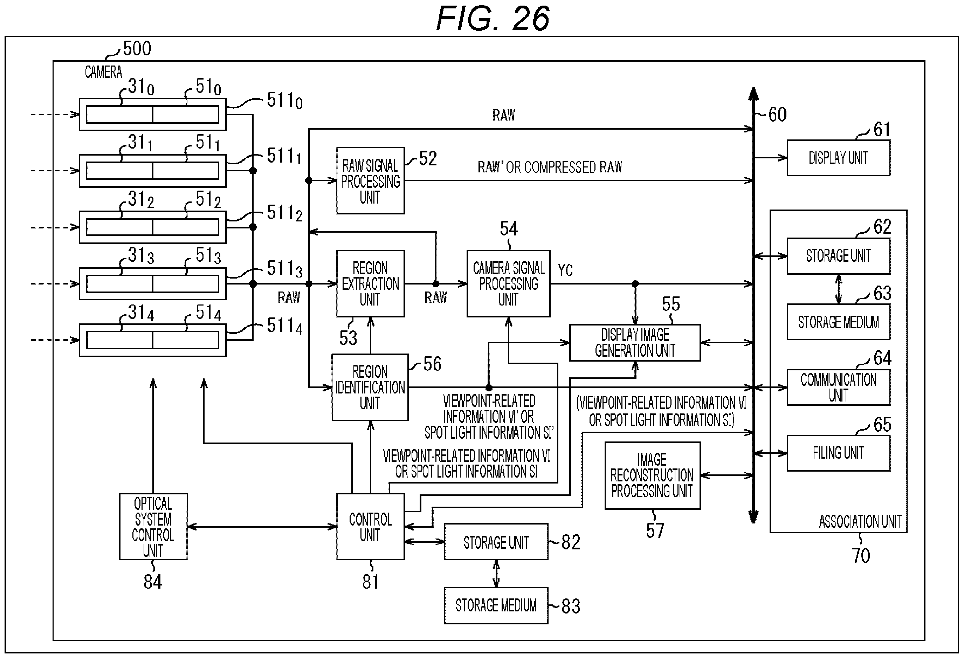

Note that while it has been described in the above description that one image sensor 51 receives light having passed through a plurality of individual-view optical systems 31 and performs photoelectric conversion to generate a captured image, the present invention is not limited thereto, and different image sensors may receive light having passed through the individual-view optical systems 31. A configuration example in that case is illustrated in Fig. 26.

In Fig. 26, a camera 500 is an embodiment of an imaging device to which the present technology is applied. The camera 500 is basically a device similar to the camera 10, has a configuration similar to that of the camera 10, and performs similar processing. Note, however, that the camera 500 includes individual-view imaging units $511_0$ to $511_4$ instead of the multi-view optical system 30 and the image sensor 51 of the camera 10. The individual-view imaging unit $511_0$ includes an individual-view optical system $31_0$ and an image sensor $51_0$. The individual-view imaging unit $511_1$ includes an individual-view optical system $31_1$ and an image sensor $51_1$. The individual-view imaging unit $511_2$ includes an individual-view optical system $31_2$ and an image sensor $51_2$. The individual-view imaging unit $511_3$ includes an

individual-view optical system $31_3$ and an image sensor $51_3$. The individual-view imaging unit $511_4$ includes an individual-view optical system $31_4$ and an image sensor $51_4$. Note that hereinafter, the individual-view imaging units $511_0$ to $511_4$ will be referred to as an individual-view imaging unit 511 in a case where it is not necessary to distinguish among the individual-view imaging units for explanation.

That is, the camera 500 includes a plurality of individual-view imaging units 511. Light having passed through the individual-view optical system 31 of each of the individual-view imaging units 511 is incident on the image sensor 51 of the individual-view imaging unit 511, photoelectrically converted, and a captured image is generated. That is, each of the individual-view imaging units 511 generates a captured image of an individual-view image. The captured image (individual-view image) generated by the image sensor 51 of each individual-view imaging unit 511 is supplied to a RAW signal processing unit 52, a region extraction unit 53, a region identification unit 56, a bus 60, and the like, similarly to the case of Fig. 3.

Additionally, in this case, an optical system control unit 84 controls a lens group, a diaphragm, and the like of the individual-view optical system 31 of each individual-view imaging unit 511, similarly to the case of Fig. 3. Additionally, the control unit 81 causes (the image sensor 51 of) the individual-view imaging unit 511 to image the subject.

In such a configuration, the camera signal processing unit 54 supplies the individual-view image to a display image generation unit 55. The display image generation unit 55 generates a display image from the individual-view image. In this case, too, the display image generation unit 55 dynamically switches the individual-view image to be used as the display image. As a result, the camera 500 can perform display similar to the case of the camera 10. Accordingly, the user can more easily grasp parallax among a plurality of images viewed from different individual-view optical systems by confirming the display image.

<Display image generation unit>

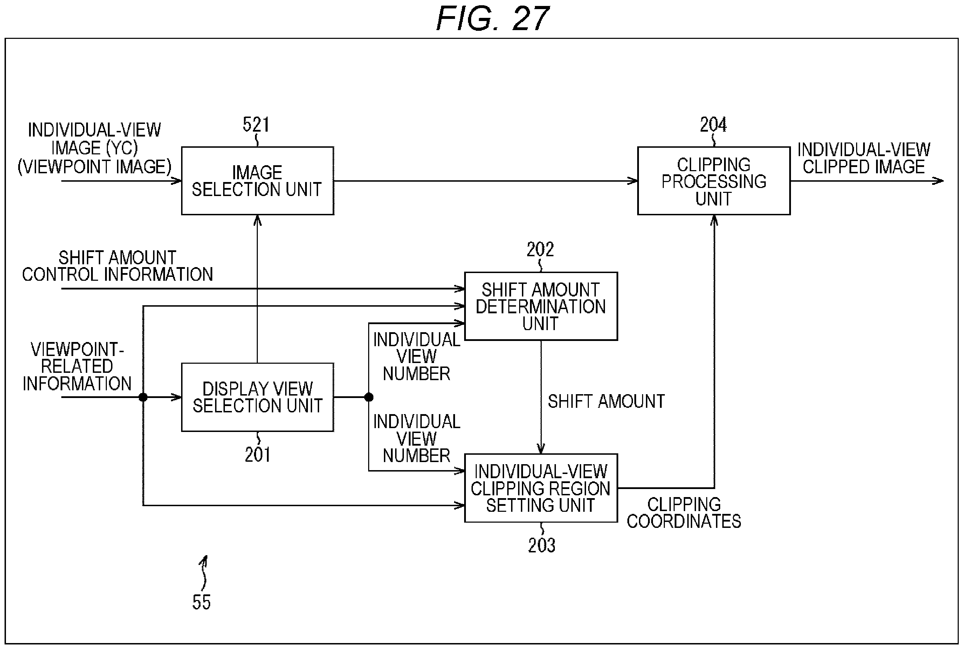

Fig. 27 is a block diagram illustrating a main configuration example of the display image generation unit 55 in this case. As illustrated in Fig. 27, in this case, the display image generation unit 55 includes an image selection unit 521 in addition to the configuration in the case of the camera 10 illustrated in Fig. 18.

The image selection unit 521 acquires and holds each individual-view image (captured image generated in each individual-view imaging unit 511) supplied from the camera signal processing unit 54. Then, when acquiring an individual view number (individual view number indicating individual-view image selected by display view selection unit 201) supplied from a display view selection unit 201, the image selection unit 521 supplies the individual-view image corresponding to the individual view number to a clipping processing unit 204.

Note that in this case, the display view selection unit 201 supplies the individual view number of the selected individual-view image to a shift amount determination unit 202, an individual-view clipping region setting unit 203, and the image selection unit 521.

When acquiring the individual-view image supplied from the image selection unit 521, the clipping processing unit 204 extracts an individual-view clipping region indicated by clipping coordinates supplied from the individual-view clipping region setting unit 203 from the individual-view image. Note that in this case, the clipping processing unit 204 converts the coordinates in the individual-view image and the coordinates in the entire image into either one, and appropriately extracts the image. The clipping processing unit 204 supplies the clipped individual-view clipped image to the display unit 61 and causes the display unit 61 to display the image.

<Flow of through-the-lens image display processing>

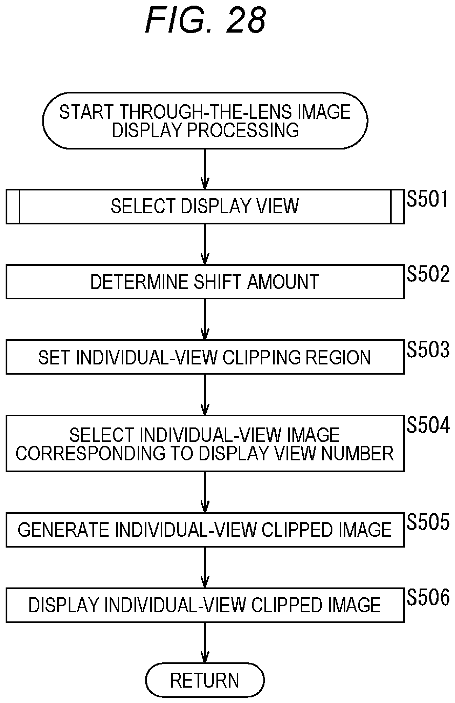

An example of a flow of through-the-lens image display processing in this case will be described with reference to a flowchart of Fig. 28. When the through-the-lens image display processing is started, the processing of steps S501 to S503 is executed similarly to the processing of steps S121 to S123 of Fig. 20.

In step S504, the image selection unit 521 selects an individual-view image corresponding to the individual view number (display view number) indicating the individual-view image selected by the display view selection processing in step S501 (Fig. 21).

In step S505, the clipping processing unit 204 extracts the individual-view clipping region set in step S503 from the individual-view image selected in step S504, and generates an individual-view clipped image.

The processing of step S506 is performed similarly to the processing of step S126 (Fig. 20). When the processing of step S506 ends, the processing returns to Fig. 19.

As a result, the display image generation unit 55 can dynamically switch the individual-view image to be used as the display image. As a result, the display unit 61 can perform display similar to the case of the camera 10. Accordingly, the user can more easily grasp parallax among a plurality of images viewed from different individual-view optical systems by confirming the display image.

It goes without saying that in this case, too, the present technology can be applied to display of a confirmation image of a captured image and display of a stored captured image, similarly to the display of the through-the-lens image described above. Note that in a case where a confirmation image of a captured image or a stored captured image is displayed, processing similar to the above-described through-the-lens image display processing may be performed on the captured image.

Additionally, as in the case of the multi-view optical system 30, the number of the individual-view imaging units 511 (number of views) is arbitrary, and may be an odd number or an even number.

<Drive control of individual-view imaging unit >

Additionally, in the case of the camera 500, it is possible to individually control driving of each of the individual-view imaging units 511. Hence, for example, when displaying a through-the-lens image, the individual-view imaging unit 511 to be driven may be controlled (selected) to select the individual-view image. In other words, driving of the individual-view imaging unit 511 that generates the individual-view image that is not selected as the display image may be stopped (i.e., generation of individual-view image thereof may be omitted). Additionally, at that time, a control unit 81 may stop the control of the diaphragm and the focus of the individual-view imaging unit 511 whose driving is stopped. Moreover, the control unit 81 may stop the control of the white balance gain for the captured image obtained by the individual-view imaging unit 511 whose driving is stopped. As a result, less individual-view imaging units 511 are driven, and an increase in power consumption can be curbed.

<Display image generation unit>

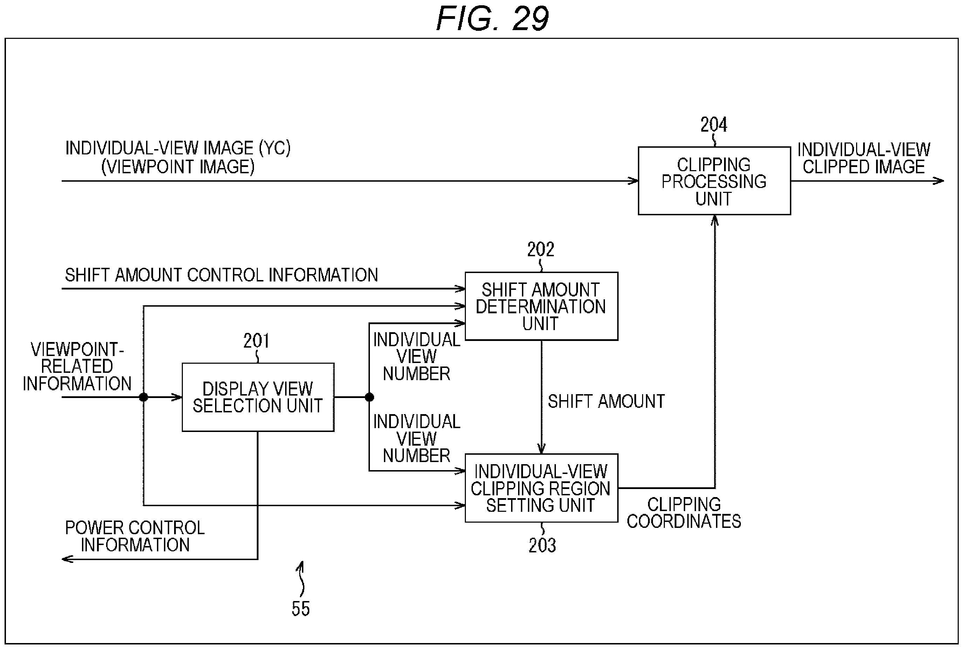

Fig. 29 is a block diagram illustrating a main configuration example of the display image generation unit 55 in this case. As illustrated in Fig. 29, in this case, the display image generation unit 55 has a configuration similar to that of the camera 10 illustrated in Fig. 18.

Note, however, that the display view selection unit 201 in this case supplies the individual view number of the selected individual-view image to the control unit 81 as power control information. The control unit 81 controls the optical system control unit 84 on the basis of the power control information, and stops driving of the individual-view imaging unit 511 corresponding to the individual-view image not selected by the display view selection unit 201.

Under the control of the control unit 81, the optical system control unit 84 stops driving of the individual-view imaging unit 511 corresponding to the individual-view image not selected by the display view selection unit 201. As a result, only the individual-view imaging unit 511 that generates the individual-view image selected by the display view selection unit 201 is driven, and only the individual-view image selected by the display view selection unit 201 is generated. That is, the display image generation unit 55 is supplied with the individual-view image selected by the display view selection unit 201.

The clipping processing unit 204 extracts the individual-view clipping region from the supplied individual-view image (individual-view image selected by display view selection unit 201), generates an individual-view clipped image, supplies the generated image to the display unit 61, and causes the display unit 61 to display the image.

<Flow of through-the-lens image display processing>

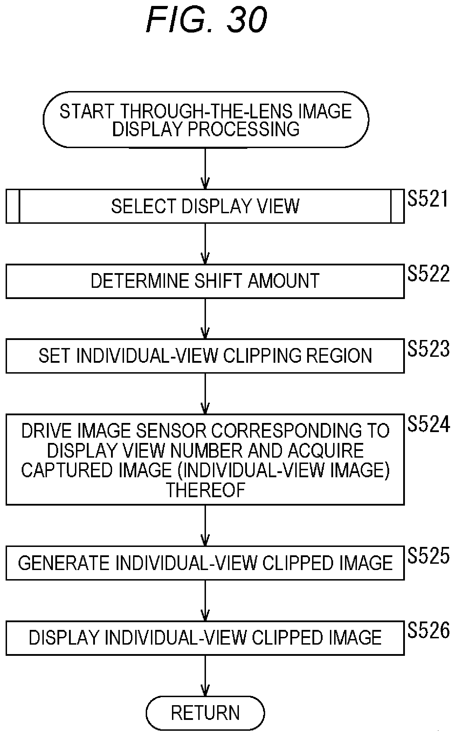

An example of a flow of through-the-lens image display processing in this case will be described with reference to a flowchart of Fig. 30. When the through-the-lens image display processing is started, the processing of steps S521 to S523 is executed similarly to the processing of steps S501 to S503 of Fig. 28.

In step S524, the display view selection unit 201 drives the individual-view imaging unit 511 corresponding to the individual view number (display view number) indicating the individual-view image selected by the display view selection processing in step S501 (Fig. 21). The clipping processing unit 204 acquires the supplied individual-view image selected in the display view selection processing of step S501 (Fig. 21).

The processing of steps S525 and S526 is performed similarly to the processing of steps S505 and S506 of Fig. 28. When the processing of step S526 ends, the processing returns to Fig. 19.

As a result, the display image generation unit 55 can dynamically switch the individual-view image to be used as the display image. As a result, the display unit 61 can perform display similar to the case of the camera 10. Accordingly, the user can more easily grasp parallax among a plurality of images viewed from different individual-view optical systems by confirming the display image.

<4. Appendix>

<Computer>

The above-described series of processing may be performed by hardware or software. In a case where the series of processing is performed by software, a program that is included in the software is installed on a computer. Here, the computer includes a computer incorporated in dedicated hardware, a general-purpose personal computer, for example, that can execute various functions by installing various programs, and the like.

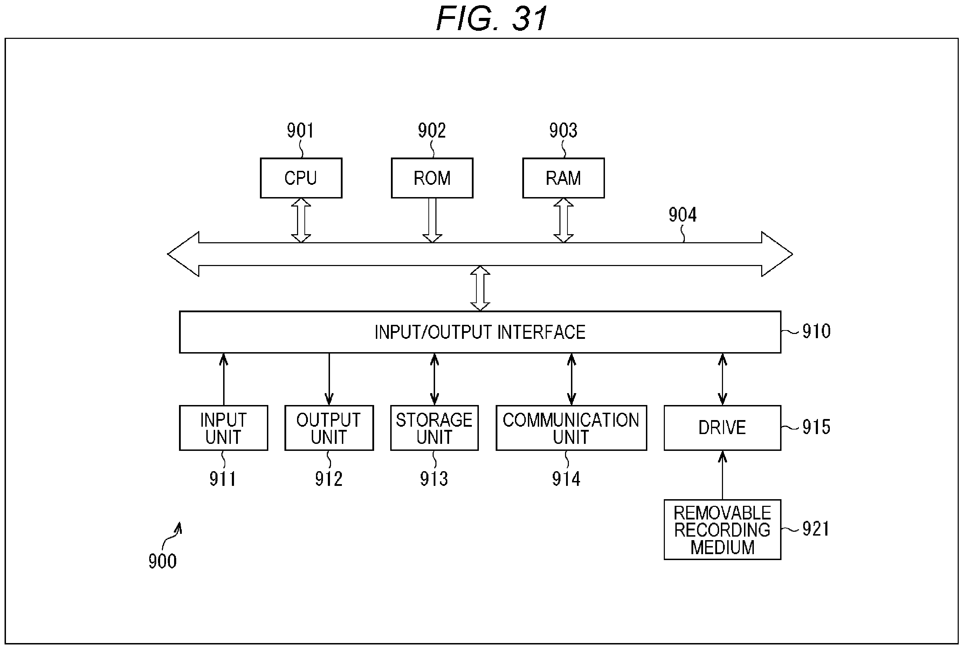

Fig. 31 is a block diagram illustrating a configuration example of hardware of a computer that executes the above-described series of processing by a program.

In a computer 900 illustrated in Fig. 31, a central processing unit (CPU) 901, a read only memory (ROM) 902, and a random access memory (RAM) 903 are mutually connected by a bus 904.

An input/output interface 910 is also connected to the bus 904. An input unit 911, an output unit 912, a storage unit 913, a communication unit 914, and a drive 915 are connected to the input/output interface 910.

The input unit 911 includes, for example, a keyboard, a mouse, a microphone, a touch panel, an input terminal, and the like. The output unit 912 includes, for example, a display, a speaker, an output terminal, and the like. The storage unit 913 includes, for example, a hard disk, a RAM disk, a nonvolatile memory, and the like. The communication unit 914 includes, for example, a network interface and the like. The drive 915 drives a removable medium 921 such as a magnetic disk, an optical disk, a magneto-optical disk, or a semiconductor memory.

In the computer configured as described above, for example, the CPU 901 loads a program stored in the storage unit 913 to the RAM 903 through the input/output interface 910 and the bus 904, and executes the above-described series of processing. The RAM 903 also appropriately stores data and the like necessary for the CPU 901 to execute various processing.

The program executed by the computer can be provided by being recorded on the removable medium 921 such as a package medium. In that case, the program can be installed in the storage unit 913 through the input/output interface 910 by attaching the removable medium 921 to the drive 915.

Additionally, the program can be provided through a wired or wireless transmission medium such as a local area network, the Internet, or digital satellite broadcasting. In that case, the program can be received by the communication unit 914 and installed in the storage unit 913.

In addition, the program can be installed in advance in the ROM 902 or the storage unit 913.

<Application of present technology>

The present technology can be applied to an arbitrary configuration. For example, the present technology can be implemented as a partial configuration of an apparatus, such as a processor as a system large scale integration (LSI) or the like, a module using a plurality of processors or the like, a unit using a plurality of modules or the like, or a set in which other functions are further added to a unit.

Additionally, for example, the present technology can also be applied to a network system including a plurality of devices. For example, the present technology may be implemented as cloud computing shared and processed in cooperation by a plurality of devices through a network. For example, the present technology may be implemented in a cloud service that provides a service to an arbitrary terminal such as a computer, a portable information processing terminal, or an Internet of things (IoT) device.

Note that in the present specification, a system means a collection of a plurality of components (devices, modules (parts), and the like), and it does not matter whether or not all the components are in the same casing. Accordingly, a plurality of devices housed in separate casings and connected through a network, and one device housing a plurality of modules in one casing are both systems.

<Field and usage to which present technology is applicable>

A system, a device, a processing unit, and the like to which the present technology is applied can be used in arbitrary fields such as traffic, medical care, crime prevention, agriculture, livestock industry, mining, beauty, factory, home appliance, weather, and natural monitoring. Additionally, the usage thereof is also arbitrary.

[Other]

Embodiments of the present technology are not limited to the above-described embodiments, and various modifications can be made without departing from the scope of the present technology.

For example, a configuration described as one device (or processing unit) may be divided and formed as a plurality of devices (or processing units). Conversely, configurations described above as a plurality of devices (or processing units) may be collectively formed as one device (or processing unit). Additionally, a configuration other than the above-described configuration may be added to the configuration of each device (or each processing unit). Moreover, as long as the configuration and operation of the entire system are substantially the same, a part of the configuration of a certain device (or processing unit) may be included in the configuration of another device (or another processing unit).

Additionally, for example, the above-described program can be executed in an arbitrary device. In that case, it is sufficient that the device has a necessary function (functional block or the like) and can obtain necessary information.

Additionally, for example, each step of one flowchart may be executed by one device, or may be shared and executed by a plurality of devices. Moreover, in a case where a plurality of types of processing is included in one step, the plurality of types of processing may be executed by one device, or may be shared and executed by a plurality of devices. In other words, a plurality of types of processing included in one step can also be executed as processing of a plurality of steps. Conversely, processing described as a plurality of steps can be collectively executed as one step.

Additionally, for example, in the program executed by the computer, processing of steps describing the program may be executed in time series in the order described in the present specification, or may be executed in parallel or individually at a necessary timing such as when a call is made. That is, as long as there is no contradiction, the processing of each step may be executed in an order different from the above-described order. Moreover, the processing of steps describing this program may be executed in parallel with processing of another program, or may be executed in combination with processing of another program.

Additionally, for example, a plurality of technologies related to the present technology can each be implemented independently as a single body as long as there is no contradiction. It goes without saying that a plurality of arbitrary present technologies can be implemented in combination. For example, some or all of the present technology described in any of the embodiments can be implemented in combination with some or all of the present technology described in another embodiment. Additionally, some or all of the arbitrary present technology described above can be implemented in combination with another technology not described above.

Note that the present technology can also be configured in the following manner.

(1) An imaging device including
a display control unit that causes a display unit to display any one of a plurality of images viewed from a plurality of individual-view optical systems having optical paths independent from one another while selectively and dynamically switching among the images.
(2) The imaging device according to (1), in which
the display control unit selects and displays some or all of the plurality of images one by one in a predetermined order.
(3) The imaging device according to (2), in which
the display control unit selects and displays some or all of the plurality of images one by one in a certain order, so that a scanning trajectory is line-symmetric in a relative positional relationship among viewpoints of the plurality of images.
(4) The imaging device according to (2) or (3), in which
the display control unit selects and displays some or all of the plurality of images one by one in a certain order, so that a scanning trajectory is rotationally symmetric in a relative positional relationship among viewpoints of the plurality of images.
(5) The imaging device according to any one of (2) to (4), in which
the display control unit selects a plurality of images in which parallax between the images is larger than parallax between other images among the plurality of images, and selects and displays the plurality of selected images one by one.
(6) The imaging device according to any one of (2) to (5), in which
the display control unit selects and displays some or all of the images positioned in an outer peripheral part in a relative positional relationship among viewpoints of the plurality of images one by one in the predetermined order.
(7) The imaging device according to any one of (1) to (6) further including

a selection order designation unit that designates a selection order of the images, in which
the display control unit selects and displays some or all of the plurality of images one by one in a selection order designated by the selection order designation unit.

(8) The imaging device according to any one of (1) to (7), in which
the display control unit switches the image to be selected every predetermined cycle.
(9) The imaging device according to (8), in which
the cycle is a single frame or a plurality of frames.
(10) The imaging device according to (8) or (9) further including

a cycle designation unit that designates the cycle, in which
the display control unit switches the image to be selected every cycle designated by the cycle designation unit.

(11) The imaging device according to any one of (1) to (10) further including
a clipping unit that clips the image from an individual-view image viewed from the same individual-view optical system as the image selected by the display control unit.
(12) The imaging device according to (11) further including

a region setting unit that sets a region to be clipped from the individual-view image, in which
the clipping unit clips, as the image, the region set by the region setting unit in the individual-view image.

(13) The imaging device according to (12) further including

a shift amount control unit that controls a shift amount of a position of the region, in which
the region setting unit sets the region using the shift amount controlled by the shift amount control unit.

(14) The imaging device according to any one of (1) to (13) further including

an imaging unit in which optical axes of the plurality of individual-view optical systems correspond to different positions, in which
the display control unit selects and displays any one of the plurality of images viewed from the plurality of individual-view optical systems included in an image generated by the imaging unit, so as to dynamically switch the image to be displayed.

(15) The imaging device according to (14), in which
the display control unit selects and displays any one of the plurality of images in each frame of an acquired image generated by the imaging unit.
(16) The imaging device according to (14) or (15), in which
the display control unit selects some or all of the plurality of images included in a captured image generated by the imaging unit one by one, and displays the selected images in a dynamically switching manner.
(17) The imaging device according to any one of (1) to (16) further including

a plurality of imaging units corresponding to optical axes of the plurality of individual-view optical systems, in which
the display control unit selects and displays any one of the plurality of images viewed from the plurality of individual-view optical systems generated by the plurality of imaging units so as to dynamically switch the image to be displayed.

(18) The imaging device according to (17), in which
the display control unit drives only the individual-view optical system corresponding to a selected image among the plurality of individual-view optical systems.
(19) An information processing method including
causing a display unit to display any one of a plurality of images viewed from a plurality of individual-view optical systems having optical paths independent from one another while selectively and dynamically switching among the images.
(20) A program for causing a computer to function as
a display control unit that causes a display unit to display any one of a plurality of images viewed from a plurality of individual-view optical systems having optical paths independent from one another while selectively and dynamically switching among the images.

REFERENCE SIGNS LIST

| | |
|---|---|
| 10 | Camera |
| 30 | Multi-view optical system |
| 31 | Individual-view optical system |
| 33 | Display panel unit |
| 34 | Viewfinder unit |

| 35 | Dial |
|---|---|
| 36 | Button |
| 51 | Image sensor |
| 52 | RAW signal processing unit |
| 53 | Region extraction unit |
| 54 | Camera signal processing unit |
| 55 | Display image generation unit |
| 56 | Region identification unit |
| 57 | Image reconstruction processing unit |
| 60 | Bus |
| 61 | Display unit |
| 62 | Storage unit |
| 63 | Storage medium |
| 64 | Communication unit |
| 65 | Filing unit |
| 70 | Association unit |
| 81 | Control unit |
| 82 | Storage unit |
| 83 | Storage medium |
| 84 | Optical system control unit |
| 141 and 142 | Subject |
| 151 | Individual-view clipped image |
| 201 | Display view selection unit |
| 202 | Shift amount determination unit |
| 203 | Individual-view clipping region setting unit |
| 204 | Clipping processing unit |
| 301 | Camera system |
| 310 | Camera body |
| 320 | Multi-view interchangeable lens |
| 341 | Communication unit |
| 351 | Communication unit |
| 352 | Storage unit |
| 353 | Storage medium |
| 500 | Camera |
| 521 | Image selection unit |

**Claims**

1. An imaging device comprising
   a display control unit that causes a display unit to display any one of a plurality of images viewed from a plurality of individual-view optical systems having optical paths independent from one another while selectively and dynamically switching among the images.

2. The imaging device according to claim 1, wherein
   the display control unit selects and displays some or all of the plurality of images one by one in a predetermined order.

3. The imaging device according to claim 2, wherein
   the display control unit selects and displays some or all of the plurality of images one by one in a certain order, so that a scanning trajectory is line-symmetric in a relative positional relationship among viewpoints of the plurality of images.

4. The imaging device according to claim 2, wherein
   the display control unit selects and displays some or all of the plurality of images one by one in a certain order, so that a scanning trajectory is rotationally symmetric in a relative positional relationship among viewpoints of the plurality of images.

5. The imaging device according to claim 2, wherein

the display control unit selects a plurality of images in which parallax between the images is larger than parallax between other images among the plurality of images, and selects and displays the plurality of selected images one by one.

6. The imaging device according to claim 2, wherein
   the display control unit selects and displays some or all of the images positioned in an outer peripheral part in a relative positional relationship among viewpoints of the plurality of images one by one in the predetermined order.

7. The imaging device according to claim 1 further comprising

   a selection order designation unit that designates a selection order of the images, wherein
   the display control unit selects and displays some or all of the plurality of images one by one in a selection order designated by the selection order designation unit.

8. The imaging device according to claim 1, wherein
   the display control unit switches the image to be selected every predetermined cycle.

9. The imaging device according to claim 8, wherein
   the cycle is a single frame or a plurality of frames.

10. The imaging device according to claim 8 further comprising

    a cycle designation unit that designates the cycle, wherein
    the display control unit switches the image to be selected every cycle designated by the cycle designation unit.

11. The imaging device according to claim 1 further comprising
    a clipping unit that clips the image from an individual-view image viewed from the same individual-view optical system as the image selected by the display control unit.

12. The imaging device according to claim 11 further comprising

    a region setting unit that sets a region to be clipped from the individual-view image, wherein
    the clipping unit clips, as the image, the region set by the region setting unit in the individual-view image.

13. The imaging device according to claim 12 further comprising

    a shift amount control unit that controls a shift amount of a position of the region, wherein
    the region setting unit sets the region using the shift amount controlled by the shift amount control unit.

14. The imaging device according to claim 1 further comprising

    an imaging unit in which optical axes of the plurality of individual-view optical systems correspond to different positions, wherein
    the display control unit selects and displays any one of the plurality of images viewed from the plurality of individual-view optical systems included in an image generated by the imaging unit, so as to dynamically switch the image to be displayed.

15. The imaging device according to claim 14, wherein
    the display control unit selects and displays any one of the plurality of images in each frame of an acquired image generated by the imaging unit.

16. The imaging device according to claim 14, wherein
    the display control unit selects some or all of the plurality of images included in a captured image generated by the imaging unit one by one, and displays the selected images in a dynamically switching manner.

17. The imaging device according to claim 1 further comprising

    a plurality of imaging units corresponding to optical axes of the plurality of individual-view optical systems, wherein

the display control unit selects and displays any one of the plurality of images viewed from the plurality of individual-view optical systems generated by the plurality of imaging units so as to dynamically switch the image to be displayed.

18. The imaging device according to claim 17, wherein
the display control unit drives only the individual-view optical system corresponding to a selected image among the plurality of individual-view optical systems.

19. An information processing method comprising
causing a display unit to display any one of a plurality of images viewed from a plurality of individual-view optical systems having optical paths independent from one another while selectively and dynamically switching among the images.

20. A program for causing a computer to function as
a display control unit that causes a display unit to display any one of a plurality of images viewed from a plurality of individual-view optical systems having optical paths independent from one another while selectively and dynamically switching among the images.

FIG. 1

## FIG. 2

EP 4 068 756 A1

*FIG. 3*

EP 4 068 756 A1

## FIG. 4

EP 4 068 756 A1

FIG. 5

EP 4 068 756 A1

FIG. 6

EP 4 068 756 A1

## FIG. 7

FIG. 8

EP 4 068 756 A1

## FIG. 9

# FIG. 10

DISPLAY SEQUENCE NUMBER   0        1        2        3        4

INDIVIDUAL VIEW NUMBER   1        2        3        4        5

$151_0$     $151_3$     $151_2$     $151_1$     $151_4$

EP 4 068 756 A1

FIG. 11

EP 4 068 756 A1

FIG. 12

## FIG. 13

EP 4 068 756 A1

FIG. 14

# FIG. 15

DISPLAY SEQUENCE NUMBER    0       1       2       3

INDIVIDUAL VIEW NUMBER    2       3       4       5

$151_3$      $151_2$      $151_1$      $151_4$

EP 4 068 756 A1

# FIG. 16

EP 4 068 756 A1

# FIG. 17

DISPLAY SEQUENCE NUMBER   0      1      2      3      4      5

INDIVIDUAL VIEW NUMBER   1      2      3      1      5      4

$151_0$      $151_3$      $151_2$      $151_0$      $151_4$      $151_1$

EP 4 068 756 A1

FIG. 18

ENTIRE IMAGE (YC)

204
CLIPPING PROCESSING UNIT

INDIVIDUAL-VIEW CLIPPED IMAGE

SHIFT AMOUNT CONTROL INFORMATION

202
SHIFT AMOUNT DETERMINATION UNIT

VIEWPOINT-RELATED INFORMATION

201
DISPLAY VIEW SELECTION UNIT

INDIVIDUAL VIEW NUMBER

INDIVIDUAL LENS NUMBER

SHIFT AMOUNT

INDIVIDUAL-VIEW CLIPPING REGION SETTING UNIT

CLIPPING COORDINATES

203

55

EP 4 068 756 A1

58

# FIG. 19

START IMAGING PROCESSING

SET VIEWPOINT-RELATED INFORMATION — S101

SET SHIFT AMOUNT CONTROL INFORMATION — S102

DISPLAY THROUGH-THE-LENS IMAGE — S103

PREPARE FOR IMAGING? — S104 / NO

YES

PERFORM IMAGING PREPARATION PROCESSING — S105

PERFORM IMAGING? — S106 / NO

YES

IMAGE SUBJECT AND GENERATE ENTIRE IMAGE, VIEWPOINT IMAGE, OR COMPOSITE IMAGE — S107

OUTPUT ENTIRE IMAGE, VIEWPOINT IMAGE, OR COMPOSITE IMAGE — S108

NO — END? — S109

YES

END

# FIG. 20

```
        ┌─────────────────────────────────┐
        │  START THROUGH-THE-LENS IMAGE   │
        │       DISPLAY PROCESSING        │
        └─────────────────────────────────┘
                        │
                        ▼
        ┌─────────────────────────────────┐  S121
        ││      SELECT DISPLAY VIEW      ││
        └─────────────────────────────────┘
                        │
                        ▼
        ┌─────────────────────────────────┐  S122
        │      DETERMINE SHIFT AMOUNT     │
        └─────────────────────────────────┘
                        │
                        ▼
        ┌─────────────────────────────────┐  S123
        │  SET INDIVIDUAL-VIEW CLIPPING REGION │
        └─────────────────────────────────┘
                        │
                        ▼
        ┌─────────────────────────────────┐  S124
        │       ACQUIRE ENTIRE IMAGE      │
        └─────────────────────────────────┘
                        │
                        ▼
        ┌─────────────────────────────────┐  S125
        │ GENERATE INDIVIDUAL-VIEW CLIPPED IMAGE │
        └─────────────────────────────────┘
                        │
                        ▼
        ┌─────────────────────────────────┐  S126
        │ DISPLAY INDIVIDUAL-VIEW CLIPPED IMAGE │
        └─────────────────────────────────┘
                        │
                        ▼
                   ┌──────────┐
                   │  RETURN  │
                   └──────────┘
```

# FIG. 21

```
          ┌──────────────────────────┐
          │    START DISPLAY VIEW     │
          │   SELECTION PROCESSING    │
          └──────────────────────────┘
                       │
                       ▼
              NUMBER OF DISPLAYED FRAMES HAS      S141
              REACHED VIEW SWITCHING CYCLE?              NO
                       │                                  │
                      YES                                 │
                       │                                  │
                       ▼  S142                            ▼  S146
          ┌──────────────────────────┐    ┌──────────────────────────┐
          │ SET NUMBER OF DISPLAYED   │    │    INCREMENT NUMBER OF    │
          │        FRAMES TO 1        │    │     DISPLAYED FRAMES      │
          └──────────────────────────┘    └──────────────────────────┘
                       │                                  │
                       ▼  S143                            ▼  S147
          ┌──────────────────────────┐    ┌──────────────────────────┐
          │ UPDATE DISPLAY SEQUENCE   │    │ SET PREVIOUS DISPLAY VIEW │
          │         NUMBER            │    │ NUMBER AS CURRENT DISPLAY │
          └──────────────────────────┘    │        VIEW NUMBER        │
                       │                   └──────────────────────────┘
                       ▼  S144                            │
          ┌──────────────────────────┐                   │
          │ ACQUIRE INDIVIDUAL VIEW   │                   │
          │ NUMBER CORRESPONDING TO   │                   │
          │ UPDATED DISPLAY SEQUENCE  │                   │
          │   NUMBER FROM TABLE       │                   │
          └──────────────────────────┘                   │
                       │                                  │
                       ▼  S145                            │
          ┌──────────────────────────┐                   │
          │  SET ACQUIRED INDIVIDUAL  │                   │
          │ VIEW NUMBER AS DISPLAY    │                   │
          │       VIEW NUMBER         │                   │
          └──────────────────────────┘                   │
                       │                                  │
                       ◄──────────────────────────────────
                       │
                       ▼
                 ┌──────────────┐
                 │    RETURN     │
                 └──────────────┘
```

FIG. 22

## FIG. 23

EP 4 068 756 A1

FIG. 24

EP 4 068 756 A1

# FIG. 25

EP 4 068 756 A1

# FIG. 26

EP 4 068 756 A1

# FIG. 27

EP 4 068 756 A1

# FIG. 28

START THROUGH-THE-LENS IMAGE
DISPLAY PROCESSING

SELECT DISPLAY VIEW — S501

DETERMINE SHIFT AMOUNT — S502

SET INDIVIDUAL-VIEW CLIPPING REGION — S503

SELECT INDIVIDUAL-VIEW IMAGE
CORRESPONDING TO DISPLAY VIEW NUMBER — S504

GENERATE INDIVIDUAL-VIEW CLIPPED IMAGE — S505

DISPLAY INDIVIDUAL-VIEW CLIPPED IMAGE — S506

RETURN

FIG. 29

EP 4 068 756 A1

# *FIG. 30*

```
START THROUGH-THE-LENS IMAGE
DISPLAY PROCESSING
```

SELECT DISPLAY VIEW — S521

DETERMINE SHIFT AMOUNT — S522

SET INDIVIDUAL-VIEW CLIPPING REGION — S523

DRIVE IMAGE SENSOR CORRESPONDING TO DISPLAY VIEW NUMBER AND ACQUIRE CAPTURED IMAGE (INDIVIDUAL-VIEW IMAGE) THEREOF — S524

GENERATE INDIVIDUAL-VIEW CLIPPED IMAGE — S525

DISPLAY INDIVIDUAL-VIEW CLIPPED IMAGE — S526

RETURN

# FIG. 31

CPU 901
ROM 902
RAM 903
904
INPUT/OUTPUT INTERFACE ~910
INPUT UNIT 911
OUTPUT UNIT 912
STORAGE UNIT 913
COMMUNICATION UNIT 914
DRIVE ~915
REMOVABLE RECORDING MEDIUM ~921
900

EP 4 068 756 A1

## INTERNATIONAL SEARCH REPORT

| International application No. |
| --- |
| PCT/JP2020/045370 |

### A. CLASSIFICATION OF SUBJECT MATTER

H04N 5/232(2006.01)i; G03B 15/00(2021.01)i; G03B 17/18(2021.01)i; G03B 19/07(2021.01)i; H04N 5/225(2006.01)i
FI:     H04N5/232 930; G03B19/07; G03B15/00 H; H04N5/225 400; H04N5/232 290; G03B17/18 Z; H04N5/225 800

According to International Patent Classification (IPC) or to both national classification and IPC

### B. FIELDS SEARCHED

Minimum documentation searched (classification system followed by classification symbols)
H04N5/232; C03B15/00; C03B17/18; C03B19/07; H04N5/225

| Documentation searched other than minimum documentation to the extent that such documents are included in the fields searched | |
| --- | --- |
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | US 2010/0007714 A1 (SAMSUNG ELECTRONICS CO., LTD.) 14 January 2010 (2010-01-14) paragraphs [0050]– [0053], [0082], fig. 1-3 | 1-6, 17, 19, 20 |
| Y | | 8-10 |
| Y | JP 2010-177921 A (FUJIFILM CORPORATION) 12 August 2010 (2010-08-12) paragraphs [0046]-[0048], [0077], fig. 1 | 1-4, 8, 9, 14-17, 19, 20 |
| Y | JP 2006-119843 A (OLYMPUS CORP.) 11 May 2006 (2006-05-11) paragraphs [0018]-[0020], fig. 2(1), 2(2) | 1-4, 8, 9, 14-17, 19, 20 |
| Y | JP 4-345378 A (KONICA CORP.) 01 December 1992 (1992-12-01) paragraphs [0015], [0016], [0026], fig. 2, 3 | 1, 7, 11-13, 17-20 |
| Y | WO 2009/150895 A1 (NIKON CORP.) 17 December 2009 (2009-12-17) paragraphs [0022]-[0029], fig. 3, 4, 8 | 1, 7, 11-13, 17-20 |

☒ Further documents are listed in the continuation of Box C.   ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08 February 2021 (08.02.2021) | 22 February 2021 (22.02.2021) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2020/045370 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2007-49484 A (FUJIFILM HOLDINGS CORPORATION) 22 February 2007 (2007-02-22) paragraphs [0027]-[0029] | 8-10 |
| Y | JP 2015-181214 A (CANON INC.) 15 October 2015 (2015-10-15) paragraphs [0044]-[0052], fig. 1, 5-7 | 14-16 |

Form PCT/ISA/210 (continuation of second sheet) (January 2015)

**INTERNATIONAL SEARCH REPORT**

Information on patent family members

International application No.

PCT/JP2020/045370

| Patent Documents referred in the Report | Publication Date | Patent Family | Publication Date |
|---|---|---|---|
| US 2010/0007714 A1 | 14 Jan. 2010 | KR 10-2010-0006867 A | |
| JP 2010-177921 A | 12 Aug. 2010 | (Family: none) | |
| JP 2006-119843 A | 11 May 2006 | (Family: none) | |
| JP 4-345378 A | 01 Dec. 1992 | (Family: none) | |
| WO 2009/150895 A1 | 17 Dec. 2009 | (Family: none) | |
| JP 2007-49484 A | 22 Feb. 2007 | (Family: none) | |
| JP 2015-181214 A | 15 Oct. 2015 | US 2015/0256745 A1 paragraphs [0061]-[0069], fig. 1, 5-7 | |

Form PCT/ISA/210 (patent family annex) (January 2015)

**EP 4 068 756 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019065260 A